# EUROPEAN PATENT APPLICATION

(11) **EP 4 529 067 A1**
(43) Date of publication of application: **26.03.2025**
(21) Application number: 23818988.0
(22) Date of filing: 30.05.2023
(51) Int. Cl.: H04L 5/00

(54) **UWB-BASED PPDU TRANSMISSION METHOD AND RELATED APPARATUS**

(30) Priority: 10.06.2022 CN 202210654362
(71) Applicant: Huawei Technologies Co., Ltd., Shenzhen, Guangdong 518129 (CN)
(72) Inventor: QIAN, Bin, Shenzhen, Guangdong 518129 (CN); ZHOU, Zhengchun, Chengdu, Sichuan 611756 (CN); LIU, Chenchen, Shenzhen, Guangdong 518129 (CN); YANG, Yang, Chengdu, Sichuan 611756 (CN); YANG, Xun, Shenzhen, Guangdong 518129 (CN); TANG, Xiaohu, Chengdu, Sichuan 611756 (CN)
(74) Representative: Epping - Hermann - Fischer
(86) International application number: PCT/CN2023/097258
(87) International publication number: WO 2023/236823

(57) **Abstract**

This application relates to a UWB-based PPDU transmission method and a related apparatus. The method includes: Two communication parties exchange a PPDU. The PPDU includes a preamble sequence. The preamble sequence is obtained by inserting one or more 0s into a sequence in a sequence set. At least some sequences in the sequence set have a zero cross-correlation zone. According to embodiments of this application, anti-interference performance of a UWB system can be improved. This application is applied to a UWB-based wireless personal area network system, a sensing system, or the like, and includes 802.15 series protocols, such as an 802.15.4a protocol, an 802.15.4z protocol, or an 802.15.4ab protocol. This application may also support wireless local area network systems of 802.11 series protocols, such as a next-generation Wi-Fi protocol of 802.11ax, for example, 802.11be, that is, Wi-Fi 7 or EHT, or the next generation of 802.11be, that is, Wi-Fi 8.

## Description

This application claims priority to Chinese Patent Application No. 202210654362.7, filed with the China National Intellectual Property Administration on June 10, 2022 and entitled "UWB-BASED PPDU TRANSMISSION METHOD AND RELATED APPARATUS", which is incorporated herein by reference in its entirety.

### TECHNICAL FIELD

This application relates to the field of communication technologies, and in particular, to an ultra-wideband (ultra-wideband, UWB)-based physical layer protocol data unit (physical layer protocol data unit, PPDU) transmission method and a related apparatus.

### BACKGROUND

As ultra-wideband (ultra-wideband, UWB) enters the civil field, ultra-wideband (UWB) wireless communication has become one of physical layer technologies for short-range and high-speed wireless networks. The ultra-wideband (UWB) technology is a wireless carrier communication technology that transmit data, for example, by using nanosecond-level non-sinusoidal narrow impulses, and therefore, occupies a wide spectrum range. Due to a narrow pulse and low radiation spectral density, UWB has advantages such as a strong multipath resolution capability, low power consumption, and high confidentiality, and is mainly applied to sensing and ranging scenarios. The institute of Electrical and Electronics Engineers (institute of electrical and electronics engineers, IEEE) has incorporated the UWB technology into its IEEE 802 wireless standards, and has released the UWB-based high-speed wireless personal area network (wireless personal area network, WPAN) standard IEEE 802.15.4a and an evolved version IEEE 802.15.4z. The next-generation UWB wireless personal area network (WPAN) standard 802.15.4ab is under discussion. A physical layer protocol data unit (physical layer protocol data unit, PPDU) defined in 802.15.4a and 802.15.4z includes a synchronization (synchronization, SYNC) field. The SYNC field includes a plurality of repeated symbols, which are generated by using preamble sequences. For a specific generation manner, refer to an existing standard. Details are not described herein. A preamble sequence in 802.15.4a and 802.15.4z is a ternary sequence (also referred to as an Ipatov sequence) including three types of elements {-1, 0, 1}, with a length of 31, 91, or 127. For specific content of preamble sequences with different lengths, refer to the 802.15.4a and 802.15.4z standards. Details are not described herein.

Currently, a preamble sequence that is defined in 802.15.4a and 802.15.4z and that is used in a UWB system has poor anti-interference performance.

### SUMMARY

Embodiments of this application provide a UWB-based PPDU transmission method and a related apparatus, to improve anti-interference performance of a UWB system.

The following describes this application from different aspects. It should be understood that, for the following implementations and beneficial effect of different aspects, refer to each other.

According to a first aspect, this application provides a UWB-based PPDU transmission method. The method includes: A communication apparatus generates and sends a PPDU, where the PPDU includes a preamble sequence, and the preamble sequence is generated based on a sequence in a sequence set. The sequence set includes at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0. In other words, at least some sequences in the sequence set have a zero cross-correlation zone. It can be understood that for a specific meaning of the zero cross-correlation zone, refer to descriptions in the following embodiments. Details are not described herein.

The communication apparatus in this application determines a sequence from the sequence set, and then generates the preamble sequence based on the sequence. Because at least some sequences in the sequence set have a zero cross-correlation zone, interference caused by cross-correlation side lobes is small for communication apparatuses that select two sequences having a zero cross-correlation zone. This improves an anti-interference capability of a UWB system.

According to a second aspect, this application provides a UWB-based PPDU transmission method. The method includes: A communication apparatus receives a PPDU and processes the PPDU, where the PPDU includes a preamble sequence, and the preamble sequence is generated based on a sequence set. The sequence set includes at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0. In other words, at least some sequences in the sequence set have a zero cross-correlation zone. It can be understood that for a specific meaning of the zero cross-correlation zone, refer to descriptions in the following embodiments. Details are not described herein.

In a possible implementation of any one of the foregoing aspects, the preamble sequence is a target sequence in the sequence set, or the preamble sequence is obtained by inserting one or more 0s into a target sequence in the sequence set. The target sequence may be determined by a transmit end and a receive end through negotiation, or may be configured by a coordinator (coordinator). For a manner of determining the target sequence, refer to specific descriptions in the following embodiments. Details are not described herein.

Optionally, the preamble sequence is represented as [a1, 0ᵤ₁, a₂, 0ᵤ₂, ..., a_{P}, 0_{uP}, b₁, 0ᵥ₁, b₂, 0ᵥ₂, ..., b_{Q}, 0_{vQ}]; or the preamble sequence is obtained by repeating a sequence of [a₁, 0ᵤ₁, a₂, 0ᵤ₂, ..., a_{P}, 0_{uP}, b₁, 0ᵥ₁, b₂, 0ᵥ₂, ..., b_{Q}, 0_{vQ}] one or more times, where
a₁, a₂, ..., and a_{P} represent P-part elements obtained by splitting a first part of the target sequence, and b₁, b₂, ..., and b_{Q} represent Q-part elements obtained by splitting a second part of the target sequence. In other words, the target sequence is split into P and Q parts. It can be understood that a manner of splitting the sequence is not limited in this embodiment of this application. The sequence may be evenly split into a plurality of parts, or may be unevenly split, or may be split in another manner. This is not limited in this embodiment of this application. 0ᵤ₁, 0ᵤ₂, ..., and 0_{uP} respectively represent (u1)^{th}, (u2)^{th}, ..., and (uP)^{th} consecutive 0s, 0ᵥ₁, 0ᵥ₂, ..., and 0_{vP} respectively represent (v1)^{th} (v2)^{th}, ..., and (vQ)^{th} consecutive 0s, u1, u2, ..., and uP and v1, v2, ..., and vQ are all integers greater than or equal to 0.

It can be understood that u1, u2, ..., and uP and v1, v2, ..., and vQ may be described as gaps (gaps), and respectively indicate quantities of consecutive 0s inserted at different positions in the target sequence. These gaps (u1, u2, ..., and uP and v1, v2, ..., and vQ) and positions of these gaps in the target sequence may be determined by the transmit end and the receive end through negotiation. The preamble sequence is obtained by inserting one or more 0s into different positions in a sequence in the sequence set, and gaps and positions of the gaps in the sequence determined for different communication apparatuses may be different. Therefore, preamble sequences and lengths of the preamble sequences of the different communication apparatuses may be different. In this case, after performing cross-correlation, the receive end may reduce an amplitude of a cross-correlation side lobe through an averaging operation, thereby improving an anti-interference capability of a UWB system.

With reference to the first aspect, in a possible implementation, the gaps (u1, u2, ..., and uP and v1, v2, ..., and vQ) and the positions of these gaps in the target sequence may alternatively be configured by the coordinator. Before the communication apparatus generates the PPDU, the method further includes: The communication apparatus receives configuration information, where the configuration information includes a device address of the communication apparatus, the configuration information further includes sequence configuration information, and the sequence configuration information includes one or more of the following: a sequence index corresponding to the communication apparatus, a plurality of gaps corresponding to the communication apparatus, or positions of the plurality of gaps in a target sequence. A gap corresponding to the communication apparatus indicates a quantity of consecutive 0s inserted at a position in the target sequence, the target sequence belongs to the sequence set, and a sequence index of the target sequence is the same as the sequence index corresponding to the communication apparatus.

In this application, the coordinator performs unified scheduling through configuration, to facilitate unified management by the coordinator, so that the coordinator can allocate different sequence indexes, different gaps, or positions of different gaps in a sequence to devices that may have interference from each other. This further improves the anti-interference capability of the UWB system.

In a possible implementation of any one of the foregoing aspects, any sequence in the sequence set has a zero autocorrelation zone, and at least some sequences (for example, the first sequence and the second sequence) in the sequence set have a zero cross-correlation zone. Therefore, at least some sequences in the sequence set have a zero correlation zone. It can be understood that for a specific meaning of the zero autocorrelation zone, refer to descriptions in the following embodiments. Details are not described herein.

Because each sequence in the sequence set has a zero autocorrelation zone, generation of the preamble sequence based on the sequence in the sequence set can effectively ensure an autocorrelation property of the preamble sequence, so that the UWB system has relatively good synchronization performance.

In a possible implementation of any one of the foregoing aspects, any sequence in the sequence set includes a first part and a second part, a sum of an amplitude of an autocorrelation side lobe of the first part and an amplitude of an autocorrelation side lobe of the second part is 0, and neither an amplitude of an autocorrelation main lobe of the first part nor an amplitude of an autocorrelation main lobe of the second part is 0. In other words, any one sequence in the foregoing sequence set may be a Golay complementary pair, and the Golay complementary pair has a zero autocorrelation zone.

It can be understood that the first sequence may be a Golay complementary pair, the second sequence may also be a Golay complementary pair, the result of the cross-correlation between the first part of the first sequence and the first part of the second sequence is A, the result of the cross-correlation between the second part of the first sequence and the second part of the second sequence is B, and the sum of A and B is 0. Therefore, the first sequence and the second sequence may be Golay mates (Golay Mate). For example, there is at least one Golay mate (Golay Mate) in the sequence set, and two Golay complementary pairs in the Golay mate have a zero cross-correlation zone.

It can be understood that an autocorrelation of a sequence refers to a correlation between the sequence and itself in different time delays. A cross-correlation between sequences refers to a correlation between a sequence and another sequence in different time delays. The main lobe may be understood as a peak value in an autocorrelation function or a cross-correlation function, and an amplitude other than the main lobe may be referred to as a side lobe or a side-lobe. For example, the main lobe may correspond to the amplitude peak of the autocorrelation function or the cross-correlation function.

Optionally, the sequence set includes K sequences, both a length of the first sequence and a length of the second sequence are N, and a length of a zero correlation zone of the first sequence and the second sequence is Z, where K, N, and Z meet the following condition: $K = \frac{1}{2} \left⌊\frac{N}{Z}\right⌋ ,$ where $\left⌊\frac{N}{Z}\right⌋$
indicates rounding down $\frac{N}{Z}$ to the nearest integer.

It can be understood that the length Z of the zero correlation zone of the first sequence and the second sequence is a minimum value of a zero autocorrelation length of the first sequence, a zero autocorrelation length of the second sequence, and a length of the zero cross-correlation zone of the first sequence and the second sequence.

According to a third aspect, an embodiment of this application provides a communication apparatus. The communication apparatus is configured to perform the method according to any one of the first aspect or the possible implementations of the first aspect. The communication apparatus includes units configured to perform the method in any one of the first aspect or the possible implementations of the first aspect.

According to a fourth aspect, an embodiment of this application provides a communication apparatus. The communication apparatus is configured to perform the method according to any one of the second aspect or the possible implementations of the second aspect. The communication apparatus includes units configured to perform the method in any one of the second aspect or the possible implementations of the second aspect.

In the third aspect or the fourth aspect, the communication apparatus may include a transceiver unit and a processing unit. For specific descriptions of the transceiver unit and the processing unit, refer to the apparatus embodiments provided below. For beneficial effects of the third aspect and the fourth aspect, refer to the related descriptions of the first aspect and the second aspect. Details are not described herein again.

According to a fifth aspect, this application provides an information exchange method. The method includes: A communication apparatus generates configuration information, and sends the configuration information in a broadcast manner. The configuration information includes device addresses of one or more devices, the configuration information further includes sequence configuration information, and the sequence configuration information includes one or more of the following: a sequence index corresponding to each device, a plurality of gaps corresponding to each device, or positions of the plurality of gaps in a sequence. A gap indicates a quantity of consecutive 0s inserted at a position in a sequence, and the sequence belongs to a sequence set. A sequence index identifies a sequence in the sequence set, and devices that are in the one or more devices and that are configured to complete different services correspond to different sequence indexes. The sequence set includes at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0. In other words, at least some sequences in the sequence set have a zero cross-correlation zone. It can be understood that for a specific meaning of the zero cross-correlation zone, refer to descriptions in the following embodiments. Details are not described herein.

It can be understood that the communication apparatus may be a coordinator (coordinator) in a UWB system.

The coordinator (coordinator) in this application configures different sequence indexes for the devices configured to complete different services, where the sequence indexes identify sequences in the sequence set. At least some sequences in the sequence set have a zero cross-correlation zone. In this way, interference caused by cross-correlation side lobes between at least some communication apparatuses is relatively small, thereby improving an anti-interference capability of the UWB system.

According to a sixth aspect, this application provides an information exchange method. The method includes: A communication apparatus receives configuration information. The configuration information includes device addresses of one or more devices, the configuration information further includes sequence configuration information, and the sequence configuration information includes one or more of the following: a sequence index corresponding to each device, a plurality of gaps corresponding to each device, or positions of the plurality of gaps in a sequence. The communication apparatus determines, based on the configuration information, one or more of a sequence index corresponding to the communication apparatus, a plurality of gaps corresponding to the communication apparatus, and positions of the plurality of gaps in a sequence. A gap indicates a quantity of consecutive 0s inserted at a position in a sequence, and the sequence belongs to a sequence set. A sequence index identifies a sequence in the sequence set, and devices that are in the one or more devices and that are configured to complete different services correspond to different sequence indexes. The sequence set includes at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0. In other words, at least some sequences in the sequence set have a zero cross-correlation zone. It can be understood that for a specific meaning of the zero cross-correlation zone, refer to descriptions in the following embodiments. Details are not described herein.

It can be understood that the communication apparatus may be any communication apparatus other than a coordinator (coordinator) in a UWB system.

With reference to the sixth aspect, in a possible implementation, after the communication apparatus determines, based on the configuration information, one or more of the sequence index corresponding to the communication apparatus and the plurality of gaps corresponding to the communication apparatus, the method further includes: The communication apparatus sends a PPDU, where the PPDU includes a preamble sequence, and the preamble sequence is generated based on the sequence index corresponding to the communication apparatus, the plurality of gaps corresponding to the communication apparatus, and the positions of the plurality of gaps in the sequence.

Optionally, any sequence in the sequence set includes a first part and a second part, and a sequence identified by the sequence index corresponding to the communication apparatus is a target sequence.

The preamble sequence is:
[a₁, 0ᵤ₁, a₂, 0ᵤ₂, ..., a_{P}, 0_{uP}, b₁, 0ᵥ₁, b₂, 0ᵥ₂, ..., b_{Q}, 0_{vQ}]; or the preamble sequence is obtained by repeating a sequence of [a₁, 0ᵤ₁, a₂, 0ᵤ₂, ..., a_{P}, 0_{uP}, b₁, 0ᵥ₁, b₂, 0ᵥ₂, ..., b_{Q}, 0_{vQ}] one or more times, where
a₁, a₂, ..., and a_{P} represent P-part elements obtained by splitting a first part of the target sequence, and b₁, b₂, ..., and b_{Q} represent Q-part elements obtained by splitting a second part of the target sequence. It can be understood that a manner of splitting the sequence is not limited in this embodiment of this application. The sequence may be evenly split into a plurality of parts, or may be unevenly split, or may be split in another manner. This is not limited in this embodiment of this application. 0ᵤ₁, 0ᵤ₂, ..., and 0_{uP} respectively represent (u1)^{th}, (u2)^{th}, ..., and (uP)^{th} consecutive 0s, 0ᵥ₁, 0ᵥ₂, ..., and 0_{vP} respectively represent (v1)^{th} (v2)^{th}, ..., and (vQ)^{th} consecutive 0s, u1, u2, ..., and uP and v1, v2, ..., and vQ are all integers greater than or equal to 0.

The preamble sequence is obtained by inserting one or more 0s into different positions in a sequence in the sequence set, and gaps and positions of the gaps in the sequence allocated by the coordinator for different communication apparatuses may be different. Therefore, preamble sequences and lengths of the preamble sequences of the different communication apparatuses may be different. In this case, after performing cross-correlation, a receive end may reduce an amplitude of a cross-correlation side lobe through an averaging operation, thereby improving an anti-interference capability of a UWB system.

With reference to the fifth aspect or the sixth aspect, in a possible implementation, devices that are in the one or more devices and that are configured to jointly complete a service correspond to a same sequence index.

The coordinator in this application allocates the same sequence index to the devices configured to jointly complete a service, so that implementation complexity is reduced. For example, in a one-to-many ranging process, an initiator (initiator) receives ranging signals from a plurality of responders (responder), and only needs to perform a correlation operation by using a same sequence and the received ranging signals. This reduces implementation complexity.

With reference to the fifth aspect or the sixth aspect, in a possible implementation, any sequence in the sequence set has a zero autocorrelation zone, and at least some sequences (for example, the first sequence and the second sequence) in the sequence set have a zero cross-correlation zone. Therefore, at least some sequences in the sequence set have a zero correlation zone. It can be understood that for a specific meaning of the zero autocorrelation zone, refer to descriptions in the following embodiments. Details are not described herein.

Because each sequence in the sequence set has a zero autocorrelation zone, generation of the preamble sequence based on the sequence in the sequence set can effectively ensure an autocorrelation property of the preamble sequence, so that the UWB system has relatively good synchronization performance.

With reference to the fifth aspect or the sixth aspect, in a possible implementation, any sequence in the sequence set includes a first part and a second part, a sum of an amplitude of an autocorrelation side lobe of the first part and an amplitude of an autocorrelation side lobe of the second part is 0, and neither an amplitude of an autocorrelation main lobe of the first part nor an amplitude of an autocorrelation main lobe of the second part is 0. In other words, any one sequence in the foregoing sequence set may be a Golay complementary pair, and the Golay complementary pair has a zero autocorrelation zone.

It can be understood that the first sequence may be a Golay complementary pair, the second sequence may also be a Golay complementary pair, the result of the cross-correlation between the first part of the first sequence and the first part of the second sequence is A, the result of the cross-correlation between the second part of the first sequence and the second part of the second sequence is B, and the sum of A and B is 0. Therefore, the first sequence and the second sequence may be Golay mates (Golay Mate). For example, there is at least one Golay mate (Golay Mate) in the sequence set, and two Golay complementary pairs in the Golay mate have a zero cross-correlation zone.

It can be understood that an autocorrelation of a sequence refers to a correlation between the sequence and itself in different time delays. A cross-correlation between sequences refers to a correlation between a sequence and another sequence in different time delays. The main lobe may be understood as a peak value in an autocorrelation function or a cross-correlation function, and an amplitude other than the main lobe may be referred to as a side lobe or a side-lobe. For example, the main lobe may correspond to the amplitude peak of the autocorrelation function or the cross-correlation function.

Optionally, the sequence set includes K sequences, both a length of the first sequence and a length of the second sequence are N, and a length of a zero correlation zone of the first sequence and the second sequence is Z, where K, N, and Z meet the following condition: $K = \frac{1}{2} \left⌊\frac{N}{Z}\right⌋ ,$ where $\left⌊\frac{N}{Z}\right⌋$
indicates rounding down $\frac{N}{Z}$ to the nearest integer.

It can be understood that the length Z of the zero correlation zone of the first sequence and the second sequence is a minimum value of a zero autocorrelation length of the first sequence, a zero autocorrelation length of the second sequence, and a length of the zero cross-correlation zone of the first sequence and the second sequence.

According to a seventh aspect, an embodiment of this application provides a communication apparatus. The communication apparatus is configured to perform the method in any one of the fifth aspect or the possible implementations of the fifth aspect. The communication apparatus includes units configured to perform the method in any one of the fifth aspect or the possible implementations of the fifth aspect.

According to an eighth aspect, an embodiment of this application provides a communication apparatus. The communication apparatus is configured to perform the method in any one of the sixth aspect or the possible implementations of the sixth aspect. The communication apparatus includes units configured to perform the method in any one of the sixth aspect or the possible implementations of the sixth aspect.

In the seventh aspect or the eighth aspect, the communication apparatus may include a transceiver unit and a processing unit. For specific descriptions of the transceiver unit and the processing unit, refer to the apparatus embodiments provided below. For beneficial effects of the seventh aspect and the eighth aspect, refer to the related descriptions of the fifth aspect and the sixth aspect. Details are not described herein again.

According to a ninth aspect, this application provides a UWB-based PPDU transmission method. The method includes: A communication apparatus generates a PPDU, where the PPDU includes a preamble sequence, the preamble sequence is a sequence in a sequence set, and the sequence set meets a welch bound. The preamble sequence may be a sequence in the sequence set, or the preamble sequence is obtained by repeating a sequence in the sequence set one or more times. Optionally, that the sequence set meets the welch bound may be understood as that periodic tolerance (periodic tolerance) of the sequence set has a lower bound (that is, a minimum value). For a specific meaning, refer to descriptions in the following embodiments. Details are not described herein.

Because there is a relatively small cross-correlation side lobe between sequences in the sequence set meeting the welch bound, an anti-interference capability of a UWB system can be improved. In addition, because the sequence in the sequence set meeting the welch bound also has a relatively small autocorrelation side lobe, an autocorrelation property of the preamble sequence can be effectively ensured, so that the UWB system has relatively good synchronization performance. According to a tenth aspect, this application provides a UWB-based PPDU transmission method. The method includes: A communication apparatus receives a PPDU and processes the PPDU, where the PPDU includes a preamble sequence, the preamble sequence is a sequence in a sequence set, and the sequence set meets a welch bound. The preamble sequence may be a sequence in the sequence set, or the preamble sequence is obtained by repeating a sequence in the sequence set one or more times.

According to an eleventh aspect, an embodiment of this application provides a communication apparatus. The communication apparatus is configured to perform the method in any one of the ninth aspect or the possible implementations of the ninth aspect. The communication apparatus includes units configured to perform the method in any one of the ninth aspect or the possible implementations of the ninth aspect.

According to a twelfth aspect, an embodiment of this application provides a communication apparatus. The communication apparatus is configured to perform the method in any one of the tenth aspect or the possible implementations of the tenth aspect. The communication apparatus includes units configured to perform the method in any one of the tenth aspect or the possible implementations of the tenth aspect.

In the eleventh aspect or the twelfth aspect, the communication apparatus may include a transceiver unit and a processing unit. For specific descriptions of the transceiver unit and the processing unit, refer to the apparatus embodiments provided below. For beneficial effects of the eleventh aspect and the twelfth aspect, refer to the related descriptions of the ninth aspect and the tenth aspect. Details are not described herein again.

According to a thirteenth aspect, this application provides an information exchange method. The method includes: A communication apparatus generates configuration information, and sends the configuration information in a broadcast manner. The configuration information includes device addresses of one or more devices, the configuration information further includes sequence configuration information, the sequence configuration information includes a sequence index corresponding to each device, the sequence index identifies a sequence in a sequence set, the sequence set meets a welch bound, and devices that are in the one or more devices and that are configured to complete different services correspond to different sequence indexes. The sequence configuration information is used to determine a preamble sequence. For example, the preamble sequence may be a sequence identified by a sequence index or a sequence obtained by repeating, one or more times, a sequence identified by a sequence index.

Optionally, that the sequence set meets the welch bound may be understood as that periodic tolerance (periodic tolerance) of the sequence set has a lower bound (that is, a minimum value). For a specific meaning, refer to descriptions in the following embodiments. Details are not described herein.

It can be understood that the communication apparatus may be a coordinator (coordinator) in a UWB system.

A coordinator (coordinator) in this application configures different sequence indexes for the devices configured to complete different services. The sequence indexes identify sequences in the sequence set, and the sequence set meets the welch bound. **In** other words, the sequences in the sequence set have relatively small autocorrelation side lobes and a relatively small cross-correlation side lobe. This effectively ensures an autocorrelation property of the preamble sequence, enables the UWB system to have relatively good synchronization performance, and further improves an anti-interference capability of the UWB system.

According to a fourteenth aspect, this application provides an information exchange method. The method includes: A communication apparatus receives configuration information. The configuration information includes device addresses of one or more devices, the configuration information further includes sequence configuration information, the sequence configuration information includes a sequence index corresponding to each device, the sequence index identifies a sequence in a sequence set, the sequence set meets a welch bound, and devices that are in the one or more devices and that are configured to complete different services correspond to different sequence indexes. The communication apparatus determines, based on the configuration information, a sequence index corresponding to the communication apparatus. The sequence configuration information is used to determine a preamble sequence. For example, the preamble sequence may be a sequence identified by a sequence index or a sequence obtained by repeating, one or more times, a sequence identified by a sequence index.

It can be understood that the communication apparatus may be any communication apparatus other than a coordinator (coordinator) in a UWB system.

With reference to the thirteenth aspect or the fourteenth aspect, in a possible implementation, devices that are in the one or more devices and that are configured to jointly complete a service correspond to a same sequence index.

According to a fifteenth aspect, an embodiment of this application provides a communication apparatus. The communication apparatus is configured to perform the method according to any one of the thirteenth aspect or the possible implementations of the thirteenth aspect. The communication apparatus includes units configured to perform the method in any one of the thirteenth aspect or the possible implementations of the thirteenth aspect.

According to a sixteenth aspect, an embodiment of this application provides a communication apparatus. The communication apparatus is configured to perform the method according to any one of the fourteenth aspect or the possible implementations of the fourteenth aspect. The communication apparatus includes units configured to perform the method in any one of the fourteenth aspect or the possible implementations of the fourteenth aspect.

In the fifteenth aspect or the sixteenth aspect, the communication apparatus may include a transceiver unit and a processing unit. For specific descriptions of the transceiver unit and the processing unit, refer to the apparatus embodiments provided below. For beneficial effects of the fifteenth aspect and the sixteenth aspect, refer to the related descriptions of the thirteenth aspect and the fourteenth aspect. Details are not described herein again.

According to a seventeenth aspect, this application provides a communication apparatus. The communication apparatus includes a processor, configured to perform the method according to any one of the first aspect, the ninth aspect, or the possible implementations of the first aspect or the ninth aspect. Alternatively, the processor is configured to execute a program stored in a memory. When the program is executed, the method according to any one of the first aspect, the ninth aspect, or the possible implementations of the first aspect or the ninth aspect is performed.

With reference to the seventeenth aspect, in a possible implementation, the memory is located outside the communication apparatus.

With reference to the seventeenth aspect, in a possible implementation, the memory is located in the communication apparatus.

In this application, the processor and the memory may alternatively be integrated into one device. In other words, the processor and the memory may alternatively be integrated together.

With reference to the seventeenth aspect, in a possible implementation, the communication apparatus further includes a transceiver. The transceiver is configured to receive a PPDU or send a PPDU.

According to an eighteenth aspect, this application provides a communication apparatus. The communication apparatus includes a processor, configured to perform the method according to any one of the second aspect, the tenth aspect, or the possible implementations of the second aspect or the tenth aspect. Alternatively, the processor is configured to execute a program stored in a memory. When the program is executed, the method according to any one of the second aspect, the tenth aspect, or the possible implementations of the second aspect or the tenth aspect is performed.

With reference to the eighteenth aspect, in a possible implementation, the memory is located outside the communication apparatus.

With reference to the eighteenth aspect, in a possible implementation, the memory is located in the communication apparatus.

In this application, the processor and the memory may alternatively be integrated into one device. In other words, the processor and the memory may alternatively be integrated together.

With reference to the eighteenth aspect, in a possible implementation, the communication apparatus further includes a transceiver. The transceiver is configured to receive a PPDU or send a PPDU.

According to a nineteenth aspect, this application provides a communication apparatus. The communication apparatus includes a processor, configured to perform the method according to any one of the fifth aspect, the thirteenth aspect, or the possible implementations of the fifth aspect or the thirteenth aspect. Alternatively, the processor is configured to execute a program stored in a memory. When the program is executed, the method according to any one of the fifth aspect, the thirteenth aspect, or the possible implementations of the fifth aspect or the thirteenth aspect is performed.

With reference to the nineteenth aspect, in a possible implementation, the memory is located outside the communication apparatus.

With reference to the nineteenth aspect, in a possible implementation, the memory is located in the communication apparatus.

In this application, the processor and the memory may alternatively be integrated into one device. In other words, the processor and the memory may alternatively be integrated together.

With reference to the nineteenth aspect, in a possible implementation, the communication apparatus further includes a transceiver. The transceiver is configured to receive information or send information.

According to a twentieth aspect, this application provides a communication apparatus. The communication apparatus includes a processor, configured to perform the method according to any one of the sixth aspect, the fourteenth aspect, or the possible implementations of the sixth aspect or the fourteenth aspect. Alternatively, the processor is configured to execute a program stored in a memory. When the program is executed, the method according to any one of the sixth aspect, the fourteenth aspect, or the possible implementations of the sixth aspect or the fourteenth aspect is performed.

With reference to the twentieth aspect, in a possible implementation, the memory is located outside the communication apparatus.

With reference to the twentieth aspect, in a possible implementation, the memory is located in the communication apparatus.

In this application, the processor and the memory may alternatively be integrated into one device. In other words, the processor and the memory may alternatively be integrated together.

With reference to the twentieth aspect, in a possible implementation, the communication apparatus further includes a transceiver. The transceiver is configured to receive information or send a PPDU. According to a twenty-first aspect, this application provides a communication apparatus. The communication apparatus includes a logic circuit and an interface, and the logic circuit is coupled to the interface.

In a design, the logic circuit is configured to generate a PPDU, where the PPDU includes a preamble sequence, the preamble sequence is generated based on a sequence set, and at least some sequences in the sequence set have a zero correlation zone; and the interface is configured to output the PPDU.

In another design, the logic circuit is configured to generate a PPDU, where the PPDU includes a preamble sequence, the preamble sequence is a sequence in a sequence set, and the sequence set meets a welch bound; and the interface is configured to output the PPDU.

According to a twenty-second aspect, this application provides a communication apparatus. The communication apparatus includes a logic circuit and an interface, and the logic circuit is coupled to the interface.

In a design, the interface is configured to input a PPDU, where the PPDU includes a preamble sequence, the preamble sequence is generated based on a sequence set, and at least some sequences in the sequence set have a zero correlation zone; and the logic circuit is configured to process the PPDU.

In another design, the interface is configured to input a PPDU, where the PPDU includes a preamble sequence, the preamble sequence is a sequence in a sequence set, and the sequence set meets a welch bound; and the logic circuit is configured to process the PPDU.

According to a twenty-third aspect, this application provides a communication apparatus. The communication apparatus includes a logic circuit and an interface, and the logic circuit is coupled to the interface.

In a design, the logic circuit is configured to generate configuration information. The configuration information includes device addresses of one or more devices, the configuration information further includes sequence configuration information, and the sequence configuration information includes one or more of the following: a sequence index corresponding to each device, a plurality of gaps corresponding to each device, or positions of the plurality of gaps in a sequence. A gap indicates a quantity of consecutive 0s inserted at a position in a sequence, the sequence belongs to a sequence set, a sequence index identifies a sequence in the sequence set, at least some sequences in the sequence set have a zero correlation zone, and devices that are in the one or more devices and that are configured to complete different services correspond to different sequence indexes. The interface is configured to output the configuration information.

In another design, the logic circuit is configured to generate configuration information. The configuration information includes device addresses of one or more devices, the configuration information further includes sequence configuration information, the sequence configuration information includes a sequence index corresponding to each device, the sequence index identifies a sequence in a sequence set, the sequence set meets a welch bound, and devices that are in the one or more devices and that are configured to complete different services correspond to different sequence indexes. The interface is configured to output the configuration information. According to a twenty-fourth aspect, this application provides a communication apparatus. The communication apparatus includes a logic circuit and an interface, and the logic circuit is coupled to the interface.

In a design, the interface is configured to input configuration information. The configuration information includes device addresses of one or more devices, the configuration information further includes sequence configuration information, and the sequence configuration information includes one or more of the following: a sequence index corresponding to each device, a plurality of gaps corresponding to each device, or positions of the plurality of gaps in a sequence. A gap indicates a quantity of consecutive 0s inserted at a position in a sequence, the sequence belongs to a sequence set, a sequence index identifies a sequence in the sequence set, at least some sequences in the sequence set have a zero correlation zone, and devices that are in the one or more devices and that are configured to complete different services correspond to different sequence indexes. The logic circuit is configured to determine, based on the configuration information, one or more of a sequence index corresponding to the communication apparatus, a plurality of gaps corresponding to the communication apparatus, and positions of the plurality of gaps in a sequence. In another design, the interface is configured to input configuration information. The configuration information includes device addresses of one or more devices, the configuration information further includes sequence configuration information, the sequence configuration information includes a sequence index corresponding to each device, the sequence index identifies a sequence in a sequence set, the sequence set meets a welch bound, and devices that are in the one or more devices and that are configured to complete different services correspond to different sequence indexes. The logic circuit is configured to determine, based on the configuration information, a sequence index corresponding to the communication apparatus.

According to a twenty-fifth aspect, an embodiment of this application provides a computer-readable storage medium. The computer-readable storage medium is configured to store a computer program. When the computer program is run on a computer, the method according to any one of the first aspect, the ninth aspect, or the possible implementations of the first aspect or the ninth aspect is performed.

According to a twenty-sixth aspect, an embodiment of this application provides a computer-readable storage medium. The computer-readable storage medium is configured to store a computer program. When the computer program is run on a computer, the method according to any one of the second aspect, the tenth aspect, or the possible implementations of the second aspect or the tenth aspect is performed.

According to a twenty-seventh aspect, an embodiment of this application provides a computer-readable storage medium. The computer-readable storage medium is configured to store a computer program. When the computer program is run on a computer, the method according to any one of the fifth aspect, the thirteenth aspect, or the possible implementations of the fifth aspect or the thirteenth aspect is performed.

According to a twenty-eighth aspect, an embodiment of this application provides a computer-readable storage medium. The computer-readable storage medium is configured to store a computer program. When the computer program is run on a computer, the method according to any one of the sixth aspect, the fourteenth aspect, or the possible implementations of the sixth aspect or the fourteenth aspect is performed.

According to a twenty-ninth aspect, an embodiment of this application provides a computer program product. The computer program product includes a computer program or computer code. When the computer program product runs on a computer, the method according to any one of the first aspect, the ninth aspect, or the possible implementations of the first aspect or the ninth aspect is performed.

According to a thirtieth aspect, an embodiment of this application provides a computer program product. The computer program product includes a computer program or computer code. When the computer program product runs on a computer, the method according to any one of the second aspect, the tenth aspect, or the possible implementations of the second aspect or the tenth aspect is performed.

According to a thirty-first aspect, an embodiment of this application provides a computer program product. The computer program product includes a computer program or computer code. When the computer program product runs on a computer, the method according to any one of the fifth aspect, the thirteenth aspect, or the possible implementations of the fifth aspect or the thirteenth aspect is performed.

According to a thirty-second aspect, an embodiment of this application provides a computer program product. The computer program product includes a computer program or computer code. When the computer program product runs on a computer, the method according to any one of the sixth aspect, the fourteenth aspect, or the possible implementations of the sixth aspect or the fourteenth aspect is performed.

According to a thirty-third aspect, an embodiment of this application provides a computer program. When the computer program is run on a computer, the method according to any one of the first aspect, the ninth aspect, or the possible implementations of the first aspect or the ninth aspect is performed.

According to a thirty-fourth aspect, an embodiment of this application provides a computer program. When the computer program is run on a computer, the method according to any one of the second aspect, the tenth aspect, or the possible implementations of the second aspect or the tenth aspect is performed.

According to a thirty-fifth aspect, an embodiment of this application provides a computer program. When the computer program is run on a computer, the method according to any one of the fifth aspect, the thirteenth aspect, or the possible implementations of the fifth aspect or the thirteenth aspect is performed.

According to a thirty-sixth aspect, an embodiment of this application provides a computer program. When the computer program is run on a computer, the method according to any one of the sixth aspect, the fourteenth aspect, or the possible implementations of the sixth aspect or the fourteenth aspect is performed.

According to a thirty-seventh aspect, an embodiment of this application provides a wireless communication system. The wireless communication system includes: a communication apparatus configured to perform the method according to any one of the first aspect, the ninth aspect, or the possible implementations of the first aspect or the ninth aspect, and a communication apparatus configured to perform the method according to any one of the second aspect, the tenth aspect, or the possible implementations of the second aspect or the tenth aspect.

According to a thirty-eighth aspect, an embodiment of this application provides a wireless communication system. The wireless communication system includes: a communication apparatus configured to perform the method according to any one of the fifth aspect, the thirteenth aspect, or the possible implementations of the fifth aspect or the thirteenth aspect, and a communication apparatus configured to perform the method according to any one of the sixth aspect, the fourteenth aspect, or the possible implementations of the sixth aspect or the fourteenth aspect.

For technical effects achieved in the foregoing aspects, refer to each other or refer to beneficial effects of the following method embodiments. Details are not described herein again.

### BRIEF DESCRIPTION OF DRAWINGS

To describe technical solutions of embodiments of this application more clearly, the following briefly describes accompanying drawings for describing embodiments.
FIG. 1 is a diagram of a structure of a wireless communication system according to an embodiment of this application;
FIG. 2 is a diagram of another structure of a wireless communication system according to an embodiment of this application;
FIG. 3 is a diagram of a frame structure of a PPDU according to an embodiment of this application;
FIG. 4 is a diagram of a structure of a symbol included in a SYNC field according to an embodiment of this application;
FIG. 5 is a diagram of a simulation result of an autocorrelation of an Ipatov sequence according to an embodiment of this application;
FIG. 6 is a diagram of a simulation result of a cross-correlation between two different Ipatov sequences according to an embodiment of this application;
FIG. 7 is a diagram of fragment transmission of a UWB signal according to an embodiment of this application;
FIG. 8 is a schematic flowchart of a UWB-based PPDU transmission method according to an embodiment of this application;
FIG. 9 is a diagram of a zero cross-correlation zone according to an embodiment of this application;
FIG. 10a is a diagram of a simulation result of an autocorrelation of a Golay complementary pair with a length of 64 according to an embodiment of this application;
FIG. 10b is a diagram of a simulation result of a cross-correlation of Golay mates with a length of 64 according to an embodiment of this application;
FIG. 11 is a diagram of a preamble sequence according to an embodiment of this application;
FIG. 12a is another diagram of preamble sequences according to an embodiment of this application;
FIG. 12b is still another diagram of preamble sequences according to an embodiment of this application;
FIG. 13a is a diagram of a simulation result of autocorrelations of and a cross-correlation between two preamble sequences with a length of 128 according to an embodiment of this application;
FIG. 13b is a diagram of a simulation result of a cross-correlation between two preamble sequences of different lengths according to an embodiment of this application;
FIG. 14 is a schematic flowchart of an information exchange method according to an embodiment of this application;
FIG. 15 is another schematic flowchart of a UWB-based PPDU transmission method according to an embodiment of this application;
FIG. 16 is a diagram of a simulation result of autocorrelations of and a cross-correlation between two sequences with a length of 63 according to an embodiment of this application;
FIG. 17 is another schematic flowchart of an information exchange method according to an embodiment of this application;
FIG. 18 is yet another diagram of preamble sequences according to an embodiment of this application;
FIG. 19 is a diagram of a structure of a communication apparatus according to an embodiment of this application;
FIG. 20 is a diagram of a structure of a communication apparatus 1000 according to an embodiment of this application; and
FIG. 21 is a diagram of another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In this application, terms "first", "second", and the like are intended to distinguish between different objects but do not indicate a particular order of the objects. In addition, terms "include", "have", or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

In descriptions of this application, "at least one (item) "means one or more, "a plurality of" means two or more, and "at least two (items)" means two, three, or more. In addition, the term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between associated objects. "At least one of the following items (pieces)" or a similar expression thereof means any combination of these items. For example, at least one (piece) of a, b, or c may represent: a, b, c, a and b, a and c, b and c, or a, b, and c.

In this application, the term "example", "for example", or the like is used to represent giving an example, an illustration, or a description. Any embodiment or design scheme described with "example", "in an example", or "for example" in this application should not be explained as being more preferred or having more advantages than another embodiment or design scheme. Exactly, use of the term "example", "in an example", "for example", or the like is intended to present a related concept in a specific manner.

In this application, an element represented in a singular form is intended to represent "one or more", but does not represent "one and only one", unless otherwise specified.

It should be understood that, in embodiments of this application, determining B based on A does not mean that B is determined only based on A, and B may alternatively be determined based on A and/or other information.

The technical solutions provided in this application are applicable to a UWB-based wireless personal area network (wireless personal area network, WPAN). For example, a method provided in this application is applicable to institute of Electrical and Electronics Engineers (institute of electrical and electronics engineers, IEEE) 802.15 series protocols, such as the 802.15.4a protocol, the 802.15.4z protocol, the 802.15.4ab protocol, or a future-generation UWB WPAN standard. Examples are not enumerated herein. The method provided in this application is further applied to various communication systems, for example, an internet of things (internet of things, IoT) system, vehicle-to-everything (vehicle to X, V2X), a narrowband internet of things (narrowband internet of things, NB-IoT) system, and is applied to a device used in vehicle-to-everything, an internet of things node, a sensor, or the like in the internet of things (IoT, internet of things), a smart camera, a smart remote control, and a smart water or electricity meter in smart home, a sensor in smart city, and the like. The method provided in this application may be further applicable to an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a long term evolution (long term evolution, LTE) system, a 5th-generation (5th-generation, 5G) communication system, a 6th-generation (6th-generation, 6G) communication system, or the like. UWB technology is a new wireless communication technology that transmit data by using nanosecond-level non-sinusoidal narrow impulses. Modulation is performed on impulses with very steep rise and fall time, and therefore, UWB occupies a wide spectrum range, so that a signal has a bandwidth of a gigahertz (GHz) magnitude. A bandwidth used by UWB is generally above 1 GHz. A UWB system does not need to generate a sinusoidal carrier signal and can directly transmit an impulse sequence. Therefore, the UWB system has a wide spectrum and a quite low average power. A UWB wireless communication system has advantages such as a strong multipath resolution capability, low power consumption, and high confidentiality. This facilitates coexistence with another system, and improves spectrum utilization and a system capacity. In addition, in a short-distance communication application, a transmit power of a UWB transmitter may be usually lower than 1 mW (milliwatt). Theoretically, interference generated by a UWB signal is only equivalent to white noise. This facilitates good coexistence between ultra-wideband and existing narrowband communication. Therefore, the UWB system and a narrowband (narrowband, NB) communication system can simultaneously operate without interfering with each other. The method provided in this application may be implemented by a communication apparatus in a wireless communication system. In a communication apparatus, an apparatus or a chip that implements a function of the UWB system may be referred to as a UWB module, and an apparatus or a chip that implements a function of the narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. The communication apparatus in this application includes a UWB module, and optionally, further includes a narrowband communication module.

Although embodiments of this application are mainly described by using the WPAN as an example, for example, a network used in the IEEE 802.15 series standards is used as an example for description. A person skilled in the art easily understands that, various aspects in this application may be extended to another network using various standards or protocols, for example, a wireless local area network (wireless local area network, WLAN), Bluetooth (BLUETOOTH), a high performance radio LAN (high performance radio LAN, HIPERLAN) (a wireless standard similar to the IEEE 802.11 standard, mainly used in Europe), a wide area network (WAN), or another network that is currently known or developed in the future. Therefore, regardless of a used coverage area and wireless access protocol, various aspects provided in this application are applicable to any appropriate wireless network. Optionally, the communication apparatus in embodiments of this application may be a device that supports a plurality of WPAN standards such as 802.15.4a, 802.15.4z, and IEEE 802.15.4ab that is currently under discussion or a later version. The method provided in this application may be implemented by a communication apparatus in the wireless communication system. The communication apparatus may be an apparatus in the UWB system. For example, the communication apparatus may include but is not limited to a communication server, a router, a switch, a bridge, a computer, a mobile phone, and the like that support the UWB technology. For another example, the communication apparatus may include user equipment (user equipment, UE). The user equipment may include various handheld devices, vehicle-mounted devices (for example, a vehicle or a component installed in a vehicle), wearable devices, internet of things (internet of things, IoT) devices, computing devices, or another processing device connected to a wireless modem, or the like that support the UWB technology. Examples are not enumerated one by one herein. For another example, the communication apparatus may include a central control point, for example, a personal area network (personal area network, PAN) or a PAN coordinator. The PAN coordinator or the PAN may be a mobile phone, a vehicle-mounted device, an anchor (Anchor), a tag (tag), a smart home, or the like. For another example, the communication apparatus may include a chip, and the chip may be disposed in a communication server, a router, a switch, a terminal device, or the like. Examples are not enumerated herein. It can be understood that the foregoing descriptions of the communication apparatus are applicable to a first communication apparatus and a second communication apparatus in this application.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that a program that records code for the method provided in embodiments of this application can be run to perform communication according to the method provided in embodiments of this application.

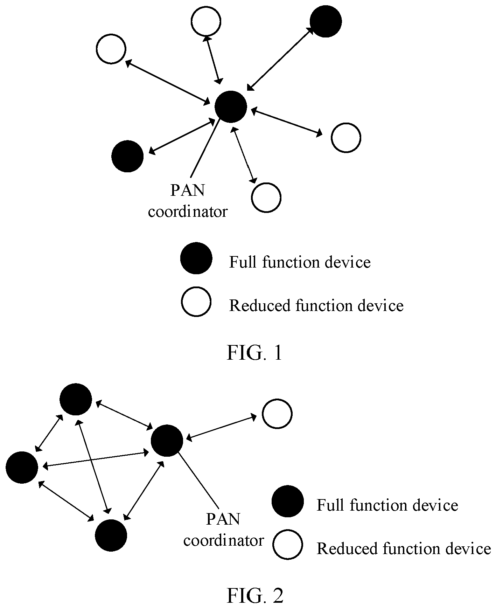

For example, FIG. 1 is a diagram of a structure of a wireless communication system according to an embodiment of this application. As shown in FIG. 1, the wireless communication system is a star topology structure. In this structure, a central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is a point-to-point topology structure. In this structure, a central control node (for example, a PAN coordinator in FIG. 2) may perform data communication with one or more other devices, and other different devices may also perform data communication with each other. In FIG. 1 and FIG. 2, both a full function device (full function device) and a reduced function device (reduced function device) may be understood as communication apparatuses in this application. The full function device is relative to the reduced function device. For example, the reduced function device cannot be a PAN coordinator (coordinator). For another example, compared with the full function device, the reduced function device may not have a coordination capability or have a lower communication rate than the full function device. It can be understood that the PAN coordinator shown in FIG. 2 is merely an example, and other three full function devices shown in FIG. 2 may also be used as PAN coordinators, which are not shown one by one herein. It can be further understood that the full function device and the reduced function device shown in this application are merely examples of the communication apparatus. Any apparatus that can implement the UWB-based PPDU transmission method provided in this application falls within the protection scope of this application.

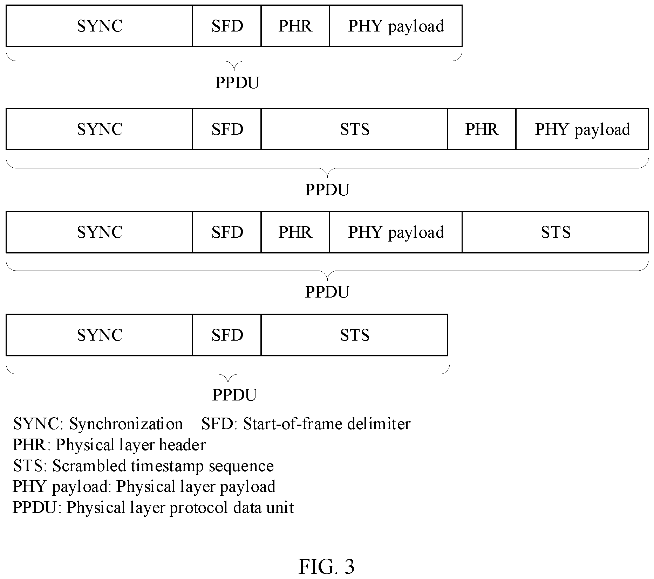

In the IEEE 802.15.4a and IEEE 802.15.4z standards, a PPDU structure of a UWB signal is shown in FIG. 3. FIG. 3 is a diagram of a frame structure of a PPDU according to an embodiment of this application. FIG. 3 shows four PPDU structures. The PPDU includes one or more of the following: a synchronization (synchronization, SYNC) field, a start-of-frame delimiter (start-of-frame delimiter, SFD) field, a physical layer header (physical layer header, PHR), a physical layer payload field (PHY payload field), or a scrambled timestamp sequence (scrambled timestamp sequence, STS). For example, a receive end performs PPDU detection and synchronization based on the synchronization (SYNC) field. The PHR carries some physical-layer indication information, such as modulation and coding information or PPDU length information, to assist the receive end in correctly demodulating data. The physical layer payload field is used to carry data.

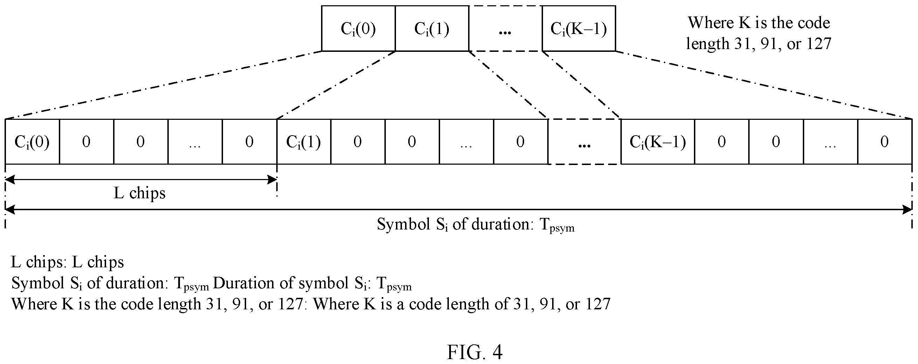

The synchronization (SYNC) field may include a plurality of repeated symbols, and the symbols are generated by using preamble sequences. FIG. 4 is a diagram of a structure of a symbol included in a SYNC field according to an embodiment of this application. As shown in FIG. 4, Cᵢ(0),Cᵢ(1), ...,Cᵢ(K-1) represents a preamble sequence with a length of K. A length of the preamble sequence may be 31, 91, or 127. For example, the preamble sequence may be any ternary sequence (which may also be referred to as an Ipatov sequence) that includes three values: {-1, 0, +1} in the 802.15.4a or 802.15.4z protocols. For example, for specific content of the ternary sequence with a length of 31, 91, or 127, refer to the 802.15.4a and 802.15.4z standards. Details are not described herein.

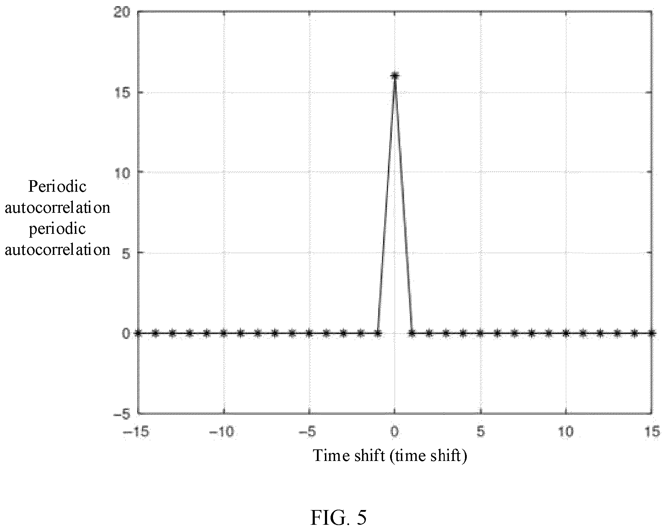

For example, an Ipatov sequence with a length of 31 in the 802.15.4a standard is used as an example. A simulation result of a periodic autocorrelation property of the Ipatov sequence is shown in FIG. 5. FIG. 5 is a diagram of a simulation result of an autocorrelation of an Ipatov sequence according to an embodiment of this application. As shown in FIG. 5, the Ipatov sequence with the length of 31 has a value in vertical coordinate at an origin (that is, a vertical coordinate at the origin is not 0), and has a value of 0 in vertical coordinate for other horizontal coordinates (that is, a vertical coordinate at another non-origin position is 0). In other words, the Ipatov sequence with the length of 31 has an amplitude of 16 of a main lobe in a periodic autocorrelation (which may also be understood as that a peak value of a periodic autocorrelation is 16), and an amplitude of 0 of a side lobe in periodic autocorrelation. It can be understood that, as shown in FIG. 5, a horizontal coordinate represents a time shift (time shift), and a vertical coordinate represents an amplitude of a periodic autocorrelation (periodic autocorrelation). The horizontal coordinate shown in FIG. 5 may also be understood as an element, a bit, or the like. An explanation of the horizontal coordinate in simulation of a periodic autocorrelation function is not limited in this embodiment of this application. Because autocorrelation may be understood as cross-correlation between a signal and the signal itself at different time points, a positive axis value and a negative axis value in the horizontal coordinate may be determined by a length of the Ipatov sequence.

In this application, a sequence in which an amplitude of a main lobe in periodic autocorrelation is not 0 and an amplitude of a side lobe in periodic autocorrelation is 0 is referred to as a perfect sequence (Perfect Sequence).

It can be understood that, a periodic autocorrelation function Rₓ(τ) of a sequence x(n) with a length of N is defined as follows: ${R}_{x} \left(τ\right) = {\sum }_{n = 0}^{N - 1} x \left(n\right) * x \left(\left(n+τ\right)modN\right)$ (n+τ) mod N represents a remainder obtained by dividing (n+τ) by N. Details are not described below.

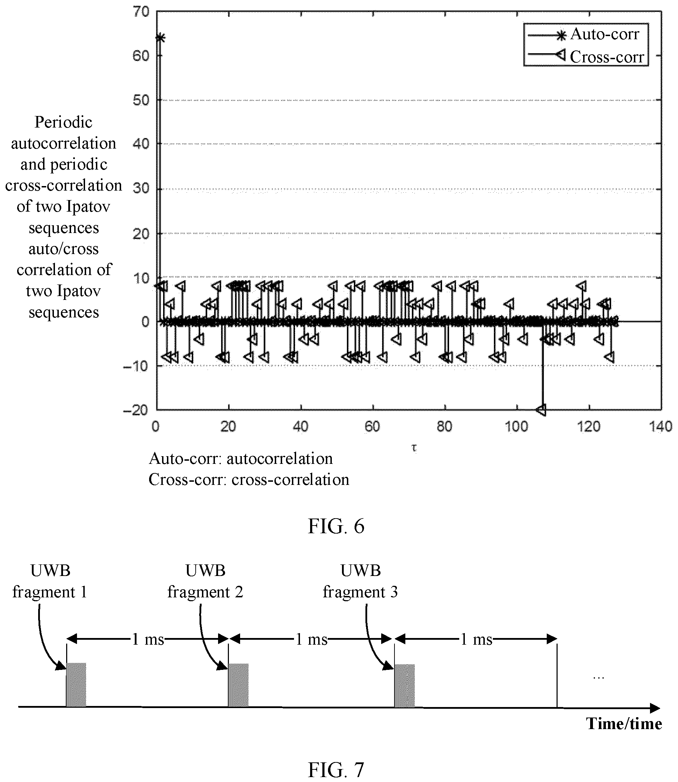

A receive end may utilize an autocorrelation property of a sequence to perform correlation processing, for example, a correlation operation, by using a same sequence and a received UWB signal, and perform an operation such as synchronization by using a correlation processing result. For example, two Ipatov sequences with a length of 127 in the 802.15.4a standard are used as an example. A simulation result of periodic cross-correlation properties of the two Ipatov sequences is shown in FIG. 6. FIG. 6 is a diagram of a simulation result of a cross-correlation between two different Ipatov sequences according to an embodiment of this application. FIG. 6 shows a simulation result of a cross-correlation between code sequences (code sequence) whose code indexes (code index) are 9 and 10 in the 802.15.4z standard. It can be learned from FIG. 6 that, there is no zero correlation zone in periodic cross-correlation of the two different Ipatov sequences with a length of 127. Amplitudes of side lobes of the two different Ipatov sequences are mostly 8 or -8, and an amplitude of a side lobe with a largest absolute value is -20. When an amplitude of a cross-correlation side lobe is large, an error may occur in determining an autocorrelation main lobe of the Ipatov sequence, to be specific, a cross-correlation side lobe is determined as an autocorrelation main lobe of the Ipatov sequence (for example, a position at which an amplitude of a cross-correlation side lobe is -20 in FIG. 6 may be determined as a position of an autocorrelation main lobe of the Ipatov sequence). Consequently, anti-interference performance of the Ipatov sequence is poor. It can be understood that a horizontal coordinate shown in FIG. 6 represents a value of τ in the periodic autocorrelation function Rₓ(τ) and a periodic cross-correlation function R_{x,y}(τ), x and y respectively represent two Ipatov sequences, a vertical coordinate represents an amplitude of periodic autocorrelation and periodic cross-correlation of the two Ipatov sequences (auto/cross correlation of two Ipatov sequences).

It can be understood that, a periodic cross-correlation function R_{x,y}(τ) of sequences x(n) and y(n) with a length of N is defined as follows: ${R}_{x , y} \left(τ\right) = {\sum }_{n = 0}^{N - 1} x \left(n\right) * y \left(\left(n+τ\right)modN\right)$

In conclusion, it can be learned from FIG. 5 and FIG. 6 that, although a preamble sequence defined in 802.15.4a and 802.15.4z has a perfect periodic autocorrelation property, an amplitude of a cross-correlation side lobe between different preamble sequences is relatively large, resulting in poor anti-interference performance of the preamble sequences.

In addition, an ultra-wideband system has a relatively large bandwidth. To reduce interference to another device when the ultra-wideband system operates, the Federal Communication Commission (FCC) imposes strict limitation on power spectral density of a UWB signal. According to the Code of Federal Regulations (CFR Code of Federal Regulations) in the United States, there are the following two regulations:
Regulation 1: An average value of maximum power spectral density (power spectral density, PSD) of a transmitted UWB signal within 1 millisecond cannot be greater than 41.3 dBm per megahertz.
Regulation 2: A maximum power of a transmitted UWB signal in any 50 MHz bandwidth cannot exceed 1 milliwatt.

Although Regulation 1 limits total transmit energy (no more than 37 nJ (nanojoule) in a 500 MHz bandwidth) of the UWB signal within 1 millisecond, an instantaneous power of the transmitted signal can be improved by concentrating the energy for transmission in a shorter time. This increases a coverage area of the UWB signal and improves a signal-to-noise ratio of a received signal at a receive end. Based on this, in some scenarios in which a transmit power needs to be increased, a UWB signal transmission method is shown in FIG. 7. FIG. 7 is a diagram of fragment transmission of a UWB signal according to an embodiment of this application. As shown in FIG. 7, a transmit end splits a to-be-transmitted UWB signal into a plurality of fragments (fragments), a time length of each UWB fragment (UWB fragment) signal is less than 1 millisecond, and only one UWB fragment is sent in each millisecond. Each UWB fragment is a PPDU. Corresponding to fragment transmission of the UWB signal, a PPDU frame structure of the UWB fragment signal may include only a synchronization (synchronization, SYNC) field, and optionally include a start-of-frame delimiter (start-of-frame delimiter, SFD) field. The PPDU frame structure of the UWB fragment signal does not include a data part.

It can be understood that an instantaneous power of the UWB signal may be increased through fragment transmission, to increase a coverage area of the UWB signal and improve a signal-to-noise ratio of a signal received by a receive end.

A frame structure (as shown in FIG. 3) of a UWB signal in the 802.15.4a and 802.15.4z standards does not include only a synchronization (SYNC) field. Therefore, if a preamble sequence (for example, an Ipatov sequence with a length of 31, 91, or 127) defined in the 802.15.4a and 802.15.4z standards is applied to the UWB fragment (UWB fragment) signal shown in FIG. 7, severe interference will be caused to a device (or an existing UWB device) that supports only the 802.15.4a or 802.15.4z standard. This is because after the existing UWB device receives a preamble sequence that can be identified, there is no subsequent signal to be received.

It can be understood that the UWB device may be a communication apparatus that supports a UWB technology (for example, the 802.15 series protocols). Details are not described below again.

Embodiments of this application provide a UWB-based PPDU transmission method and a related apparatus. A new preamble sequence is designed and applied to a PPDU, and the preamble sequence has a good periodic autocorrelation property and a good cross-correlation property. This can improve an anti-interference capability of a UWB system, enable the UWB system to have relatively good synchronization performance, and avoid interference to an existing UWB device. The following describes in detail the technical solutions provided in this application with reference to more accompanying drawings.

To clearly describe the technical solutions of this application, this application is described by using a plurality of embodiments. For details, refer to the following descriptions. In this application, unless otherwise specified, for same or similar parts of embodiments or implementations, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

A communication apparatus in this application may not only support the 802.15 series protocols, for example, the 802.15.4ab standard or the next-generation standard of 802.15.4ab, but also support other standard protocols (for example, the 802.11 series protocols), for example, a plurality of wireless local area network (wireless local area networks, WLAN) formats of the 802.11 family such as 802.11ax, 802.11ac, 802.11n, 802.11g, 802.11b, 802.11a, 802.11be, and the next generation thereof.

### Embodiment 1

Embodiment 1 of this application mainly describes a method for generating a new preamble sequence by using Golay complementary pairs in Golay mates (Golay Mate).

Optionally, a UWB-based PPDU transmission method provided in this embodiment of this application may be applied to a scenario such as ranging, positioning, or sensing between one node and another node, or may be applied to a scenario such as ranging, positioning, or sensing between one node and a plurality of nodes, or may be further applied to a scenario such as ranging, positioning, or sensing between a plurality of nodes and other nodes. This is not limited in this embodiment of this application.

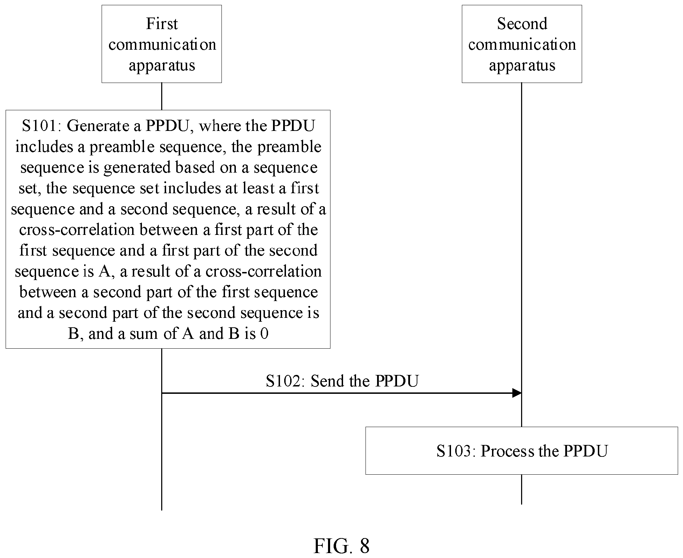

FIG. 8 is a schematic flowchart of a UWB-based PPDU transmission method according to an embodiment of this application. A first communication apparatus and a second communication apparatus in the method may be any two devices that can perform data transmission in FIG. 1 or FIG. 2. As shown in FIG. 8, the UWB-based PPDU transmission method includes but is not limited to the following steps.

S101: The first communication apparatus generates a PPDU, where the PPDU includes a preamble sequence, the preamble sequence is generated based on a sequence set, the sequence set includes at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0.

S102: The first communication apparatus sends the PPDU.

Correspondingly, the second communication apparatus receives the PPDU.

S103: The second communication apparatus processes the PPDU.

Optionally, the preamble sequence may be carried in a synchronization (SYNC) field of the PPDU. For a specific carrying manner, refer to FIG. 4. Details are not described herein again. In this embodiment of this application, a frame structure of the PPDU may include only a synchronization (SYNC) field, and optionally include a start-of-frame delimiter (SFD) field. The frame structure of the PPDU in this embodiment of this application may alternatively be any frame structure shown in FIG. 3. This is not limited in this embodiment of this application.

Optionally, the preamble sequence may be generated based on a sequence in the sequence set. For ease of description, the sequence is denoted as a target sequence. In a possible implementation, the target sequence may be a sequence that is in the sequence set and that is determined by the first communication apparatus and the second communication apparatus through negotiation. In an example, the first communication apparatus and the second communication apparatus may determine the target sequence by negotiating a sequence index, and then generate the preamble sequence based on the target sequence. In another example, if there is only one sequence of a same length in the sequence set, the first communication apparatus and the second communication apparatus may alternatively determine the target sequence by negotiating a sequence length, and then generate the preamble sequence based on the target sequence. In another possible implementation, the target sequence may be configured by a PAN coordinator (coordinator) shown in FIG. 1 or FIG. 2 for the first communication apparatus and the second communication apparatus. For example, the coordinator (coordinator) broadcasts configuration information, where the configuration information includes sequence configuration information, and the sequence configuration information includes a sequence index corresponding to a first communication apparatus and a sequence index corresponding to a second communication apparatus. The sequence index identifies a sequence in the sequence set. The sequence index corresponding to the first communication apparatus is the same as the sequence index corresponding to the second communication apparatus. Herein, the sequence index corresponding to the first communication apparatus being the same as the sequence index of the target sequence means that a sequence identified by the sequence index corresponding to the first communication apparatus is the target sequence. It can be understood that the coordinator herein may be the first communication apparatus, the second communication apparatus, or a communication apparatus other than the first communication apparatus and the second communication apparatus in a UWB network. This is not limited in this embodiment of this application.

It can be understood that the target sequence may alternatively be determined in another manner, provided that both the first communication apparatus and the second communication apparatus know a sequence in the sequence set that is used to generate the preamble sequence. A manner of determining the target sequence is not limited in this embodiment of this application.

Optionally, the preamble sequence may be the target sequence, or may be obtained by repeating the target sequence one or more times. Optionally, the preamble sequence may alternatively be obtained by inserting one or more 0s into the target sequence. For example, one or more 0s are inserted into some predefined sequence positions. Alternatively, the preamble sequence may be obtained by inserting one or more 0s into the target sequence and then repeating a resultant target sequence one or more times.

For example, the preamble sequence may be represented as [a1, 0ᵤ₁, a₂, 0ᵤ₂, ..., a_{P}, 0_{uP}, b₁, 0ᵥ₃, b₂, 0ᵥ₄, ..., b_{Q}, 0_{vQ}]; or the preamble sequence is obtained by repeating a sequence of [a₁, 0ᵤ₁, a₂, 0ᵤ₂, ..., a_{P}, 0_{uP}, b₁, 0ᵥ₁, b₂, 0ᵥ₂, ..., b_{Q}, 0_{vQ}] one or more times, where a₁, a₂, ..., and a_{P} and b₁, b₂, ..., and b_{Q} form the target sequence, a₁, a₂, ..., and a_{P} form a first part of the target sequence, and b₁, b₂, ..., and b_{Q} form a second part of the target sequence. The first part of the target sequence and the second part of the target sequence form the target sequence. a₁, a₂, ..., and a_{P} represent P-part elements obtained by splitting the first part of the target sequence, and the P-part elements do not overlap with each other in the first part of the target sequence; and b₁, b₂, ..., and b_{Q} represent Q-part elements obtained by splitting the second part of the target sequence, and the Q-part elements do not overlap with each other in the second part of the target sequence. In other words, the target sequence is split into P and Q parts. It can be understood that a manner of splitting the sequence is not limited in this embodiment of this application. The sequence may be evenly split into a plurality of parts, or may be unevenly split. This is not limited in this embodiment of this application. For example, both P and Q are 2, and the target sequence is evenly split. In this case, it is assumed that a length of the target sequence is 64, a₁ represents first 16 elements (namely, a 1^{st} element to a 16^{th} element) of the target sequence, a₂ represents a 17^{th} element to a 32^{nd} element of the target sequence, b₁ represents a 33^{rd} element to a 48^{th} element of the target sequence, and b₂ represents a 49^{th} element to a 64^{th} element of the target sequence.

0ᵤ₁, 0ᵤ₂, ..., and 0_{uP} respectively represent (u1)^{th}, (u2)^{th}, ..., and (uP)^{th} consecutive 0s, 0ᵥ₁, 0ᵥ₂, ..., and 0_{vP} respectively represent (v1)^{th} (v2)^{th}, ..., and (vQ)^{th} consecutive 0s, u1, u2, ..., and uP and v1, v2, ..., and vQ are all integers greater than or equal to 0. It can be understood that when u1, u2, ..., and uP and v1, v2, ..., and vQ are all 0, the preamble sequence is a target sequence [a₁, a₂, ..., a_{P}, b₁, b₂, ..., b_{Q}], or the preamble sequence is obtained by repeating a target sequence [a₁, a₂, ..., a_{P}, b₁, b₂, ..., b_{Q}] one or more times.

Optionally, u1, u2, ..., and uP and v1, v2, ..., and vQ may be described as gaps (gaps), and respectively indicate quantities of consecutive 0s inserted at different positions in the sequence. These gaps (u1, u2, ..., and uP and v1, v2, ..., and vQ) and positions of these gaps in the sequence may be determined by the first communication apparatus and the second communication apparatus through negotiation, or may be configured by the coordinator for the first communication apparatus and the second communication apparatus. When the coordinator configures the gaps and positions of the gaps for the first communication apparatus and the second communication apparatus, the sequence configuration information in the configuration information broadcast by the coordinator may further include one or more of the following: a plurality of gaps corresponding to the first communication apparatus and positions of the plurality of gaps in the sequence, or a plurality of gaps (the plurality of gaps may also be referred to as a group of gaps) corresponding to the second communication apparatus and positions of the plurality of gaps in the sequence. It can be understood that the coordinator configures same gaps and same positions of the gaps in the sequence for the first communication apparatus and the second communication apparatus. It can be further understood that information that is not configured by the coordinator for the first communication apparatus and the second communication apparatus may be determined by the first communication apparatus and the second communication apparatus through negotiation. For example, the sequence configuration information further includes the plurality of gaps corresponding to the first communication apparatus and the plurality of gaps corresponding to the second communication apparatus, and the coordinator does not configure positions of the gaps in the sequence for the first communication apparatus and the second communication apparatus. In this case, a position of each gap in the sequence may be determined by the first communication apparatus and the second communication apparatus through negotiation, or a position of each gap in the sequence may be preset.

"Predefine" and "preset" in this application may be understood as "define", "predefine", "store", "pre-store", "pre-negotiate", "pre-configure", "solidify", "pre-burn", or the like.

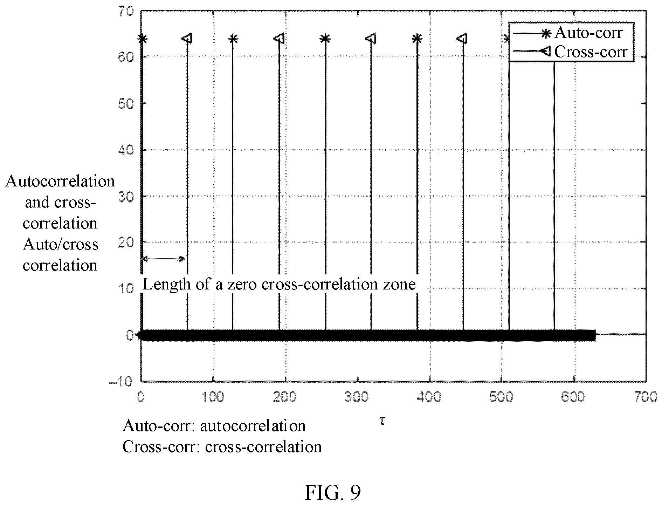

Optionally, at least some sequences in the sequence set have a zero correlation zone, for example, a zero cross-correlation zone and a zero autocorrelation zone. For specific content of the sequence set, refer to the following descriptions. Details are not described herein. It can be understood that the zero cross-correlation zone may be understood as that there is no cross-correlation side lobes within a specific time shift, and the specific time shift is a length Z of the zero cross-correlation zone. In other words, there are continuous values of τ. Under these values of τ, a periodic cross-correlation function R_{x,y}(τ) is 0, and these continuous values of τ are referred to as a zero cross-correlation zone. FIG. 9 is a diagram of a zero cross-correlation zone according to an embodiment of this application. As shown in FIG. 9, a zero-amplitude region between an autocorrelation main lobe and a first cross-correlation side lobe is a zero cross-correlation zone. A horizontal coordinate shown in FIG. 9 represents a value of τ in a periodic autocorrelation function Rₓ(τ) and the periodic cross-correlation function R_{x,y}(τ), x and y respectively represent two sequences, a vertical coordinate represents an amplitude of a periodic autocorrelation and a periodic cross-correlation. The zero autocorrelation zone may be understood as that, except that an autocorrelation amplitude at an origin is not 0, an autocorrelation amplitude is 0 in other continuous time shifts. In other words, there are continuous values of τ. Under these values of τ, the periodic autocorrelation function Rₓ(τ) is 0, and these continuous values of τ are referred to as a zero autocorrelation zone. For example, the target sequence has a zero autocorrelation zone, and there is a zero cross-correlation zone between the target sequence and a sequence in the sequence set.

The communication apparatus in this embodiment of this application determines a sequence from the sequence set, and then generates the preamble sequence based on the sequence. Because the sequence in the sequence set has a zero autocorrelation zone, an autocorrelation property of the preamble sequence is effectively ensured, so that a UWB system has relatively good synchronization performance. In addition, at least some sequences in the sequence set have a zero cross-correlation zone, so that interference caused by cross-correlation side lobes is small for communication apparatuses that select two sequences having a zero cross-correlation zone. This improves an anti-interference capability of the UWB system. Because the preamble sequence is newly designed in this embodiment of this application, the preamble sequence in this embodiment of this application does not interfere with an existing UWB device.

It can be understood that, the preamble sequence is obtained by inserting one or more 0s into different positions in a sequence in the sequence set, and gaps and positions of the gaps in the sequence determined for different communication apparatuses may be different. Therefore, preamble sequences and lengths of the preamble sequences of the different communication apparatuses may be different. In this case, after performing cross-correlation, a receive end may reduce an amplitude of a cross-correlation side lobe through an averaging operation, thereby improving the anti-interference capability of the UWB system.

The following describes in detail elements and features of sequences in the sequence set in this embodiment of this application.

### 1. Features of sequences in the sequence set

(1) Any sequence in the sequence set in this embodiment of this application includes two parts: a first part and a second part. A sum of an amplitude of an autocorrelation side lobe of the first part and an amplitude of an autocorrelation side lobe of the second part is 0, and neither an amplitude of an autocorrelation main lobe of the first part nor an amplitude of an autocorrelation main lobe of the second part is 0.

For example, a sequence in the sequence set is used as an example. Assuming that a first part of the sequence is represented as a, and a second part of the sequence is represented as b, the sequence meets the following condition: ${R}_{a} \left(τ\right) + {R}_{b} \left(τ\right) = 0 , τ \neq 0$

Rₐ(τ) represents a periodic autocorrelation function of the first part (a), and R_{b}(τ) represents a periodic autocorrelation function of the second part (b).

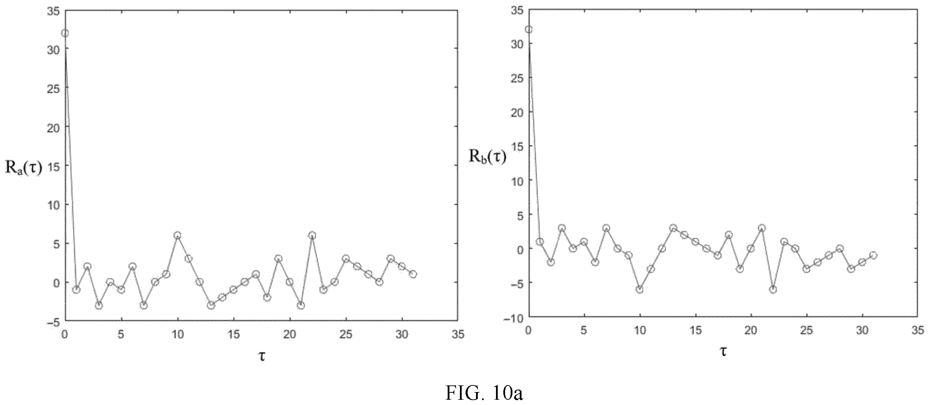

It can be understood that a sequence that meets the foregoing formula (1-1) is also referred to as a Golay complementary pair. In other words, any sequence in the sequence set in this embodiment of this application is a Golay complementary pair, or any sequence in the sequence set in this embodiment of this application has a zero autocorrelation zone. FIG. 10a is a diagram of a simulation result of an autocorrelation of a Golay complementary pair with a length of 64 according to an embodiment of this application. Specifically, Rₐ(τ) in FIG. 10a represents a periodic autocorrelation amplitude of the first part (a) with a length of 32, and R_{b}(τ) in FIG. 10a represents a periodic autocorrelation amplitude of the second part (b) with a length of 32. It can be learned from FIG. 10a that, except that Rₐ(τ)+R_{b}(τ) at an origin is not 0, Rₐ(τ)+R_{b}(τ) is 0 for other horizontal coordinates.

(2) The sequence set in this embodiment of this application includes at least a first sequence and a second sequence, and a length of the first sequence is the same as that of the second sequence. A result of a cross-correlation between a first part of the first sequence and a first part of the second sequence is A, a result of a cross-correlation between a second part of the first sequence and a second part of the second sequence is B, and a sum of A and B is 0. In other words, the first sequence and the second sequence have a zero cross-correlation zone. In other words, at least some sequences in the sequence set in this embodiment of this application have a zero cross-correlation zone.

For example, it is assumed that the first sequence and the second sequence in the sequence set are two different Golay complementary pairs, where the first sequence is represented as a Golay complementary pair (a, b), the second sequence is represented as a Golay complementary pair (c, d), and the Golay complementary pair (a, b) has a same length as the Golay complementary pair (c, d). In this case, the first sequence and the second sequence meet the following condition: ${R}_{a , c} \left(τ\right) + {R}_{b , d} \left(τ\right) = {R}_{c , a} \left(τ\right) + {R}_{d , b} \left(τ\right) = 0 for all τ$

R_{a,c}(τ) and R_{c,a}(τ) represent periodic cross-correlation functions of the first part (a) of the first sequence and the first part (c) of the second sequence, and R_{b,d}(τ) and R_{d,b}(τ) represent periodic cross-correlation functions of the second part (b) of the first sequence and the second part (d) of the second sequence.

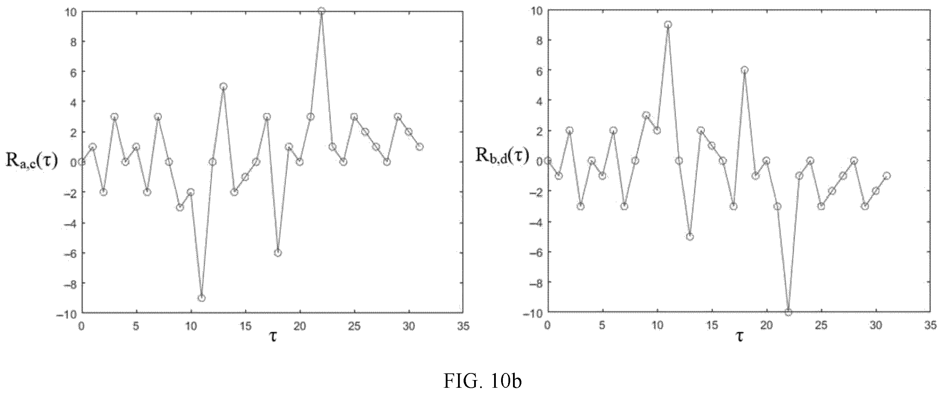

It can be understood that two sequences that meet both the foregoing formula (2-1) and formula (2-2) are referred to as Golay Mates (Golay Mate). For example, there is at least one Golay Mate (Golay Mate) in the sequence set in this embodiment of this application. FIG. 10b is a diagram of a simulation result of a cross-correlation of Golay mates with a length of 64 according to an embodiment of this application. Specifically, R_{a,c}(τ) in FIG. 10b represents periodic cross-correlation amplitudes of the first part (a) of the first sequence and the first part (c) of the second sequence, and R_{b,d}(τ) in FIG. 10b represents periodic cross-correlation amplitudes of the second part (b) of the first sequence and the second part (d) of the second sequence. It can be learned from FIG. 10b that R_{a,c}(τ)+R_{b,d}(τ) is 0 for any position on the x-axis.

(3) Further, the sequence set in this embodiment of this application includes K sequences, the K sequences include a first sequence and a second sequence, and the first sequence and the second sequence meet the foregoing formula (2-2). Both a length of the first sequence and a length of the second sequence are N, and a length of a zero correlation zone of the first sequence and the second sequence is Z. K, N, and Z meet the following condition: $K = \frac{1}{2} \left⌊\frac{N}{Z}\right⌋$ Lx J indicates rounding down x to the nearest integer. Details are not described below.

The length Z of the zero correlation zone of the first sequence and the second sequence is a minimum value of a zero autocorrelation length Z₁ of the first sequence, a zero autocorrelation length Z₂ of the second sequence, and a length Z₁₂ (or Z₂₁) of a zero cross-correlation zone of the first sequence and the second sequence, that is, Z=min{Z₁, Z₂, Z₁₂}. It can be understood that, when the first sequence and the second sequence have a same zero autocorrelation length, the length Z of the zero correlation zone of the first sequence and the second sequence is a minimum value of the zero autocorrelation length Z₁ of the first sequence and the length Z₁₂ (or Z₂₁) of the zero cross-correlation zone of the first sequence and the second sequence; or Z is a minimum value of the zero autocorrelation length Z₂ of the second sequence and the length Z₁₂ (or Z₂₁) of the zero cross-correlation zone of the first sequence and the second sequence, that is, Z=min{Z₂, Z₁₂}=min{Z₁, Z₁₂}.

### 2. Elements of sequences in the sequence set

For example, a sequence set that meets the foregoing features (1), (2), and (3) (or meets the foregoing formula (2-1), formula (2-2), and formula (2-3)) is shown in the following Table 1. It should be understood that sequences provided in this specification are merely examples, and any sequence that meets at least one of the foregoing constraint conditions (1), (2), and (3) falls within the protection scope of embodiments of this application.

It can be understood that each sequence in Table 1 is a binary sequence, and includes two types of elements: 1 and -1. Binary sequences a and b form a Golay complementary pair, binary sequences c and d form another Golay complementary pair, and the Golay complementary pair (a, b) and the Golay complementary pair (c, d) are Golay mates (Golay Mate). It can be further understood that the sequences in Table 1 are merely examples, and various variations may be made to the sequences. For example, one or more 0s may be inserted into the binary sequence a or b, or a cyclic shift of a same quantity of bits is performed on the Golay complementary pair (a, b) and the Golay complementary pair (c, d) separately, or an inversion or reversal operation is separately performed on the Golay complementary pair (a, b) and the Golay complementary pair (c, d). Various variations of the sequences in Table 1 fall within the protection scope of this embodiment of this application.

It can be further understood that, in Table 1, a sequence parameter K represents a quantity of sequences included in a sequence set, a sequence parameter N represents a sequence length of a sequence, and a sequence parameter Z represents a length of a zero correlation zone. It can be further understood that an element 1 in a sequence may be represented by a positive pulse, an element -1 may be represented by a negative pulse, and an element 0 indicates that there is no pulse.

**Table 1**

| Sequence parameters | Representative sequences | Used channel |
|---|---|---|
| K=2, N=64, Z=16 | *a* =[1 1 1 -1 1 1 -1 1 1 1 1 -1 -1 -1 1 -1 -1 1 -1 -1 -1 1 1 1 -1 1- 1 -1 1 -1 -1 -1] | One or more of channels numbered 0 to 15 |
| | b=[1 1 1 -1 1 1 -1 1 1 1 1 -1 -1 -1 1 -1 1 -1 1 1 1 -1 -1 -1 1 -1 1 1 -1 1 1 1] | |
| | c=[1 1 1 -1 1 1 -1 1 -1 -1 -1 1 1 1 -1 1 -1 1 -1 -1 -1 1 1 1 1 -1 1 1 -1 1 1 1] | |
| | d=[1 1 1 -1 1 1 -1 1 -1 -1 -1 1 1 1 -1 1 1 -1 1 1 1 -1 -1 -1 -1 1 -1 -1 1 -1 -1 -1] | |
| K=2, N=64, Z=16 | a=[ 1 1 1 -1 1 1 -1 1 1 1 1 -1 -1 -1 1 -1 1 1 1 -1 1 1 -1 1 -1 -1 -1 1 1 1 -1 1] | One or more of channels numbered 0 to 15 |
| | b=[1 1 1 -1 1 1 -1 1 1 1 1 -1 -1 -1 1 -1 -1 -1 -1 1 -1 -1 1 -1 1 1 1 -1 -1 -1 1 -1] | |
| | c=[-1 1 -1 -1 -1 1 1 1 -1 1 -1 -1 1 -1 -1 -1 -1 1 -1 -1 -1 1 1 1 1 -1 1 1 -1 1 1 1] | |
| | d=[-1 1 -1 -1 -1 1 1 1 -1 1 -1 -1 1 -1 -1 -1 1 -1 1 1 1 -1 -1 -1 -1 1 -1 -1 1 -1 -1 -1] | |
| K=2, N=64, Z=16 | a=[1 -1 1 1 1 -1 -1 -1 1 -1 1 1 -1 1 1 1 1 -1 1 1 1 -1 -1 -1 -1 1 -1 -1 1 -1 -1 -1] | One or more of channels numbered 0 to 15 |
| | b=[ 1 -1 1 1 1 -1 -1 -1 1 -1 1 1 -1 1 1 1 -1 1 -1 -1 -1 1 1 1 1 -1 1 1 -1 1 1 1] | |
| | c=[1 1 1 -1 1 1 -1 1 1 1 1 -1 -1 -1 1 -1 1 1 1 -1 1 1 -1 1 -1 -1 -1 1 1 1 -1 1] | |
| | d=[1 1 1 -1 1 1 -1 1 1 1 1 -1 -1 -1 1 -1 -1 -1 -1 1 -1 -1 1 -1 1 1 1 -1 -1 -1 1 -1] | |
| K=2, N=64, Z=16 | a=[1 1 -1 1 1 1 1 -1 1 1 -1 1 -1 -1 -1 1 1 1 -1 1 1 1 1 -1 -1 -1 1 -1 1 1 1 -1] | One or more of channels numbered 0 to 15 |
| | b=[1 1 -1 1 1 1 1 -1 1 1 -1 1 -1 -1 -1 1 -1 -1 1 -1 -1 -1 -1 1 1 1 -1 1 -1 -1 -1 1] | |
| | c=[1 -1 -1 -1 1 -1 1 1 1 -1 -1 -1 -1 1 -1 -1 1 -1 -1 -1 1 -1 1 1 -1 1 1 1 1 -1 1 1] | |
| | d=[1 -1 -1 -1 1 -1 1 1 1 -1 -1 -1 -1 1 -1 -1 -1 1 1 1 -1 1 -1 -1 1 -1 -1 -1 -1 1 -1 -1] | |
| K=2, N=64, Z=16 | a=[1 -1 -1 -1 1 -1 1 1 1 -1 -1 -1 -1 1 -1 -1 1 -1 -1 -1 1 -1 1 1 -1 1 1 1 1 -1 1 1] | One or more of channels numbered 0 to 15 |
| | b=[1 -1 -1 -1 1 -1 1 1 1 -1 -1 -1 -1 1 -1 -1 -1 1 1 1 -1 1 -1 -1 1 -1 -1 -1 -1 1 -1 -1] | |
| | c=[-1 -1 1 -1 -1 -1 -1 1 -1 -1 1 -1 1 1 1 -1 -1 -1 1 -1 -1 -1 -1 1 1 1 -1 1 -1 -1 -1 1] | |
| | d=[-1 -1 1 -1 -1 -1 -1 1 -1 -1 1 -1 1 1 1 -1 1 1 -1 1 1 1 1 -1 -1 -1 1 -1 1 1 1 -1] | |
| K=2, N=128, Z=32 | a=[ 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1] | One or more of channels numbered 0 to 15 |
| | b=[ 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1] | |
| | c=[1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1] | |
| | d=[1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1] | |
| K=2, N=128, Z=32 | a=[1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1] | One or more of channels numbered 0 to 15 |
| | b=[ 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1] | |
| | c=[-1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 1 1 1 -1 1 1 -1 1 -1 -1 -1 1 1 1 -1 1] | |
| | d=[-1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1] | |
| K=2, N=128, Z=32 | a=[1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1] | One or more of channels numbered 0 to 15 |
| | b=[1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1] | |
| | c=[-1 1 1 1 -1 1 -1 -1 -1 1 1 1 1 -1 1 1 -1 1 1 1 -1 1 -1 -1 1 -1 -1 -1 -1 1 -1 -1 -1 1 1 1 -1 1 -1 -1 -1 1 1 1 1 -1 1 1 1 -1 -1 -1 1 -1 1 1 -1 1 1 1 1 -1 1 1] | |
| | d=[-1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1] | |
| K=2, N=128, Z=32 | a=[1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1] | One or more of channels numbered 0 to 15 |
| | b=[1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1] | |
| | c=[1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1] | |
| | d=[1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1] | |
| K=2, N=128, Z=32 | a=[ 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1] | One or more of channels numbered 0 to 15 |
| | b=[1 1 1 -1 -1 -1 1 -1 1 1 1 -1 1 1 -1 1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1] | |
| | c=[-1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 1 -1 1 1 -1 1 1 1 -1 1 -1 -1 -1 1 1 1] | |
| | d=[-1 1 -1 -1 1 -1 -1 -1 -1 1 -1 -1 -1 1 1 1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1] | |
| K=2, N=256, Z=64 | a=[ 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1] | One or more of channels numbered 0 to 15 |
| | b=[1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1] | |
| | c=[-1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1] | |
| | d=[-1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1] | |
| K=2, N=256, Z=64 | a=[1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1] | One or more of channels numbered 0 to 15 |
| | b=[1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1] | |
| | c=[1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1] | |
| | d=[1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1] | |
| K=2, N=256, Z=64 | a=[1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1] | One or more of channels numbered 0 to 15 |
| | b=[1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1] | |
| | c=[1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1] | |
| | d=[1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1] | |
| K=2, N=256, Z=64 | a=[1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1] | One or more of channels numbered 0 to 15 |
| | b=[1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1] | |
| | c=[-1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1] | |
| | d=[-1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1] | |
| K=2, N=256, Z=64 | a=[1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1] | One or more of channels numbered 0 to 15 |
| | b=[ 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1] | |
| | c=[1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1] | |
| | d=[1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1] | |
| K=2, N=512, Z=128 | a=[ 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1] | One or more of channels numbered 0 to 15 |
| | b=[1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1] | |
| | c=[1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1] | |
| | d=[1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1] | |
| K=2, N=512, Z=128 | a=[1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1] | One or more of channels numbered 0 to 15 |
| | b=[1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1] | |
| | c=[-1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1] | |
| | d=[-1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1] | |
| K=2, N=512, Z=128 | a=[1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1] | One or more of channels numbered 0 to 15 |
| | b=[1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1 -1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1] | |
| | c=[-1 1 1 1 -1 1 -1 -1 -1 1 1 1 1 -1 1 1 -1 1 1 1 -1 1 -1 -1 1 -1 -1 -1 -1 1 -1 -1 -1 1 1 1 -1 1 -1 -1 -1 1 1 1 1 -1 1 1 1 -1 -1 -1 1 -1 1 1 -1 1 1 1 1 -1 1 1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 -1 1 1 1 -1 1 -1 -1 -1 1 1 1 1 -1 1 1 1 -1 -1 -1 1 -1 1 1 -1 1 1 1 1 -1 1 1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1] | |
| | d=[-1 1 1 1 -1 1 -1 -1 -1 1 1 1 1 -1 1 1 -1 1 1 1 -1 1 -1 -1 1 -1 -1 -1 -1 1 -1 -1 -1 1 1 1 -1 1 -1 -1 -1 1 1 1 1 -1 1 1 1 -1 -1 -1 1 -1 1 1 -1 1 1 1 1 -1 1 1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1] | |
| K=2, N=512, Z=128 | a=[1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1 1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1] | One or more of channels numbered 0 to 15 |
| | b=[1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1 -1 1 1 1 -1 1 -1 -1 -1 1 1 1 1 -1 1 1 -1 1 1 1 -1 1 -1 -1 1 -1 -1 -1 -1 1 -1 -1 -1 1 1 1 -1 1 -1 -1 -1 1 1 1 1 -1 1 1 1 -1 -1 -1 1 -1 1 1 -1 1 1 1 1 -1 1 1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1] | |
| | c=[1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1] | |
| | d=[1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1 -1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1] | |
| K=2, N=512, Z=128 | a=[1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1] | One or more of channels numbered 0 to 15 |
| | b=[1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1 -1 -1 -1 1 -1 -1 1 -1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1] | |
| | c=[-1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1] | |
| | d=[-1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1] | |
| K=2, N=1024, Z=256 | a=[1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1] | One or more of channels numbered 0 to 15 |
| | b=[1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1] | |
| | c=[-1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1] | |
| | d=[-1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1] | |
| K=2, N=1024, Z=256 | a=[1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1] | One or more of channels numbered 0 to 15 |
| | b=[1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1] | |
| | c=[1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1] | |
| | d=[1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1] | |
| K=2, N=1024, Z=256 | a=[1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1 -1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1] | One or more of channels numbered 0 to 15 |
| | b=[1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1 -1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1] | |
| | c=[1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1 1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1 -1 1 1 1 -1 1 -1 -1 -1 1 1 1 1 -1 1 1 -1 1 1 1 -1 1 -1 -1 1 -1 -1 -1 -1 1 -1 -1 -1 1 1 1 -1 1 -1 -1 -1 1 1 1 1 -1 1 1 1 -1 -1 -1 1 -1 1 1 -1 1 1 1 1 -1 1 1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1] | |
| | d=[1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1 1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 -1 1 1 1 -1 1 -1 -1 -1 1 1 1 1 -1 1 1 1 -1 -1 -1 1 -1 1 1 -1 1 1 1 1 -1 1 1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1] | |
| K=2, N=1024, Z=256 | a=[1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1 1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1 -1 1 1 1 -1 1 -1 -1 -1 1 1 1 1 -1 1 1 -1 1 1 1 -1 1 -1 -1 1 -1 -1 -1 -1 1 -1 -1 -1 1 1 1 -1 1 -1 -1 -1 1 1 1 1 -1 1 1 1 -1 -1 -1 1 -1 1 1 -1 1 1 1 1 -1 1 1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1] | One or more of channels numbered 0 to 15 |
| | b=[1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 -1 1 1 1 -1 1 -1 -1 -1 1 1 1 1 -1 1 1 1 -1 -1 -1 1 -1 1 1 -1 1 1 1 1 -1 1 1 1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 -1 1 1 1 -1 1 -1 -1 -1 1 1 1 1 -1 1 1 1 -1 -1 -1 1 -1 1 1 -1 1 1 1 1 -1 1 1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1 1 -1 -1 -1 1 -1 1 1 1 -1 -1 -1 -1 1 -1 -1 1 -1 -1 -1 1 -1 1 1 -1 1 1 1 1 -1 1 1 1 -1 -1 -1 1 -1 1 1 1 -1 -1 -1 -1 1 -1 -1 -1 1 1 1 -1 1 -1 -1 1 -1 -1 -1 -1 1 -1 -1 -1 1 1 1 -1 1 -1 -1 -1 1 1 1 1 -1 1 1 -1 1 1 1 -1 1 -1 -1 1 -1 -1 -1 -1 1 -1 -1 1 -1 -1 -1 1 -1 1 1 1 -1 -1 -1 -1 1 -1 -1 -1 1 1 1 -1 1 -1 -1 1 -1 -1 -1 -1 1 -1 -1] | |
| | c=[-1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1 -1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1 -1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1] | |
| | d=[-1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 -1 -1 1 -1 -1 -1 -1 1 -1 -1 1 -1 1 1 1 -1 -1 -1 1 -1 -1 -1 -1 1 1 1 -1 1 -1 -1 -1 1 1 1 -1 1 1 1 1 -1 1 1 -1 1 -1 -1 -1 1 -1 -1 1 -1 -1 -1 -1 1 1 1 -1 1 -1 -1 -1 1 -1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 1 1 -1 1 1 1 1 -1 1 1 -1 1 -1 -1 -1 1 -1 -1 1 -1 -1 -1 -1 1 1 1 -1 1 -1 -1 -1 1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1 -1 -1 1 -1 -1 -1 -1 1 -1 -1 1 -1 1 1 1 -1 -1 -1 1 -1 -1 -1 -1 1 1 1 -1 1 -1 -1 -1 1 -1 -1 1 -1 -1 -1 -1 1 -1 -1 1 -1 1 1 1 -1 1 1 -1 1 1 1 1 -1 -1 -1 1 -1 1 1 1 -1 1 1 -1 1 1 1 1 -1 1 1 -1 1 -1 -1 -1 1 1 1 -1 1 1 1 1 -1 -1 -1 1 -1 1 1 1 -1 -1 -1 1 -1 -1 -1 -1 1 -1 -1 1 -1 1 1 1 -1 1 1 -1 1 1 1 1 -1 -1 -1 1 -1 1 1 1 -1] | |
| K=2, N=1024, Z=256 | a=[1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1 -1 -1 -1 1 -1 -1 1 -1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1] | One or more of channels numbered 0 to 15 |
| | b=[1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 1 1 1 -1 -1 -1 1 -1 -1 -1 -1 1 -1 -1 1 -1 -1 -1 -1 1 1 1 -1 1 -1 -1 -1 1 -1 -1 1 -1 1 1 1 -1 -1 -1 1 -1 -1 -1 -1 1 -1 -1 1 -1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 -1 -1 -1 1 1 1 -1 1 -1 -1 -1 1 -1 -1 1 -1 1 1 1 -1 -1 -1 1 -1 -1 -1 -1 1 -1 -1 1 -1 -1 -1 -1 1 1 1 -1 1 -1 -1 -1 1 -1 -1 1 -1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1 1 1 1 -1 -1 -1 1 -1 1 1 1 -1 1 1 -1 1 1 1 1 -1 -1 -1 1 -1 -1 -1 -1 1 -1 -1 1 -1 1 1 1 -1 -1 -1 1 -1 1 1 1 -1 1 1 -1 1 -1 -1 -1 1 1 1 -1 1 1 1 1 -1 1 1 -1 1 -1 -1 -1 1 1 1 -1 1 -1 -1 -1 1 -1 -1 1 -1 -1 -1 -1 1 1 1 -1 1 1 1 1 -1 1 1 -1 1 1 1 1 -1 -1 -1 1 -1 1 1 1 -1 1 1 -1 1 -1 -1 -1 1 1 1 -1 1 1 1 1 -1 1 1 -1 1] | |
| | c=[1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1] | |
| | d=[1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 1 -1 1 1 -1 1 1 1 -1 1 -1 -1 -1 1 1 1 -1 1 -1 -1 1 -1 -1 -1 -1 1 -1 -1 -1 1 1 1 1 -1 1 1 -1 1 1 1 -1 1 -1 -1 -1 1 1 1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 -1 1 -1 -1 1 -1 -1 -1 -1 1 -1 -1 -1 1 1 1 1 -1 1 1 -1 1 1 1 -1 1 -1 -1 -1 1 1 1 -1 1 -1 -1 1 -1 -1 -1 -1 1 -1 -1 -1 1 1 1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1 1 -1 1 1 -1 1 1 1 1 -1 1 1 1 -1 -1 -1 1 -1 1 1 -1 1 1 1 -1 1 -1 -1 -1 1 1 1 1 -1 1 1 -1 1 1 1 1 -1 1 1 1 -1 -1 -1 -1 1 -1 -1 1 -1 -1 -1 1 -1 1 1 1 -1 -1 -1 -1 1 -1 -1 1 -1 -1 -1 -1 1 -1 -1 -1 1 1 1 -1 1 -1 -1 1 -1 -1 -1 1 -1 1 1 1 -1 -1 -1 1 -1 1 1 -1 1 1 1 1 -1 1 1 1 -1 -1 -1 -1 1 -1 -1 1 -1 -1 -1 1 -1 1 1 1 -1 -1 -1] | |

Table 1 shows Golay complementary pairs with different sequence lengths (namely, N). It can be understood that, when channel quality is relatively poor or there are a relatively large quantity of users, using a Golay complementary pair with a long sequence length N to generate a preamble sequence can improve performance of the UWB system. This is because a longer sequence length N of a Golay complementary pair indicates a larger quantity of non-zero elements in the Golay complementary pair and a larger amplitude of a periodic autocorrelation main lobe of a preamble sequence generated by using the Golay complementary pair. In other words, a larger ratio of the amplitude of the periodic autocorrelation main lobe to an amplitude of a side lobe of the preamble sequence helps identify a position of the autocorrelation main lobe of the preamble sequence (for example, helps determine a receiving time of a ranging signal in a ranging scenario). In this way, performance of the UWB system is improved. When channel quality is relatively good, using a Golay complementary pair with a relatively short sequence length N to generate the preamble sequence can reduce a sending delay of the preamble sequence.

For better description, performance of the preamble sequence generated by using the sequence in the sequence set in this embodiment of this application is described below by using examples with reference to a simulation result of autocorrelations of and a cross-correlation between preamble sequences.

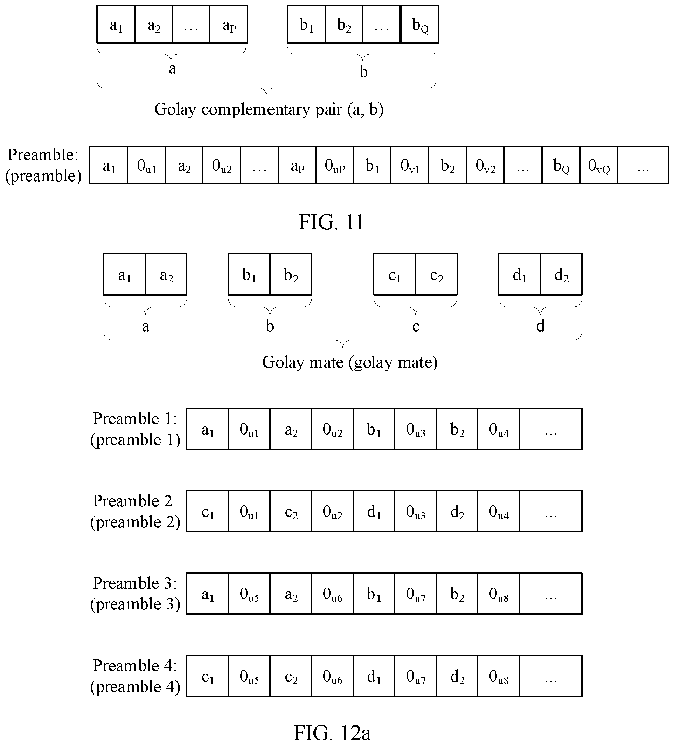

For example, sequences in the second row in Table 1 are used as an example. A preamble sequence generated based on a Golay complementary pair (a, b) in the second row in Table 1 is shown in FIG. 11. FIG. 11 is a diagram of a preamble sequence according to an embodiment of this application. In FIG. 11, a₁, a₂, ..., and a_{P} represent a P part obtained by evenly dividing a binary sequence a in the second row in Table 1, a₁ represents a 1^{st} element to a (32/P)^{th} element of the binary sequence a in the second row in Table 1, a₂ represents an [(32/P)+1]^{th} element to an (2*32/P)^{th} element of the binary sequence a in the second row in Table 1, and so on, and a_{P} represents an [(P-1)*32/P+1]^{th} element to a 32^{nd} element of the binary sequence a in the second row in Table 1, where 32 is a length (namely, a quantity of elements) of the binary sequence a in the second row in Table 1. Similarly, in FIG. 11, b₁, b₂, ..., and b_{Q} represent a Q part obtained by evenly dividing a binary sequence b in the second row in Table 1, b₁ represents a 1^{st} element to a (32/Q)^{th} element of the binary sequence b in the second row in Table 1, b₂ represents an [(32/Q)+1]^{th} element to an (2*32/Q)^{th} element of the binary sequence b in the second row in Table 1, and so on, and b_{Q} represents an [(Q-1)*32/Q+1]^{th} element to a 32^{nd} element of the binary sequence b in the second row in Table 1, where 32 is a length (namely, a quantity of elements) of the binary sequence b in the second row in Table 1. In FIG. 11, 0ᵤ₁, 0ᵤ₂, ..., and 0_{uP} respectively represent u1 consecutive 0s, u2 consecutive 0s, ..., and uP consecutive 0s, and 0ᵥ₁, 0ᵥ₂, ..., and 0_{vQ} respectively represent v1 consecutive 0s, v2 consecutive 0s, ..., and vQ consecutive 0s.

It can be understood that, for a plurality of users, different users may add different quantities of elements 0 after each part of the binary sequence shown in Table 1, or select different binary sequences in Table 1, or split the binary sequence in Table 1 into different parts, or the foregoing three manners are used in combination.

For ease of understanding, the following examples are all described by using P=2 and Q=2 as an example.

For another example, sequences in the second row in Table 1 are used as an example. A preamble sequence generated based on the Golay complementary pair (a, b) in the second row in Table 1 and a preamble sequence generated based on the Golay complementary pair (c, d) in the second row in Table 1 are shown in FIG. 12a, FIG. 12a is another diagram of preamble sequences according to an embodiment of this application. As shown in FIG. 12a, both a preamble 1 (preamble 1) and a preamble 3 (preamble 3) are generated based on the Golay complementary pair (a, b) in the second row in Table 1. A difference between the preamble 1 and the preamble 3 lies in that quantities of 0s are different. Both a preamble 2 (preamble 2) and a preamble 4 (preamble 4) are generated based on the Golay complementary pair (c, d) in the second row in Table 1. A difference between the preamble 2 and the preamble 4 lies in that quantities of 0s are different. In FIG. 12a, a₁ represents first 16 elements of the binary sequence a in the second row in Table 1, a₂ represents last 16 elements of the binary sequence a in the second row in Table 1, b₁ represents first 16 elements of the binary sequence b in the second row in Table 1, and b₂ represents last 16 elements of the binary sequence b in the second row in Table 1. Similarly, in FIG. 12a, c₁ and c₂ respectively represent first 16 elements and last 16 elements of a binary sequence c in the second row in Table 1, and d₁ and d₂ respectively represent the first 16 elements and last 16 elements of a binary sequence d in the second row in Table 1. In FIG. 11, 0ᵤ₁, 0ᵤ₂, 0ᵤ₃, 0ᵤ₄, 0ᵤ₅, 0ᵤ₆, 0ᵤ₇ and 0ᵤ₈ respectively represent u1 consecutive 0s, u2 consecutive 0s, u3 consecutive 0s, u4 consecutive 0s, u5 consecutive 0s, u6 consecutive 0s, u7 consecutive 0s, and u8 consecutive 0s.

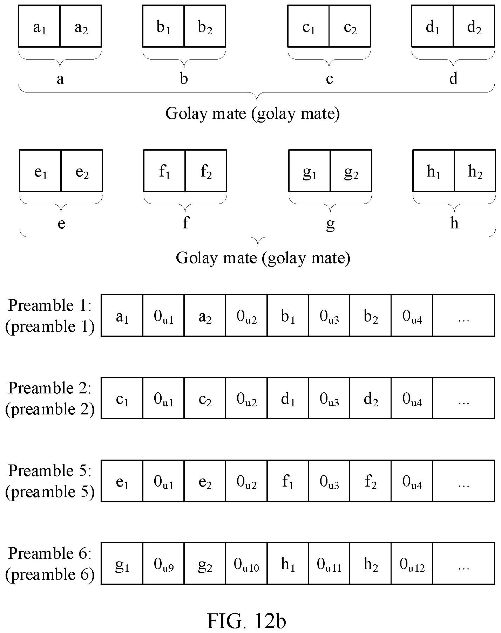

For another example, sequences in the second row and the third row in Table 1 are used as an example. A preamble sequence generated based on two Golay complementary pairs in the second row in Table 1 and a preamble sequence generated based on two Golay complementary pairs in the third row in Table 1 are shown in FIG. 12b. FIG. 12b is still another diagram of preamble sequences according to an embodiment of this application. As shown in FIG. 12b, the preamble 1 and the preamble 2 are the same as those shown in FIG. 12a. Details are not described herein again. A preamble 5 in FIG. 12b is generated based on a Golay complementary pair (a, b) in the third row in Table 1. For ease of differentiation from the Golay complementary pair (a, b) in the second row in Table 1, the Golay complementary pair (a, b) in the third row in Table 1 is denoted as a Golay complementary pair (e, f), where e is the same as a binary sequence a in the third row in Table 1, and f is the same as a binary sequence b in the third row in Table 1. Similarly, a preamble 6 in FIG. 12b is generated based on a Golay complementary pair (c, d) in the third row in Table 1. For ease of differentiation from the Golay complementary pair (c, d) in the second row in Table 1, the Golay complementary pair (c, d) in the third row in Table 1 is denoted as a Golay complementary pair (g, h), where g is the same as a binary sequence c in the third row in Table 1, and h is the same as a binary sequence d in the third row in Table 1. In this case, e₁ and e₂ in FIG. 12b respectively represent first 16 elements and last 16 elements of the binary sequence e (that is, the binary sequence a in the third row in Table 1), f₁ and f₂ in FIG. 12b respectively represent first 16 elements and last 16 elements of the binary sequence f (that is, the binary sequence b in the third row in Table 1), g₁ and g₂ in FIG. 12b respectively represent first 16 elements and last 16 elements of the binary sequence g (that is, the binary sequence c in the third row in Table 1), and h₁ and h₂ in FIG. 12b respectively represent first 16 elements and last 16 elements of the binary sequence h (that is, the binary sequence d in the third row in Table 1). For meanings represented by 0ᵤ₁ to 0ᵤ₄ in FIG. 12b, refer to the foregoing descriptions. 0ᵤ₉ to 0ᵤ₁₂ respectively represent u9 consecutive 0s, u10 consecutive 0s, u11 consecutive 0s, and u12 consecutive 0s.

It can be understood that, in this embodiment of this application, one or more devices configured to complete a same service may use a same preamble in FIG. 12a or FIG. 12b, and a plurality of devices configured to complete different services may use different preambles in FIG. 12a or FIG. 12b, to reduce interference between preambles and improve an anti-interference capability of the UWB system. In other words, in this embodiment of this application, a plurality of preambles used by the plurality of devices configured to complete different services are different in at least one or more of the following: quantities of 0s in the preamble, positions of 0s in the preamble, or binary sequences (or Golay complementary pairs) for generating the preambles.

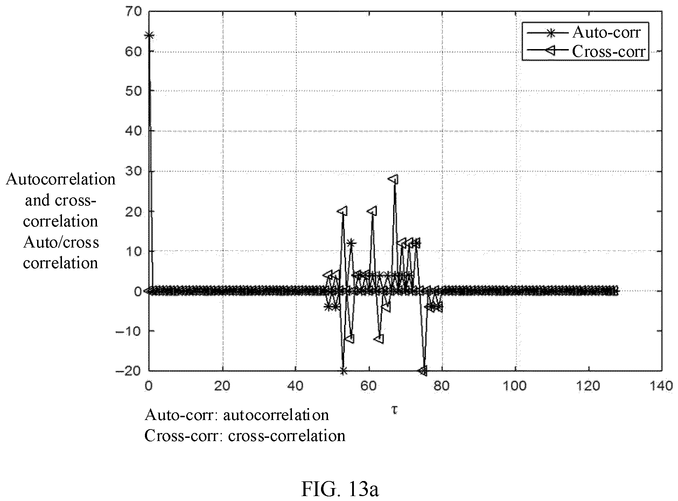

The preamble 1 (preamble 1) and the preamble 2 (preamble 2) in FIG. 12a are used as an example. It is assumed that the preamble 1 (preamble 1) and the preamble 2 (preamble 2) in FIG. 12a have a length of 128, and a quantity of 0s is 64. A simulation result of periodic autocorrelations of and a periodic cross-correlation between the preamble 1 and the preamble 2 with a length of 128 are shown in FIG. 13a. FIG. 13a is a diagram of a simulation result of autocorrelations of and a cross-correlation between two preamble sequences with a length of 128 according to an embodiment of this application. As shown in FIG. 13a, both the preamble 1 and the preamble 2 have zero autocorrelation zones, and there is a zero cross-correlation zone between the preamble 1 and the preamble 2, so that relatively good synchronization performance and anti-interference performance can be maintained at the same time. In FIG. 13a, a horizontal coordinate represents a value of τ in a periodic autocorrelation function and a periodic cross-correlation function, and a vertical coordinate represents an amplitude of a periodic autocorrelation and a periodic cross-correlation.

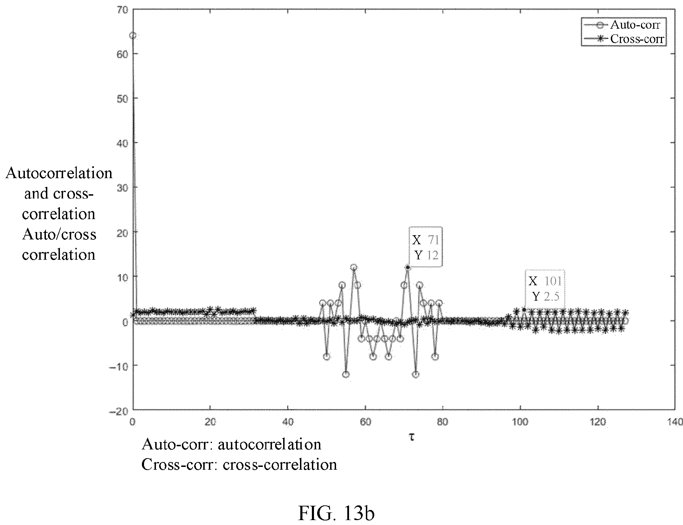

For the Golay complementary pair in this embodiment of this application, good cross-correlation performance and autocorrelation performance can also be obtained by using different quantities of elements 0 (for example, the preamble 1 and the preamble 3 in FIG. 12a). The preamble 1 (preamble 1) and the preamble 3 (preamble 3) in FIG. 12a are used as an example. It is assumed that the preamble 1 is [a₁, 0₁₆, a₂, 0₁₆, b₁, 0₁₆, b₂, 0₁₆] with a length of 128; and the preamble 3 is a [a₁, 0₁₆, a₂, 0₁₇, b₁, 0₁₆, b₂, 0₁₇] with a length of 130. 0₁₆ represents 16 consecutive elements 0, 0₁₇ represents 17 consecutive elements 0, a₁ and a₂ respectively represent first 16 elements and last 16 elements of the binary sequence a in the second row in Table 1, and b₁ and b₂ respectively represent the first 16 elements and last 16 elements of the binary sequence b in the second row in Table 1. The binary sequence a and the binary sequence b are a Golay complementary pair (a, b). In this case, a simulation result of a periodic autocorrelation of the preamble 1 and a periodic cross-correlation between the preamble 1 and the preamble 3 are shown in FIG. 13b. FIG. 13b is a diagram of a simulation result of a cross-correlation between two preamble sequences of different lengths according to an embodiment of this application. As shown in FIG. 13b, because binary sequences a and b are a Golay complementary pair (a, b), a simulation result of a periodic autocorrelation of the preamble 1 has a zero autocorrelation zone. In addition, in this embodiment of this application, elements 0 of different lengths are added, so that lengths of the preamble 1 and the preamble 3 are different. When a periodic cross-correlation between the preamble 1 and the preamble 3 is calculated, an averaging operation may be performed on the length of the preamble 1 to reduce an amplitude of the cross-correlation. As shown in FIG. 13b, a maximum amplitude of the cross-correlation is 2.5. It can be understood that, in FIG. 13b, a horizontal coordinate represents a value of τ in a periodic autocorrelation function and a periodic cross-correlation function, and a vertical coordinate represents an amplitude of a periodic autocorrelation and a periodic cross-correlation.

For example, in this embodiment of this application, the preamble sequence included in the PPDU sent by the first communication apparatus may be any preamble (preamble) in FIG. 12a or any preamble (preamble) in FIG. 12b. This is not limited in this embodiment of this application. Therefore, according to this embodiment of this application, the anti-interference capability of the UWB system can be improved.

### Embodiment 2

Embodiment 2 of this application mainly describes indicating preamble information to a device through configuration.

Optionally, embodiment 2 of this application may be implemented in combination with embodiment 1, or may be implemented independently. This is not limited in this application. When embodiment 2 of this application is implemented in combination with embodiment 1, embodiment 1 is performed after embodiment 2 of this application. For specific content, refer to the following descriptions.

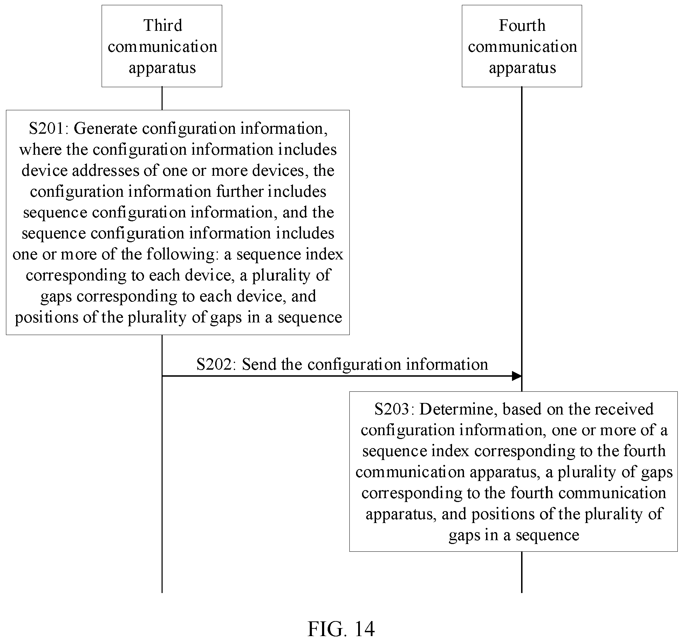

FIG. 14 is a schematic flowchart of an information exchange method according to an embodiment of this application. A third communication apparatus in the method may be a PAN coordinator in FIG. 1 or FIG. 2, and a fourth communication apparatus may be any device other than the PAN coordinator in FIG. 1 or FIG. 2. As shown in FIG. 14, the information exchange method includes but is not limited to the following steps.

S201: The third communication apparatus generates configuration information, where the configuration information includes device addresses of one or more devices, the configuration information further includes sequence configuration information, and the sequence configuration information includes one or more of the following: a sequence index corresponding to each device, a plurality of gaps corresponding to each device, or positions of the plurality of gaps in a sequence. S202: The third communication apparatus sends the configuration information. For example, the third communication apparatus sends the configuration information in a broadcast manner. Correspondingly, one or more communication apparatuses receive the configuration information. It can be understood that the device address identifies a device. The device address in this embodiment of this application may be a complete address, for example, a complete MAC address, or may be a part of a complete address, for example, first 16 bits or first 8 bits of a MAC address. An implementation of the device address is not limited in this embodiment of this application. In some embodiments, the device address included in the configuration information may alternatively be replaced with a device identifier.

Optionally, the sequence configuration information is used to determine a preamble sequence. In a possible implementation, the sequence configuration information includes one or more of the following: a sequence index corresponding to each of the one or more devices, a plurality of gaps corresponding to each device, or positions of the plurality of gaps in a sequence. In another possible implementation, the one or more devices may be grouped into M device groups, each device group includes at least one device, and devices in one device group are configured to jointly complete one service. One device group corresponds to one sequence index, one group of gaps (which may include a plurality of gaps), and positions of the group of gaps in a sequence. M is an integer greater than or equal to 1. The sequence configuration information includes one or more of the following: a sequence index corresponding to each of the M device groups, a group of gaps corresponding to each device group, or positions of the group of gaps in a sequence.

For example, a gap may indicate a quantity of consecutive 0s inserted at a position in a sequence. For example, each device corresponds to four gaps (which may also be understood as a group of gaps, that is, each device corresponds to one group of gaps), which are a gap 1 (gap 1), a gap 2 (gap 2), a gap 3 (gap 3), and a gap 4 (gap 4) respectively. The gap 1 indicates a quantity of consecutive 0s inserted at a first position in a sequence. For example, the first position is between an (N/4)^{th} element and an [(N/4)+1]^{th} element of the sequence. The gap 2 indicates a quantity of consecutive 0s inserted at a second position in the sequence. For example, the second position is between an (N/2)^{th} element and an [(N/2)+1]^{th} element of the sequence. The gap 3 indicates a quantity of consecutive 0s inserted at a third position in the sequence. For example, the third position is between an (3N/4)^{th} element and an [(3N/4)+1]^{th} element of the sequence. The gap 4 indicates a quantity of consecutive 0s inserted at a fourth position in the sequence. For example, the fourth position is after an N^{th} element of the sequence. N represents a length of the sequence, and the sequence belongs to a sequence set.

For example, the sequence index identifies a sequence in the sequence set, and devices that are in the one or more devices and that are configured to jointly complete a service correspond to a same sequence index. In other words, a plurality of devices may correspond to one sequence index. Devices that are in the one or more devices and that are configured to complete different services correspond to different sequence indexes. In other words, the devices that execute different services correspond to different sequence indexes. For example, the configuration information includes eight device addresses, which are respectively device addresses of a device 1 to a device 8. The sequence configuration information includes sequence indexes respectively corresponding to the device 1 to the device 8. The device 1 to the device 3 are configured to complete a positioning service, the device 4 to the device 7 are configured to complete a ranging service, and the device 8 is configured to complete a sensing service. In this case, the device 1 to the device 3 correspond to one sequence index, the device 4 to the device 7 correspond to another sequence index, and the device 8 corresponds to another sequence index. The three sequence indexes are different from each other.

Optionally, at least some sequences in the sequence set have a zero cross-correlation zone. For example, the sequence set includes at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0. For details of elements and features of sequences in the sequence set, refer to the descriptions in embodiment 1. Details are not described herein again. It can be understood that sequence indexes of sequences are not shown in Table 1. In actual application, sequence indexes may be set for the sequences in Table 1, and one sequence index identifies one sequence in Table 1.

S203: The fourth communication apparatus determines, based on the received configuration information, one or more of a sequence index corresponding to the fourth communication apparatus, a plurality of gaps corresponding to the fourth communication apparatus, and positions of the plurality of gaps in a sequence.

Optionally, after receiving the configuration information broadcast by the third communication apparatus, the one or more communication apparatuses may determine one or more of sequence indexes corresponding to the one or more communication apparatuses, a plurality of gaps corresponding to the one or more communication apparatuses, and positions of the plurality of gaps in a sequence. For ease of description, that the fourth communication apparatus receives the configuration information is used as an example below for description.

After receiving the configuration information, the fourth communication apparatus searches, based on the device addresses of the one or more devices included in the configuration information, the sequence configuration information included in the configuration information for one or more of a sequence index corresponding to a device matching a device address of the fourth communication apparatus, a plurality of gaps corresponding to the device matching the device address of the fourth communication apparatus, and positions of the plurality of gaps in a sequence. In a possible implementation, if the sequence configuration information includes the sequence index corresponding to each device, the fourth communication apparatus may determine a plurality of gaps corresponding to the fourth communication apparatus and positions of the plurality of gaps in a sequence. For a specific determining manner, refer to the related descriptions in embodiment 1. Details are not described herein again. In another possible implementation, if the sequence configuration information includes the plurality of gaps corresponding to each device, the fourth communication apparatus may determine a target sequence corresponding to the fourth communication apparatus and a position of each gap in the target sequence. For a manner of determining the target sequence and the position of each gap in the target sequence, refer to the related descriptions in embodiment 1. Details are not described herein again. In still another possible implementation, if the sequence configuration information includes the positions of the plurality of gaps in the sequence, the fourth communication apparatus may determine a target sequence and a plurality of gaps corresponding to the fourth communication apparatus. For a manner of determining the target sequence and the plurality of gaps, refer to the related descriptions in embodiment 1. Details are not described herein again.

After obtaining the target sequence and the plurality of gaps corresponding to the fourth communication apparatus, and the positions of the plurality of gaps in the target sequence, the fourth communication apparatus generates a preamble sequence based on the target sequence, the plurality of gaps corresponding to the fourth communication apparatus, and the positions of the plurality of gaps in the sequence, and sends the PPDU, where the PPDU includes the preamble sequence. For a manner of generating the preamble sequence, refer to embodiment 1. Details are not described herein again.

It can be understood that, when this embodiment of this application is implemented in combination with embodiment 1, a first communication apparatus in embodiment 1 may be the third communication apparatus or the fourth communication apparatus in this embodiment of this application, to perform a corresponding operation.

The coordinator (coordinator) in this embodiment of this application configures different sequence indexes for the devices configured to complete different services, where the sequence indexes identify sequences in the sequence set. At least some sequences in the sequence set have a zero correlation zone (including a zero autocorrelation zone and a zero cross-correlation zone). In this way, interference caused by cross-correlation side lobes between at least some communication apparatuses is relatively small, thereby improving an anti-interference capability of a UWB system. In addition, because the preamble sequence in this embodiment of this application is newly designed, the preamble sequence does not interfere with an existing UWB device.

### Embodiment 3

Embodiment 3 of this application mainly describes a preamble sequence with a quite small amplitude of a cross-correlation side lobe.

Optionally, a UWB-based PPDU transmission method provided in this embodiment of this application may be applied to a scenario such as ranging, positioning, or sensing between one node and another node, or may be applied to a scenario such as ranging, positioning, or sensing between one node and a plurality of nodes, or may be further applied to a scenario such as ranging, positioning, or sensing between a plurality of nodes and other nodes. This is not limited in this embodiment of this application.

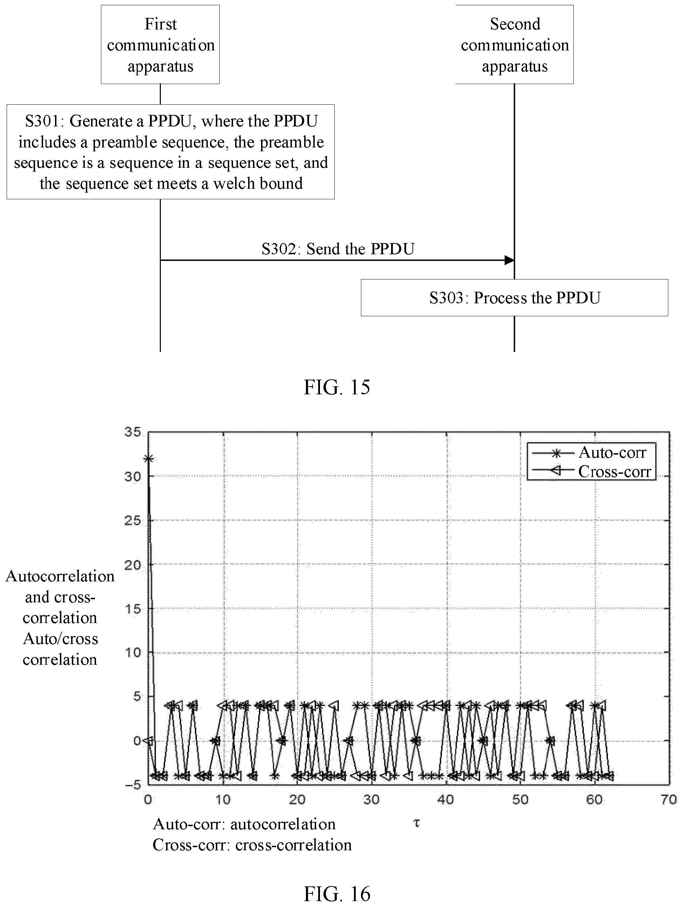

FIG. 15 is another schematic flowchart of a UWB-based PPDU transmission method according to an embodiment of this application. A first communication apparatus and a second communication apparatus in the method may be any two devices that can perform data transmission in FIG. 1 or FIG. 2. As shown in FIG. 15, the UWB-based PPDU transmission method includes but is not limited to the following steps.

S301: The first communication apparatus generates a PPDU, where the PPDU includes a preamble sequence, the preamble sequence is a sequence in a sequence set, and the sequence set meets a welch bound.

S302: The first communication apparatus sends the PPDU.

Correspondingly, the second communication apparatus receives the PPDU.

S303: The second communication apparatus processes the PPDU.

Optionally, the preamble sequence may be carried in a synchronization (SYNC) field of the PPDU. For a specific carrying manner, refer to FIG. 4. Details are not described herein again. In this embodiment of this application, a frame structure of the PPDU may include only a synchronization (SYNC) field, and optionally include a start-of-frame delimiter (SFD) field. The frame structure of the PPDU in this embodiment of this application may alternatively be any frame structure shown in FIG. 3. This is not limited in this embodiment of this application.

Optionally, the preamble sequence may be a sequence in the sequence set, or the preamble sequence is obtained by repeating a sequence in the sequence set one or more times, and the sequence set meets the welch bound. In a possible implementation, the preamble sequence may be a sequence that is in the sequence set and that is determined by the first communication apparatus and the second communication apparatus through negotiation. In an example, the first communication apparatus and the second communication apparatus may determine the preamble sequence by negotiating a sequence index. In another example, if there is only one sequence of a same length in the sequence set, the first communication apparatus and the second communication apparatus may alternatively determine the preamble sequence by negotiating a sequence length. In another possible implementation, the preamble sequence may be configured by a PAN coordinator (coordinator) shown in FIG. 1 or FIG. 2 for the first communication apparatus and the second communication apparatus. For example, the coordinator (coordinator) broadcasts configuration information, where the configuration information includes sequence configuration information, and the sequence configuration information includes a sequence index corresponding to the first communication apparatus and a sequence index corresponding to the second communication apparatus. The sequence index identifies a sequence in the sequence set. The sequence index corresponding to the first communication apparatus is the same as the sequence index corresponding to the second communication apparatus. A sequence identified by the sequence index corresponding to the first communication apparatus is the foregoing preamble sequence. It can be understood that the coordinator herein may be the first communication apparatus, the second communication apparatus, or a communication apparatus other than the first communication apparatus and the second communication apparatus in a UWB network. This is not limited in this embodiment of this application.

It can be understood that periodic tolerance (periodic tolerance) of the sequence set has a lower bound (that is, a minimum value), and is defined as a welch bound. A sequence set A={*a₁*, *a₂*, *..., a_{K}*} including K sequences with a length N is used as an example. A maximum value θₐ of a periodic autocorrelation side lobe and a maximum periodic cross-correlation value θ_{c} in the sequence set A are as follows: ${θ}_{a} = max \left(\left|{R}_{{a}_{u}}\left(τ\right)\right|:1\leq τ\leq N-1,1\leq u\leq K\right)$ ${θ}_{c} = max \left(\left|{R}_{{a}_{u} , {a}_{ν}}\left(τ\right)\right|:0\leq τ\leq N-1,1\leq u\neq ν\leq K\right)$

*R_{aᵤ}*(τ) is a periodic autocorrelation function of a sequence *aᵤ*, and *R*_{*a*ᵤ,*a*ᵥ}(τ) is a periodic cross-correlation function of *aᵤ* and *aᵥ.*

Periodic tolerance (periodic tolerance) of the sequence set A is θₘₐₓ, which meets the following condition: ${θ}_{max} = max \left\{{θ}_{a}, {θ}_{c}\right\}$

Theoretically, θₘₐₓ (that is, the periodic tolerance of the sequence set A) has a lower bound, namely, a minimum value, that is: ${θ}_{max} \geq E \sqrt{\frac{K - 1}{NK - 1}}$

E represents energy of each sequence in the sequence set A, and may be equivalent to a quantity of non-zero elements in the sequence. For infinite K and N, there is: ${θ}_{max} being greater than or approaching \frac{E}{\sqrt{N}}$

It can be further understood that, the sequence set meeting the welch bound means that the sequence set meets the foregoing formula (3-4) or the foregoing formula (3-5).

The following describes in detail a method for constructing a sequence set that meets the welch bound according to this embodiment of this application.

A possible manner of constructing a sequence set is as follows:
For any odd integer m, let n=2m. Let N=2ⁿ-1, T=2^{m}-1, α is a primitive element on a finite field GF(2ⁿ), and σ∈GF(2ⁿ)\GF(2^{m}), where the symbol "\" indicates that σ is an element in GF(2ⁿ) but is not an element in GF(2^{m}). A set is defined as follows: $Γ = \left\{{α}^{T min \left\{i, j\right\}}:{α}^{Ti}+{α}^{Tj}=1,1\leq i,j\leq {2}^{m}-2\right\} ∪ \left\{0\right\}$

T ternary sequence sets **S**={*sᵢ* : *i* ∈Γ} with a length of N may be obtained, where: ${s}_{i} = \left\{\begin{matrix}0 ; {Tr}_{1}^{n} \left({α}^{t}\right) = 0 , 0 \leq t \leq N - 1 \\ {\left(-1\right)}^{{Tr}_{1}^{m} \left({Tr}_{m}^{n}{\left({α}^{t}\right)}^{3}\right) + {Tr}_{1}^{n} \left(\left(i+σ\right){α}^{t}\right)} ; {Tr}_{1}^{n} \left({α}^{t}\right) = 1 , 0 \leq t \leq N - 1\end{matrix}\right.$

Sequences generated in the foregoing manner are shown in the following Table 2. It can be understood that each sequence in Table 2 is a ternary sequence, and includes three types of elements: 1, -1, and 0. It can be further understood that, in Table 2, a sequence parameter N represents a sequence length of a sequence, a sequence parameter E represents energy (which is equal to a quantity of non-zero elements in the sequence) of the sequence, a sequence parameter K represents a quantity of sequences included in a sequence set, and a sequence parameter θₘₐₓ represents periodic tolerance of the sequence set. It can be further understood that each sequence parameter in Table 2 meets: ${θ}_{max} approaches \frac{E}{\sqrt{N}}$

In other words, a sequence set shown in Table 2 meets the welch bound.

**Table 2**

| Sequence parameters | Representative sequences | Used channel |
|---|---|---|
| N=63 | Sequence 1: 0, 0, 0, -1, 0, 0, -1, 0, 0, 0, 0, 1, 1, -1, 0, 0, 0, 0, 0, -1, 0, -1, 1, 1, 1, 1, -1,0,0, -1,0, 1, 0, -1,0,0,0, 1, -1,0,0, 1, -1, 1, -1, 0, 1, -1, -1, 0, -1, 0, 1, -1, 0, 1, 0, 0, 1, 1, 0, -1, 1 | One or more of channels numbered 0 to 15 |
| E=32 | | |
| K=4 | | |
| θₘₐₓ=4 | Sequence 2: 0, 0, 0, -1, 0, 0, 1, 0, 0, 0, 0, -1, 1, -1, 0, 0, 0, 0, 0, 1, 0, 1, 1, -1, 1, -1, 1, 0, 0, -1, 0, -1, 0, -1, 0, 0, 0, 1, -1,0,0, 1, 1, 1, -1, 0, 1, 1, 1, 0, -1, 0, 1, -1, 0, -1, 0, 0, -1, -1, 0, 1, -1 | |
| | Sequence 3: 0, 0, 0, -1, 0, 0, -1, 0, 0, 0, 0, 1, -1, -1, 0, 0, 0, 0, 0, -1, 0, 1, -1, 1, 1, 1, -1,0,0, -1,0, -1,0, 1, 0, 0, 0, 1, 1, 0, 0, 1, 1, 1, -1,0, -1, 1, -1,0, 1, 0, -1, 1, 0, -1, 0, 0, 1, -1, 0, 1, -1 | |
| | Sequence 4: 0, 0, 0, -1, 0, 0, 1, 0, 0, 0, 0, -1, -1, -1, 0, 0, 0, 0, 0, 1, 0, -1, -1, -1, 1, -1, 1, 0, 0, -1,0, 1, 0, 1, 0, 0, 0, 1, 1, 0, 0, 1, -1, 1, -1, 0, -1, -1, 1, 0, 1, 0, -1, 1, 0, 1, 0, 0, -1, 1, 0, -1, 1 | |
| N=1023 | Sequence 1: 0 0 0 0 0 1 0 1 0 0 -1 -1 0 | One or more of channels numbered 0 to 15 |
| E=512 | 1 1 0 0 1 0 -1 1 0 1 1 0 0 1 -1 | |
| K=16 | -1 -1 0 0 0 0 -1 1 0 1 -1 1 1 0 0 0 -1 0 1 0 0 -1 0 0 1 1 -1 1 -1 -1 -1 0 0 -1 0 -1 0 1 0 1 1 0 -1 -1 0 1 1 -1 1 0 -1 0 1 0 0 1 0 0 0 1 1 -1 0 0 -1 1 0 0 0 -1 -1 0 0 -1 0 0 1 1 -1 0 -1 1 1 -1 -1 1 -1 -1 1 -1 0 0 0 0 -1 0 0 1 -1 0 0 0 1 0 0 0 1 -1 -1 -1 0 1 -1 1 -1 0 0 1 -1 0 1 1 -1 -1 1 0 0 1 -1 0 0 1 -1 -1 0 -1 0 0 -1 -1 0 -1 0 0 0 1 -1 0 1 -1 -1 0 0 0 0 0 -1 -1 1 0 0 0 0 0 0 -1 1 0 1 1 0 1 0 0 -1 0 0 0 0 1 -1 0 -1 0 1 -1 0 1 -1 1 1 -1 -1 0 -1 -1 -1 1 -1 0 -1 1 1 0 -1 0 -1 0 0 0 0 0 0 0 0 1 -1 0 0 1 0 1 1 1 1 1 0 -1 0 1 0 1 1 0 0 -1 0 -1 0 0 1 1 -1 1 1 0 -1 0 0 0 1 -1 -1 1 1 1 1 -1 0 -1 0 0 1 1 1 -1 0 0 -1 0 1 1 1 0 1 0 -1 1 0 0 0 1 -1 0 1 -1 0 0 0 0 1 -1 1 0 1 -1 0 0 1 -1 0 -1 0 0 -1 1 -1 0 0 0 1 -1 0 1 0 0 0 0 -1 0 -1 0 0 0 -1 0 1 0 -1 0 0 0 0 -1 0 0 0 0 0 0 -1 1 -1 1 1 0 0 -1 0 0 0 -1 0 0 0 0 0 1 -1 -1 1 0 0 0 1 -1 1 0 0 0 1 0 0 -1 0 1 -1 0 0 0 0 0 0 1 0 0 1 1 -1 0 0 1 1 -1 0 0 -1 0 -1 0 0 0 1 1 1 0 1 -1 -1 0 -1 -1 -1 0 0 -1 1 0 1 0 -1 -1 1 1 1 -1 0 0 -1 -1 -1 0 -1 -1 0 -1 1 1 0 0 -1 0 0 -1 0 0 0 1 0 -1 0 0 0 0 0 1 0 0 -1 0 -1 0 0 0 0 | |
| θₘₐₓ=16 | | |
| | 1 1 0 0 0 1 -1 -1 0 -1 0 -1 0 1 0 0 0 1 -1 0 0 -1 1 0 1 -1 0 -1 1 0 1 0 -1 -1 0 0 -1 1 -1 0 0 0 0 -1 0 1 1 1 0 1 1 -1 -1 0 1 1 1 0 0 0 1 0 1 -1 0 1 0 1 0 -1 0 -1 0 1 -1 1 -1 -1 0 0 0 -1 0 0 0 0 -1 1 1 -1 0 -1 0 1 1 0 -1 0 1 1 -1 0 1 -1 0 -1 0 1 0 0 0 1 0 0 0 1 0 -1 1 0 0 0 -1 0 0 1 1 1 1 0 -1 -1 0 -1 0 0 0 0 0 0 -1 0 -1 1 1 -1 1 -1 -1 0 1 -1 0 1 -1 0 0 0 -1 1 1 1 -1 0 1 -1 0 0 -1 0 0 1 0 -1 0 -1 0 0 1 0 -1 0 1 -1 0 -1 0 0 1 1 0 0 0 0 0 0 0 0 0 -1 0 0 0 1 -1 0 -1 0 -1 0 0 1 1 0 0 1 0 0 0 1 -1 0 0 0 1 0 -1 0 1 -1 0 0 0 0 -1 0 1 0 1 0 1 0 0 -1 1 -1 0 1 0 1 -1 1 0 0 -1 0 -1 -1 0 0 1 0 0 0 0 -1 0 0 1 0 0 0 0 0 -1 0 -1 -1 0 -1 -1 1 0 -1 -1 0 0 0 -1 0 1 1 1 1 0 -1 -1 0 0 0 0 0 -1 1 0 0 0 0 -1 -1 0 0 -1 1 1 1 -1 0 0 0 0 0 0 0 1 0 -1 0 1 -1 1 0 0 0 0 1 -1 1 1 1 -1 0 -1 0 -1 1 1 -1 0 -1 0 0 0 0 -1 1 -1 0 0 -1 0 0 0 0 0 0 0 1 1 -1 0 1 0 0 0 -1 0 -1 1 -1 0 0 1 -1 -1 1 0 -1 0 0 1 0 1 1 0 1 0 0 0 1 0 0 1 1 0 1 0 -1 0 1 1 -1 0 -1 0 0 1 0 0 1 0 -1 1 -1 0 0 0 -1 1 1 1 0 0 -1 1 1 1 -1 -1 0 0 0 -1 -1 0 0 0 0 0 -1 0 0 0 0 -1 0 1 1 0 0 -1 -1 0 0 0 | |
| | 0 -1 0 0 0 -1 0 0 1 0 0 -1 0 0 1 1 0 1 1 -1 0 1 0 0 0 0 0 1 -1 0 1 0 0 -1 0 -1 0 0 -1 0 -1 1 1 1 0 0 -1 0 0 1 -1 0 0 1 1 0 0 -1 0 -1 0 1 1 1 -1 | |
| | Sequence 2: 0 0 0 0 0 1 0 1 0 0 -1 1 0 -1 1 0 0 1 0 1 -1 0 1 1 0 0 1 -1 1 1 0 0 0 0 1 1 0 -1 -1 1 1 0 0 0 -1 0 1 0 0 -1 0 0 -1 -1 1 -1 -1 1 1 0 0 1 0 1 0 -1 0 -1 1 0 -1 -1 0 1 1 -1 1 0 1 0 1 0 0 1 0 0 0 -1 -1 -1 0 0 1 1 0 0 0 -1 1 0 0 -1 0 0 -1 -1 1 0 -1 -1 1 -1 -1 -1 1 1 -1 1 0 0 0 0 1 0 0 -1 1 0 0 0 1 0 0 0 -1 1 -1 1 0 -1 1 1 -1 0 0 -1 -1 0 -1 1 -1 -1 1 0 0 -1 -1 0 0 1 -1 1 0 -1 0 0 -1 1 0 1 0 0 0 -1 1 0 -1 -1 -1 0 0 0 0 0 -1 -1 1 0 0 0 0 0 0 -1 1 0 -1 1 0 1 0 0 -1 0 0 0 0 -1 -1 0 1 0 1 -1 0 1 -1 1 1 -1 1 0 1 1 -1 1 -1 0 1 -1 1 0 -1 0 -1 0 0 0 0 0 0 0 0 1 -1 0 0 1 0 -1 -1 -1 1 1 0 1 0 1 0 -1 1 0 0 -1 0 1 0 0 1 -1 1 -1 1 0 1 0 0 0 -1 1 -1 -1 1 -1 -1 1 0 1 0 0 1 -1 -1 1 0 0 1 0 -1 -1 -1 0 1 0 -1 1 0 0 0 1 1 0 -1 -1 0 0 0 0 -1 -1 1 0 1 1 0 0 1 -1 0 1 0 0 -1 -1 1 0 0 0 1 1 0 -1 0 0 0 0 1 0 -1 0 0 0 1 0 1 0 1 0 0 0 0 1 0 0 0 0 0 0 -1 1 -1 -1 1 0 0 1 0 0 0 1 0 0 0 0 0 1 -1 -1 | |
| | -1 0 0 0 1 1 1 0 0 0 1 0 0 1 0 -1 1 0 0 0 0 0 0 1 0 0 -1 -1 1 0 0 -1 1 1 0 0 1 0 1 0 0 0 -1 -1 1 0 1 1 -1 0 -1 1 -1 0 0 1 1 0 -1 0 -1 -1 -1 1 1 1 0 0 1 -1 1 0 -1 1 0 -1 1 1 0 0 1 0 0 1 0 0 0 -1 0 -1 0 0 0 0 0 1 0 0 1 0 1 0 0 0 0 -1 1 0 0 0 1 1 -1 0 -1 0 -1 0 -1 0 0 0 -1 1 0 0 -1 1 0 -1 -1 0 -1 1 0 1 0 -1 -1 0 0 -1 1 1 0 0 0 0 1 0 1 -1 -1 0 1 -1 -1 -1 0 -1 -1 1 0 0 0 1 0 1 1 0 1 0 1 0 1 0 1 0 -1 -1 -1 -1 -1 0 0 0 -1 0 0 0 0 1 1 1 1 0 1 0 1 1 0 -1 0 1 1 1 0 1 1 0 -1 0 1 0 0 0 -1 0 0 0 -1 0 -1 -1 0 0 0 -1 0 0 -1 -1 -1 -1 0 1 1 0 -1 0 0 0 0 0 0 -1 0 -1 -1 -1 -1 1 1 1 0 -1 1 0 1 -1 0 0 0 -1 -1 1 -1 -1 0 -1 1 0 0 -1 0 0 -1 0 1 0 1 0 0 1 0 1 0 -1 -1 0 -1 0 0 1 -1 0 0 0 0 0 0 0 0 0 -1 0 0 0 -1 1 0 1 0 -1 0 0 1 -1 0 0 1 0 0 0 -1 1 0 0 0 1 0 -1 0 -1 -1 0 0 0 0 1 0 1 0 -1 0 -1 0 0 -1 -1 1 0 1 0 1 -1 -1 0 0 1 0 1 1 0 0 1 0 0 0 0 1 0 0 -1 0 0 0 0 0 -1 0 -1 1 0 -1 -1 1 0 -1 1 0 0 0 -1 0 1 -1 -1 1 0 1 1 0 0 0 0 0 -1 1 0 0 0 0 1 -1 0 0 -1 1 -1 -1 -1 0 0 0 0 0 0 0 1 0 -1 0 -1 -1 -1 0 0 0 0 -1 -1 1 -1 1 1 0 1 0 -1 1 -1 -1 0 1 0 0 0 0 1 1 -1 0 0 1 | |
| | 0 0 0 0 0 0 0 1 1 -1 0 1 0 0 0 1 0 -1 -1 1 0 0 -1 -1 1 -1 0 1 0 0 1 0 -1 -1 0 1 0 0 0 -1 0 0 -1 -1 0 -1 0 -1 0 -1 1 1 0 -1 0 0 1 0 0 -1 0 1 -1 1 0 0 0 -1 -1 1 -1 0 0 1 1 -1 -1 -1 1 0 0 0 -1 1 0 0 0 0 0 -1 0 0 0 0 1 0 1 -1 0 0 -1 -1 0 0 0 0 1 0 0 0 1 0 0 -1 0 0 1 0 0 -1 -1 0 -1 1 -1 0 1 0 0 0 0 0 1 -1 0 -1 0 0 -1 0 1 0 0 -1 0 1 -1 -1 1 0 0 1 0 0 -1 1 0 0 1 1 0 0 -1 0 1 0 -1 1 -1 -1 | |
| | Sequence 3: 0 0 0 0 0 1 0 1 0 0 -1 1 0 1 1 0 0 1 0 -1 1 0 -1 1 0 0 -1 -1 -1 -1 0 0 0 0 -1 1 0 1 1 -1 -1 0 0 0 -1 0 1 0 0 1 0 0 1 1 -1 -1 1 1 1 0 0 -1 0 1 0 1 0 1 -1 0 -1 1 0 -1 -1 -1 1 0 -1 0 1 0 0 1 0 0 0 1 1 1 0 0 -1 1 0 0 0 -1 -1 0 0 1 0 0 -1 -1 1 0 1 -1 -1 -1 -1 -1 1 -1 -1 -1 0 0 0 0 1 0 0 1 1 0 0 0 -1 0 0 0 -1 1 -1 -1 0 1 -1 -1 -1 0 0 -1 -1 0 1 1 -1 -1 1 0 0 1 1 0 0 1 -1 -1 0 1 0 0 -1 -1 0 1 0 0 0 1 1 0 -1 -1 -1 0 0 0 0 0 1 1 1 0 0 0 0 0 0 1 1 0 -1 1 0 -1 0 0 -1 0 0 0 0 1 1 0 1 0 -1 1 0 -1 -1 -1 -1 1 -1 0 -1 1 -1 -1 1 0 1 1 -1 0 1 0 1 0 0 0 0 0 0 0 0 1 1 0 0 1 0 -1 -1 -1 -1 1 0 -1 0 -1 0 -1 1 0 0 1 0 1 0 0 -1 1 1 1 1 0 1 0 0 0 -1 -1 1 -1 1 | |
| | 1 1 1 0 -1 0 0 -1 -1 1 1 0 0 1 0 1 1 1 0 1 0 -1 -1 0 0 0 -1 1 0 1 1 0 0 0 0 1 -1 1 0 -1 1 0 0 1 1 0 -1 0 0 -1 1 1 0 0 0 -1 -1 0 -1 0 0 0 0 1 0 1 0 0 0 1 0 1 0 -1 0 0 0 0 -1 0 0 0 0 0 0 -1 -1 -1 -1 1 0 0 1 0 0 0 -1 0 0 0 0 0 1 -1 1 1 0 0 0 -1 -1 1 0 0 0 1 0 0 1 0 -1 -1 0 0 0 0 0 0 1 0 0 -1 1 -1 0 0 -1 -1 -1 0 0 -1 0 -1 0 0 0 1 -1 1 0 1 -1 -1 0 -1 1 1 0 0 1 -1 0 -1 0 -1 -1 1 -1 1 1 0 0 1 -1 1 0 -1 -1 0 -1 1 -1 0 0 -1 0 0 1 0 0 0 -1 0 1 0 0 0 0 0 1 0 0 -1 0 -1 0 0 0 0 -1 1 0 0 0 -1 1 1 0 1 0 -1 0 1 0 0 0 -1 -1 0 0 -1 1 0 -1 1 0 -1 1 0 1 0 -1 -1 0 0 -1 -1 1 0 0 0 0 -1 0 -1 1 -1 0 -1 1 -1 1 0 -1 -1 1 0 0 0 -1 0 -1 1 0 -1 0 1 0 1 0 -1 0 -1 -1 -1 -1 1 0 0 0 1 0 0 0 0 1 1 1 1 0 1 0 -1 1 0 -1 0 -1 -1 1 0 1 1 0 1 0 -1 0 0 0 1 0 0 0 1 0 -1 1 0 0 0 -1 0 0 1 -1 -1 1 0 1 1 0 -1 0 0 0 0 0 0 1 0 -1 -1 1 -1 -1 -1 -1 0 -1 -1 0 -1 1 0 0 0 -1 1 1 1 1 0 1 1 0 0 1 0 0 1 0 1 0 1 0 0 -1 0 -1 0 1 -1 0 1 0 0 -1 -1 0 0 0 0 0 0 0 0 0 1 0 0 0 1 -1 0 -1 0 -1 0 0 -1 1 0 0 1 0 0 0 -1 1 0 0 0 1 0 1 0 -1 1 0 0 0 0 1 0 1 0 -1 0 -1 0 0 -1 -1 -1 0 1 0 -1 -1 1 0 0 1 | |
| | 0 1 1 0 0 1 0 0 0 0 1 0 0 -1 0 0 0 0 0 1 0 1 -1 0 -1 1 1 0 1 -1 0 0 0 1 0 1 1 -1 -1 0 -1 -1 0 0 0 0 0 -1 1 0 0 0 0 1 1 0 0 1 -1 -1 -1 1 0 0 0 0 0 0 0 1 0 1 0 1 -1 -1 0 0 0 0 -1 1 -1 1 -1 1 0 1 0 -1 -1 -1 -1 0 1 0 0 0 0 -1 -1 1 0 0 1 0 0 0 0 0 0 0 -1 1 1 0 1 0 0 0 -1 0 1 -1 -1 0 0 1 -1 1 -1 0 -1 0 0 1 0 1 -1 0 1 0 0 0 -1 0 0 -1 1 0 1 0 1 0 1 -1 -1 0 1 0 0 -1 0 0 -1 0 -1 -1 1 0 0 0 -1 -1 -1 -1 0 0 -1 -1 1 1 -1 -1 0 0 0 -1 1 0 0 0 0 0 1 0 0 0 0 -1 0 1 -1 0 0 1 -1 0 0 0 0 -1 0 0 0 1 0 0 1 0 0 -1 0 0 -1 -1 0 -1 -1 1 0 1 0 0 0 0 0 -1 1 0 1 0 0 1 0 1 0 0 -1 0 1 1 1 1 0 0 -1 0 0 1 -1 0 0 -1 -1 0 0 1 0 -1 0 -1 -1 1 1 | |
| | Sequence 4: 0 0 0 0 0 1 0 1 0 0 -1 -1 0 -1 1 0 0 1 0 -1 1 0 1 1 0 0 -1 -1 -1 -1 0 0 0 0 -1 1 0 -1 1 1 -1 0 0 0 1 0 1 0 0 1 0 0 -1 -1 -1 -1 1 -1 1 0 0 1 0 1 0 1 0 -1 -1 0 -1 -1 0 1 -1 -1 -1 0 1 0 -1 0 0 -1 0 0 0 -1 1 -1 0 0 -1 -1 0 0 0 -1 1 0 0 -1 0 0 -1 -1 1 0 1 1 1 -1 1 1 -1 -1 1 1 0 0 0 0 1 0 0 -1 -1 0 0 0 -1 0 0 0 -1 -1 1 -1 0 1 -1 1 1 0 0 1 1 0 -1 -1 -1 -1 1 0 0 1 1 0 0 -1 -1 1 0 -1 0 0 -1 -1 0 -1 0 0 0 -1 1 0 -1 1 | |
| | 1 0 0 0 0 0 1 1 1 0 0 0 0 0 0 1 1 0 -1 1 0 -1 0 0 1 0 0 0 0 1 -1 0 -1 0 1 1 0 1 1 1 1 1 1 0 -1 -1 -1 1 -1 0 -1 1 -1 0 -1 0 1 0 0 0 0 0 0 0 0 -1 -1 0 0 1 0 1 -1 -1 1 1 0 1 0 -1 0 -1 -1 0 0 -1 0 1 0 0 1 -1 -1 -1 1 0 1 0 0 0 -1 -1 1 -1 -1 1 1 1 0 1 0 0 1 -1 1 -1 0 0 1 0 1 -1 1 0 1 0 -1 -1 0 0 0 1 1 0 -1 -1 0 0 0 0 1 1 1 0 -1 1 0 0 -1 1 0 -1 0 0 -1 -1 1 0 0 0 1 1 0 1 0 0 0 0 1 0 -1 0 0 0 -1 0 1 0 -1 0 0 0 0 1 0 0 0 0 0 0 1 -1 1 -1 1 0 0 1 0 0 0 -1 0 0 0 0 0 -1 1 1 1 0 0 0 1 -1 1 0 0 0 -1 0 0 -1 0 1 -1 0 0 0 0 0 0 1 0 0 -1 -1 1 0 0 1 1 1 0 0 1 0 1 0 0 0 -1 1 1 0 -1 -1 1 0 1 -1 1 0 0 -1 -1 0 1 0 -1 -1 -1 1 -1 1 0 0 -1 -1 1 0 1 1 0 -1 -1 -1 0 0 1 0 0 -1 0 0 0 1 0 -1 0 0 0 0 0 1 0 0 -1 0 1 0 0 0 0 1 1 0 0 0 1 -1 -1 0 -1 0 1 0 1 0 0 0 -1 1 0 0 1 -1 0 -1 -1 0 -1 1 0 -1 0 -1 1 0 0 1 1 1 0 0 0 0 1 0 -1 -1 1 0 -1 1 -1 1 0 1 1 -1 0 0 0 -1 0 -1 -1 0 -1 0 -1 0 -1 0 -1 0 -1 -1 -1 -1 -1 0 0 0 1 0 0 0 0 -1 -1 -1 -1 0 1 0 1 -1 0 1 0 1 1 -1 0 -1 1 0 1 0 -1 0 0 0 1 0 0 0 1 0 1 1 0 0 0 1 0 0 -1 -1 1 1 0 -1 1 0 1 0 0 0 0 0 0 -1 0 1 -1 -1 -1 -1 -1 1 0 | |
| | 1 1 0 1 -1 0 0 0 -1 1 -1 -1 -1 0 1 1 0 0 -1 0 0 1 0 1 0 -1 0 0 -1 0 1 0 -1 1 0 1 0 0 1 1 0 0 0 0 0 0 0 0 0 -1 0 0 0 -1 1 0 -1 0 1 0 0 1 1 0 0 1 0 0 0 -1 1 0 0 0 -1 0 -1 0 -1 1 0 0 0 0 1 0 1 0 1 0 1 0 0 -1 -1 1 0 1 0 1 -1 1 0 0 1 0 -1 -1 0 0 1 0 0 0 0 1 0 0 1 0 0 0 0 0 -1 0 1 -1 0 -1 1 -1 0 1 1 0 0 0 1 0 -1 -1 -1 -1 0 -1 1 0 0 0 0 0 1 1 0 0 0 0 -1 -1 0 0 1 1 1 -1 -1 0 0 0 0 0 0 0 1 0 -1 0 -1 -1 1 0 0 0 0 1 1 -1 -1 -1 1 0 1 0 -1 1 -1 1 0 1 0 0 0 0 -1 -1 -1 0 0 1 0 0 0 0 0 0 0 -1 -1 -1 0 1 0 0 0 -1 0 1 -1 -1 0 0 1 -1 -1 1 0 1 0 0 -1 0 1 1 0 -1 0 0 0 1 0 0 -1 1 0 1 0 1 0 -1 1 -1 0 -1 0 0 -1 0 0 1 0 -1 -1 -1 0 0 0 -1 1 -1 1 0 0 -1 1 1 -1 1 1 0 0 0 -1 1 0 0 0 0 0 -1 0 0 0 0 1 0 -1 1 0 0 1 1 0 0 0 0 1 0 0 0 -1 0 0 1 0 0 -1 0 0 -1 1 0 -1 -1 1 0 1 0 0 0 0 0 -1 -1 0 1 0 0 1 0 1 0 0 1 0 -1 -1 -1 -1 0 0 1 0 0 -1 -1 0 0 -1 -1 0 0 -1 0 1 0 -1 1 -1 1 | |
| | Sequence 5: 0 0 0 0 0 1 0 1 0 0 1 1 0 1 -1 0 0 -1 0 1 -1 0 1 1 0 0 1 1 1 -1 0 0 0 0 1 1 0 1 1 -1 -1 0 0 0 -1 0 -1 0 0 -1 0 0 -1 -1 1 1 1 -1 1 0 0 1 0 1 0 -1 0 -1 -1 0 1 -1 0 | |
| | 1 1 -1 -1 0 -1 0 -1 0 0 -1 0 0 0 -1 1 -1 0 0 1 -1 0 0 0 -1 1 0 0 -1 0 0 1 -1 -1 0 1 -1 -1 1 1 -1 -1 1 -1 -1 0 0 0 0 -1 0 0 -1 1 0 0 0 -1 0 0 0 1 -1 1 -1 0 1 1 1 -1 0 0 -1 -1 0 -1 1 1 -1 1 0 0 1 -1 0 0 1 -1 -1 0 -1 0 0 -1 -1 0 1 0 0 0 -1 -1 0 -1 1 -1 0 0 0 0 0 1 1 1 0 0 0 0 0 0 1 -1 0 1 1 0 -1 0 0 -1 0 0 0 0 1 1 0 1 0 -1 -1 0 -1 1 1 1 1 -1 0 1 -1 -1 -1 -1 0 -1 1 -1 0 -1 0 -1 0 0 0 0 0 0 0 0 1 1 0 0 1 0 -1 1 1 1 -1 0 1 0 -1 0 1 -1 0 0 -1 0 -1 0 0 -1 1 -1 1 1 0 1 0 0 0 -1 1 1 -1 1 1 1 -1 0 -1 0 0 1 -1 1 1 0 0 -1 0 1 1 -1 0 -1 0 1 -1 0 0 0 -1 1 0 -1 -1 0 0 0 0 1 1 -1 0 1 -1 0 0 1 -1 0 -1 0 0 1 -1 1 0 0 0 1 -1 0 1 0 0 0 0 -1 0 1 0 0 0 1 0 1 0 -1 0 0 0 0 -1 0 0 0 0 0 0 1 1 1 1 -1 0 0 1 0 0 0 -1 0 0 0 0 0 1 1 1 -1 0 0 0 -1 1 -1 0 0 0 -1 0 0 1 0 -1 -1 0 0 0 0 0 0 1 0 0 -1 1 -1 0 0 -1 1 1 0 0 -1 0 1 0 0 0 1 -1 1 0 1 1 -1 0 1 -1 -1 0 0 -1 -1 0 1 0 1 1 1 -1 1 -1 0 0 -1 1 1 0 1 -1 0 1 1 -1 0 0 1 0 0 1 0 0 0 1 0 -1 0 0 0 0 0 -1 0 0 -1 0 -1 0 0 0 0 -1 -1 0 0 0 1 -1 1 0 1 0 -1 0 -1 0 0 0 1 -1 0 0 1 -1 0 -1 1 0 -1 -1 0 -1 0 -1 -1 0 0 1 -1 -1 0 0 0 0 -1 0 | |
| | 1 -1 1 0 1 1 1 -1 0 -1 -1 -1 0 0 0 -1 0 1 1 0 -1 0 -1 0 1 0 -1 0 -1 -1 -1 1 1 0 0 0 -1 0 0 0 0 -1 1 1 1 0 1 0 1 -1 0 -1 0 1 -1 1 0 1 1 0 -1 0 -1 0 0 0 -1 0 0 0 -1 0 1 -1 0 0 0 -1 0 0 1 1 -1 -1 0 -1 -1 0 -1 0 0 0 0 0 0 -1 0 1 -1 -1 -1 1 1 1 0 -1 1 0 -1 1 0 0 0 1 1 1 -1 1 0 1 1 0 0 1 0 0 -1 0 -1 0 1 0 0 -1 0 1 0 1 -1 0 -1 0 0 -1 1 0 0 0 0 0 0 0 0 0 1 0 0 0 1 1 0 -1 0 -1 0 0 1 -1 0 0 -1 0 0 0 -1 1 0 0 0 -1 0 1 0 -1 -1 0 0 0 0 1 0 -1 0 1 0 1 0 0 -1 1 1 0 1 0 -1 -1 -1 0 0 1 0 -1 1 0 0 1 0 0 0 0 1 0 0 1 0 0 0 0 0 1 0 1 -1 0 -1 1 -1 0 1 1 0 0 0 -1 0 1 1 -1 -1 0 1 -1 0 0 0 0 0 1 1 0 0 0 0 -1 -1 0 0 1 1 -1 -1 -1 0 0 0 0 0 0 0 -1 0 -1 0 -1 1 1 0 0 0 0 -1 1 1 1 1 1 0 -1 0 -1 1 1 -1 0 -1 0 0 0 0 1 1 1 0 0 -1 0 0 0 0 0 0 0 1 1 -1 0 -1 0 0 0 -1 0 1 1 -1 0 0 1 -1 -1 1 0 1 0 0 -1 0 1 1 0 -1 0 0 0 1 0 0 1 -1 0 -1 0 -1 0 1 1 -1 0 1 0 0 -1 0 0 1 0 1 -1 1 0 0 0 -1 -1 1 1 0 0 1 -1 1 -1 1 1 0 0 0 1 -1 0 0 0 0 0 -1 0 0 0 0 1 0 1 1 0 0 1 -1 0 0 0 0 1 0 0 0 1 0 0 -1 0 0 -1 0 0 -1 1 0 1 1 -1 0 1 0 0 0 0 0 1 -1 0 -1 0 0 -1 0 1 0 0 -1 0 -1 -1 1 -1 0 | |
| | 0 -1 0 0 1 -1 0 0 1 -1 0 0 1 0 -1 0 1 -1 -1 -1 | |
| | Sequence 6: 0 0 0 0 0 1 0 1 0 0 1 -1 0 1 -1 0 0 -1 0 -1 1 0 1 1 0 0 -1 1 -1 1 0 0 0 0 -1 1 0 1 -1 -1 1 0 0 0 1 0 -1 0 0 1 0 0 -1 -1 -1 1 -1 1 1 0 0 1 0 1 0 1 0 -1 1 0 1 -1 0 1 -1 -1 1 0 -1 0 1 0 0 1 0 0 0 -1 -1 -1 0 0 -1 1 0 0 0 -1 1 0 0 -1 0 0 1 -1 -1 0 -1 1 -1 1 -1 1 1 -1 1 -1 0 0 0 0 -1 0 0 -1 -1 0 0 0 1 0 0 0 1 1 -1 1 0 -1 -1 1 1 0 0 1 1 0 -1 -1 1 -1 1 0 0 -1 1 0 0 -1 -1 -1 0 -1 0 0 -1 1 0 -1 0 0 0 -1 -1 0 -1 -1 1 0 0 0 0 0 -1 -1 1 0 0 0 0 0 0 -1 -1 0 1 1 0 1 0 0 1 0 0 0 0 -1 1 0 -1 0 -1 1 0 -1 -1 1 1 -1 -1 0 -1 1 -1 -1 -1 0 1 -1 1 0 -1 0 1 0 0 0 0 0 0 0 0 -1 1 0 0 1 0 1 1 1 1 -1 0 1 0 1 0 1 1 0 0 -1 0 -1 0 0 -1 1 1 1 1 0 1 0 0 0 -1 -1 -1 -1 -1 -1 -1 -1 0 -1 0 0 1 -1 -1 -1 0 0 -1 0 -1 1 1 0 -1 0 1 1 0 0 0 -1 1 0 -1 -1 0 0 0 0 -1 -1 -1 0 -1 -1 0 0 -1 1 0 1 0 0 1 -1 1 0 0 0 1 -1 0 -1 0 0 0 0 -1 0 1 0 0 0 -1 0 1 0 1 0 0 0 0 -1 0 0 0 0 0 0 -1 -1 -1 1 -1 0 0 1 0 0 0 1 0 0 0 0 0 -1 -1 -1 1 0 0 0 -1 -1 -1 0 0 0 1 0 0 -1 0 1 1 0 0 0 0 0 0 1 0 0 -1 1 -1 0 0 1 1 1 0 0 -1 0 1 0 0 0 1 1 1 | |
| | 0 -1 -1 1 0 -1 1 1 0 0 1 1 0 -1 0 1 1 1 -1 -1 -1 0 0 1 1 1 0 -1 -1 0 1 -1 1 0 0 1 0 0 -1 0 0 0 -1 0 -1 0 0 0 0 0 -1 0 0 1 0 -1 0 0 0 0 1 -1 0 0 0 1 1 1 0 1 0 1 0 1 0 0 0 1 -1 0 0 -1 1 0 -1 1 0 -1 -1 0 1 0 -1 1 0 0 -1 -1 -1 0 0 0 0 -1 0 -1 -1 -1 0 -1 -1 1 1 0 1 1 1 0 0 0 1 0 -1 -1 0 1 0 1 0 -1 0 1 0 -1 -1 -1 1 1 0 0 0 1 0 0 0 0 1 -1 -1 -1 0 1 0 1 1 0 1 0 1 -1 -1 0 -1 1 0 1 0 1 0 0 0 1 0 0 0 1 0 -1 1 0 0 0 1 0 0 1 1 1 1 0 1 -1 0 1 0 0 0 0 0 0 -1 0 -1 -1 -1 -1 -1 -1 1 0 1 1 0 -1 1 0 0 0 1 -1 -1 -1 1 0 -1 1 0 0 1 0 0 1 0 -1 0 -1 0 0 1 0 1 0 1 1 0 1 0 0 -1 -1 0 0 0 0 0 0 0 0 0 1 0 0 0 1 1 0 1 0 1 0 0 1 1 0 0 -1 0 0 0 -1 1 0 0 0 1 0 1 0 -1 1 0 0 0 0 1 0 -1 0 -1 0 -1 0 0 -1 1 1 0 1 0 -1 -1 1 0 0 1 0 1 -1 0 0 1 0 0 0 0 1 0 0 -1 0 0 0 0 0 1 0 -1 1 0 -1 -1 1 0 -1 1 0 0 0 1 0 -1 1 -1 1 0 -1 -1 0 0 0 0 0 -1 1 0 0 0 0 1 -1 0 0 -1 1 1 -1 -1 0 0 0 0 0 0 0 -1 0 -1 0 -1 1 -1 0 0 0 0 1 -1 -1 1 -1 1 0 -1 0 -1 1 1 1 0 -1 0 0 0 0 -1 -1 1 0 0 -1 0 0 0 0 0 0 0 -1 -1 -1 0 -1 0 0 0 1 0 -1 1 1 0 0 -1 -1 1 -1 0 1 0 0 1 0 -1 -1 0 1 0 0 0 -1 0 0 1 1 0 | |
| | 1 0 1 0 1 1 1 0 1 0 0 1 0 0 -1 0 -1 -1 -1 0 0 0 -1 1 -1 -1 0 0 -1 -1 -1 -1 -1 1 0 0 0 1 -1 0 0 0 0 0 -1 0 0 0 0 1 0 -1 -1 0 0 -1 1 0 0 0 0 1 0 0 0 -1 0 0 1 0 0 1 0 0 -1 -1 0 1 -1 1 0 1 0 0 0 0 0 -1 -1 0 1 0 0 1 0 1 0 0 1 0 1 -1 1 1 0 0 -1 0 0 1 1 0 0 -1 1 0 0 1 0 -1 0 1 -1 -1 1 | |
| | Sequence 7: 0 0 0 0 0 1 0 1 0 0 1 1 0 -1 -1 0 0 -1 0 1 -1 0 1 1 0 0 -1 1 1 -1 0 0 0 0 1 1 0 -1 -1 -1 1 0 0 0 1 0 -1 0 0 1 0 0 1 1 1 -1 -1 -1 -1 0 0 -1 0 -1 0 -1 0 1 1 0 1 -1 0 1 -1 -1 1 0 1 0 1 0 0 1 0 0 0 1 1 -1 0 0 1 1 0 0 0 -1 -1 0 0 -1 0 0 -1 1 1 0 -1 -1 -1 1 -1 -1 -1 1 -1 1 0 0 0 0 1 0 0 1 1 0 0 0 1 0 0 0 -1 -1 -1 -1 0 1 1 1 1 0 0 -1 1 0 1 -1 1 -1 1 0 0 1 1 0 0 -1 -1 1 0 -1 0 0 -1 -1 0 1 0 0 0 1 1 0 1 -1 1 0 0 0 0 0 -1 -1 1 0 0 0 0 0 0 -1 -1 0 -1 1 0 1 0 0 1 0 0 0 0 1 1 0 1 0 -1 1 0 -1 -1 1 1 -1 1 0 1 -1 -1 -1 -1 0 -1 1 1 0 -1 0 1 0 0 0 0 0 0 0 0 -1 1 0 0 1 0 -1 -1 -1 1 -1 0 -1 0 1 0 -1 1 0 0 -1 0 1 0 0 -1 -1 -1 -1 1 0 -1 0 0 0 1 1 -1 1 -1 1 1 1 0 1 0 0 1 1 1 1 0 0 1 0 1 -1 -1 0 -1 0 1 1 0 0 0 -1 -1 0 1 -1 0 0 0 0 1 -1 -1 0 -1 1 0 0 -1 1 | |
| | 0 -1 0 0 1 1 -1 0 0 0 1 1 0 1 0 0 0 0 1 0 1 0 0 0 1 0 1 0 -1 0 0 0 0 1 0 0 0 0 0 0 -1 -1 -1 -1 -1 0 0 -1 0 0 0 -1 0 0 0 0 0 -1 -1 -1 -1 0 0 0 -1 1 -1 0 0 0 1 0 0 1 0 -1 -1 0 0 0 0 0 0 1 0 0 1 -1 1 0 0 -1 1 -1 0 0 1 0 -1 0 0 0 -1 -1 1 0 -1 1 1 0 -1 -1 1 0 0 -1 1 0 1 0 1 1 -1 -1 -1 1 0 0 -1 1 -1 0 -1 1 0 1 -1 1 0 0 -1 0 0 1 0 0 0 1 0 -1 0 0 0 0 0 -1 0 0 -1 0 1 0 0 0 0 -1 -1 0 0 0 1 -1 1 0 1 0 1 0 -1 0 0 0 -1 1 0 0 -1 1 0 1 1 0 -1 -1 0 1 0 -1 1 0 0 -1 -1 1 0 0 0 0 1 0 -1 1 1 0 -1 1 1 1 0 -1 -1 1 0 0 0 1 0 -1 1 0 1 0 1 0 1 0 -1 0 1 -1 1 1 1 0 0 0 1 0 0 0 0 -1 -1 -1 1 0 -1 0 1 1 0 1 0 1 -1 1 0 -1 -1 0 1 0 1 0 0 0 -1 0 0 0 -1 0 -1 -1 0 0 0 1 0 0 -1 -1 -1 -1 0 -1 1 0 1 0 0 0 0 0 0 -1 0 -1 1 1 -1 -1 1 -1 0 -1 -1 0 -1 1 0 0 0 1 1 -1 1 1 0 1 -1 0 0 1 0 0 -1 0 1 0 1 0 0 1 0 -1 0 -1 1 0 1 0 0 -1 1 0 0 0 0 0 0 0 0 0 1 0 0 0 -1 -1 0 -1 0 1 0 0 1 -1 0 0 -1 0 0 0 1 -1 0 0 0 1 0 1 0 1 1 0 0 0 0 -1 0 -1 0 1 0 1 0 0 -1 -1 -1 0 1 0 -1 -1 -1 0 0 -1 0 -1 1 0 0 1 0 0 0 0 -1 0 0 1 0 0 0 0 0 1 0 -1 -1 0 -1 -1 1 0 -1 -1 0 0 0 1 0 -1 -1 1 1 0 1 1 0 0 0 | |
| | 0 0 -1 1 0 0 0 0 -1 -1 0 0 -1 1 -1 1 -1 0 0 0 0 0 0 0 -1 0 -1 0 1 1 1 0 0 0 0 -1 -1 -1 -1 -1 -1 0 1 0 -1 1 -1 1 0 1 0 0 0 0 1 -1 1 0 0 1 0 0 0 0 0 0 0 -1 -1 -1 0 -1 0 0 0 -1 0 -1 -1 -1 0 0 1 -1 -1 1 0 -1 0 0 1 0 1 1 0 1 0 0 0 1 0 0 -1 -1 0 -1 0 1 0 -1 1 -1 0 1 0 0 1 0 0 1 0 1 1 1 0 0 0 -1 -1 -1 1 0 0 1 -1 1 1 -1 -1 0 0 0 1 1 0 0 0 0 0 -1 0 0 0 0 -1 0 -1 1 0 0 -1 1 0 0 0 0 -1 0 0 0 1 0 0 -1 0 0 -1 0 0 1 1 0 -1 -1 1 0 1 0 0 0 0 0 -1 -1 0 -1 0 0 1 0 -1 0 0 1 0 -1 1 -1 1 0 0 1 0 0 -1 -1 0 0 -1 1 0 0 1 0 1 0 -1 -1 1 1 | |
| | **Sequence** 8: 0 0 0 0 0 1 0 1 0 0 -1 1 0 -1 1 0 0 1 0 -1 1 0 -1 1 0 0 1 -1 -1 -1 0 0 0 0 -1 1 0 -1 -1 -1 1 0 0 0 1 0 1 0 0 -1 0 0 -1 -1 -1 1 -1 1 -1 0 0 1 0 -1 0 1 0 -1 1 0 -1 1 0 -1 1 -1 -1 0 1 0 -1 0 0 -1 0 0 0 -1 1 1 0 0 -1 -1 0 0 0 -1 1 0 0 1 0 0 1 1 -1 0 -1 -1 -1 -1 1 -1 1 -1 -1 1 0 0 0 0 -1 0 0 -1 1 0 0 0 1 0 0 0 1 1 1 -1 0 1 -1 -1 1 0 0 -1 1 0 -1 -1 -1 -1 1 0 0 1 -1 0 0 -1 -1 1 0 1 0 0 -1 -1 0 1 0 0 0 -1 -1 0 1 1 1 0 0 0 0 0 -1 -1 1 0 0 0 0 0 0 -1 1 0 1 1 0 1 0 0 1 0 0 0 0 1 1 0 1 0 -1 -1 0 -1 1 -1 -1 -1 1 0 -1 | |
| | 1 -1 -1 1 0 1 1 1 0 1 0 -1 0 0 0 0 0 0 0 0 -1 1 0 0 1 0 -1 1 1 -1 1 0 1 0 1 0 1 -1 0 0 1 0 -1 0 0 -1 -1 1 -1 1 0 -1 0 0 0 1 -1 -1 1 -1 1 1 -1 0 1 0 0 -1 1 1 1 0 0 -1 0 1 -1 1 0 1 0 -1 1 0 0 0 -1 -1 0 -1 1 0 0 0 0 1 1 1 0 1 -1 0 0 -1 -1 0 -1 0 0 -1 -1 -1 0 0 0 -1 1 0 -1 0 0 0 0 -1 0 1 0 0 0 1 0 1 0 -1 0 0 0 0 1 0 0 0 0 0 0 1 1 1 1 1 0 0 -1 0 0 0 -1 0 0 0 0 0 -1 1 -1 1 0 0 0 -1 -1 1 0 0 0 -1 0 0 1 0 -1 -1 0 0 0 0 0 0 1 0 0 1 -1 1 0 0 -1 -1 1 0 0 1 0 1 0 0 0 -1 -1 1 0 -1 -1 1 0 1 1 -1 0 0 1 1 0 -1 0 -1 -1 -1 -1 -1 -1 0 0 1 -1 -1 0 1 1 0 -1 -1 1 0 0 1 0 0 1 0 0 0 -1 0 1 0 0 0 0 0 1 0 0 -1 0 1 0 0 0 0 -1 1 0 0 0 -1 1 1 0 1 0 1 0 1 0 0 0 1 1 0 0 1 -1 0 1 1 0 -1 1 0 -1 0 -1 1 0 0 1 -1 -1 0 0 0 0 1 0 1 -1 -1 0 1 1 -1 -1 0 -1 -1 -1 0 0 0 1 0 1 1 0 1 0 -1 0 1 0 -1 0 1 -1 1 -1 1 0 0 0 -1 0 0 0 0 1 -1 -1 1 0 -1 0 -1 -1 0 1 0 -1 -1 1 0 -1 -1 0 -1 0 1 0 0 0 1 0 0 0 1 0 1 1 0 0 0 1 0 0 -1 1 -1 1 0 1 -1 0 1 0 0 0 0 0 0 1 0 1 1 -1 -1 1 -1 1 0 -1 1 0 -1 1 0 0 0 -1 1 -1 -1 1 0 1 -1 0 0 1 0 0 1 0 -1 0 1 0 0 1 0 1 0 -1 1 0 -1 0 0 -1 -1 0 0 0 0 0 | |
| | 0 0 0 0 1 0 0 0 -1 1 0 -1 0 1 0 0 -1 1 0 0 1 0 0 0 1 -1 0 0 0 -1 0 1 0 1 -1 0 0 0 0 -1 0 1 0 -1 0 -1 0 0 -1 1 1 0 1 0 -1 -1 1 0 0 -1 0 1 1 0 0 1 0 0 0 0 -1 0 0 -1 0 0 0 0 0 1 0 -1 -1 0 -1 -1 -1 0 -1 1 0 0 0 -1 0 -1 -1 1 1 0 -1 1 0 0 0 0 0 1 1 0 0 0 0 1 1 0 0 -1 -1 -1 1 1 0 0 0 0 0 0 0 1 0 1 0 -1 -1 -1 0 0 0 0 -1 -1 1 -1 1 -1 0 -1 0 -1 -1 1 1 0 -1 0 0 0 0 -1 1 1 0 0 -1 0 0 0 0 0 0 0 1 -1 1 0 1 0 0 0 -1 0 -1 1 -1 0 0 1 -1 1 -1 0 1 0 0 -1 0 1 -1 0 -1 0 0 0 -1 0 0 1 1 0 1 0 -1 0 -1 -1 -1 0 1 0 0 1 0 0 -1 0 -1 1 1 0 0 0 -1 -1 1 -1 0 0 -1 -1 1 -1 1 1 0 0 0 -1 -1 0 0 0 0 0 1 0 0 0 0 1 0 -1 -1 0 0 -1 1 0 0 0 0 1 0 0 0 1 0 0 1 0 0 -1 0 0 1 -1 0 1 1 -1 0 1 0 0 0 0 0 1 1 0 1 0 0 -1 0 -1 0 0 1 0 1 -1 -1 -1 0 0 1 0 0 -1 -1 0 0 1 1 0 0 1 0 1 0 1 -1 -1 -1 | |
| | Sequence 9: 0 0 0 0 0 -1 0 -1 0 0 1 1 0 1 -1 0 0 -1 0 -1 1 0 1 -1 0 0 1 1 -1 -1 0 0 0 0 -1 -1 0 1 -1 1 1 0 0 0 1 0 -1 0 0 -1 0 0 1 1 -1 -1 -1 1 1 0 0 -1 0 1 0 1 0 1 1 0 1 -1 0 1 1 1 -1 0 -1 0 -1 0 0 -1 0 0 0 1 1 -1 0 0 -1 -1 0 0 0 1 -1 0 0 -1 0 0 -1 -1 1 0 -1 -1 1 1 1 -1 1 -1 -1 -1 | |
| | 0 0 0 0 1 0 0 1 1 0 0 0 1 0 0 0 -1 1 1 -1 0 1 -1 1 1 0 0 -1 1 0 1 -1 1 1 -1 0 0 1 -1 0 0 -1 1 -1 0 -1 0 0 1 -1 0 1 0 0 0 1 1 0 -1 1 1 0 0 0 0 0 -1 -1 -1 0 0 0 0 0 0 -1 -1 0 -1 -1 0 1 0 0 1 0 0 0 0 1 -1 0 1 0 1 -1 0 1 1 1 1 -1 -1 0 -1 1 1 1 -1 0 1 1 1 0 -1 0 -1 0 0 0 0 0 0 0 0 -1 -1 0 0 -1 0 -1 -1 -1 1 -1 0 -1 0 1 0 -1 -1 0 0 -1 0 1 0 0 1 1 1 1 -1 0 1 0 0 0 -1 -1 -1 -1 -1 1 1 1 0 -1 0 0 1 -1 1 1 0 0 1 0 1 1 1 0 -1 0 1 1 0 0 0 1 1 0 1 -1 0 0 0 0 1 1 -1 0 1 1 0 0 -1 -1 0 -1 0 0 1 1 1 0 0 0 1 -1 0 -1 0 0 0 0 1 0 -1 0 0 0 1 0 -1 0 -1 0 0 0 0 -1 0 0 0 0 0 0 1 1 1 -1 -1 0 0 1 0 0 0 -1 0 0 0 0 0 -1 1 -1 1 0 0 0 1 -1 -1 0 0 0 -1 0 0 1 0 -1 -1 0 0 0 0 0 0 -1 0 0 -1 1 -1 0 0 -1 1 -1 0 0 -1 0 -1 0 0 0 1 -1 -1 0 -1 -1 1 0 1 1 -1 0 0 1 1 0 -1 0 1 1 1 1 -1 1 0 0 1 1 1 0 1 -1 0 1 -1 1 0 0 -1 0 0 1 0 0 0 -1 0 -1 0 0 0 0 0 -1 0 0 -1 0 -1 0 0 0 0 -1 -1 0 0 0 1 1 -1 0 -1 0 1 0 1 0 0 0 -1 -1 0 0 1 -1 0 -1 -1 0 1 -1 0 -1 0 1 1 0 0 1 1 1 0 0 0 0 -1 0 1 1 -1 0 1 1 1 -1 0 -1 -1 -1 0 0 0 1 0 1 1 0 1 0 -1 0 1 0 -1 0 -1 1 -1 1 -1 0 0 0 -1 0 0 0 0 1 -1 -1 1 | |
| | 0 1 0 1 -1 0 1 0 1 1 1 0 -1 1 0 -1 0 1 0 0 0 1 0 0 0 1 0 1 1 0 0 0 1 0 0 1 -1 -1 1 0 1 1 0 1 0 0 0 0 0 0 -1 0 1 -1 1 1 1 -1 -1 0 -1 -1 0 1 -1 0 0 0 1 1 -1 1 -1 0 1 1 0 0 -1 0 0 1 0 1 0 1 0 0 1 0 -1 0 1 1 0 -1 0 0 1 -1 0 0 0 0 0 0 0 0 0 -1 0 0 0 1 -1 0 -1 0 1 0 0 1 1 0 0 -1 0 0 0 -1 1 0 0 0 -1 0 -1 0 -1 -1 0 0 0 0 1 0 -1 0 -1 0 -1 0 0 1 -1 -1 0 -1 0 1 1 1 0 0 1 0 1 1 0 0 -1 0 0 0 0 1 0 0 -1 0 0 0 0 0 -1 0 -1 -1 0 1 -1 -1 0 -1 -1 0 0 0 -1 0 -1 1 -1 1 0 -1 -1 0 0 0 0 0 1 -1 0 0 0 0 1 -1 0 0 -1 1 -1 -1 -1 0 0 0 0 0 0 0 -1 0 -1 0 1 1 -1 0 0 0 0 -1 -1 1 1 1 1 0 1 0 1 1 -1 1 0 1 0 0 0 0 -1 1 -1 0 0 1 0 0 0 0 0 0 0 1 -1 -1 0 -1 0 0 0 -1 0 -1 -1 -1 0 0 1 1 1 -1 0 -1 0 0 -1 0 1 -1 0 -1 0 0 0 -1 0 0 -1 1 0 1 0 -1 0 1 1 -1 0 -1 0 0 1 0 0 -1 0 -1 -1 1 0 0 0 1 -1 1 -1 0 0 -1 1 1 1 1 -1 0 0 0 1 1 0 0 0 0 0 -1 0 0 0 0 -1 0 -1 -1 0 0 -1 1 0 0 0 0 -1 0 0 0 1 0 0 1 0 0 -1 0 0 -1 -1 0 -1 1 -1 0 -1 0 0 0 0 0 1 -1 0 1 0 0 -1 0 1 0 0 1 0 1 1 1 -1 0 0 -1 0 0 1 -1 0 0 1 1 0 0 -1 0 -1 0 -1 1 1 -1 | |
| | Sequence 10: 0 0 0 0 0 1 0 1 0 0 1 1 0 | |
| | -1 -1 0 0 -1 0 -1 1 0 -1 1 0 0 -1 1 -1 1 0 0 0 0 -1 1 0 -1 -1 1 1 0 0 0 -1 0 -1 0 0 1 0 0 1 1 -1 1 -1 -1 1 0 0 -1 0 1 0 1 0 1 1 0 1 1 0 -1 -1 -1 -1 0 1 0 -1 0 0 -1 0 0 0 1 -1 1 0 0 -1 -1 0 0 0 -1 -1 0 0 1 0 0 1 -1 -1 0 -1 -1 1 1 1 -1 -1 -1 -1 1 0 0 0 0 -1 0 0 1 1 0 0 0 1 0 0 0 1 -1 1 1 0 -1 -1 -1 -1 0 0 -1 -1 0 1 1 1 -1 1 0 0 -1 1 0 0 1 -1 1 0 1 0 0 -1 1 0 1 0 0 0 1 -1 0 -1 1 -1 0 0 0 0 0 -1 -1 1 0 0 0 0 0 0 -1 -1 0 1 1 0 1 0 0 -1 0 0 0 0 -1 -1 0 1 0 1 1 0 1 1 -1 -1 -1 1 0 -1 -1 -1 1 1 0 -1 -1 1 0 1 0 1 0 0 0 0 0 0 0 0 1 -1 0 0 1 0 -1 1 1 -1 -1 0 -1 0 1 0 1 -1 0 0 1 0 -1 0 0 1 -1 -1 -1 1 0 1 0 0 0 -1 -1 -1 -1 1 -1 -1 -1 0 1 0 0 -1 -1 -1 1 0 0 -1 0 -1 -1 1 0 -1 0 1 1 0 0 0 1 1 0 1 1 0 0 0 0 -1 1 -1 0 -1 -1 0 0 1 1 0 1 0 0 1 1 1 0 0 0 -1 1 0 1 0 0 0 0 -1 0 -1 0 0 0 1 0 1 0 1 0 0 0 0 1 0 0 0 0 0 0 1 -1 1 1 -1 0 0 1 0 0 0 1 0 0 0 0 0 1 1 -1 1 0 0 0 1 -1 -1 0 0 0 -1 0 0 1 0 -1 1 0 0 0 0 0 0 1 0 0 -1 -1 1 0 0 -1 -1 -1 0 0 1 0 -1 0 0 0 -1 -1 1 0 1 -1 -1 0 1 -1 1 0 0 -1 1 0 1 0 1 1 -1 1 1 -1 0 0 -1 1 1 0 1 1 0 1 1 1 0 0 -1 0 0 1 0 0 0 1 0 1 | |
| | 0 0 0 0 0 -1 0 0 1 0 1 0 0 0 0 -1 -1 0 0 0 -1 -1 -1 0 -1 0 -1 0 1 0 0 0 1 1 0 0 1 -1 0 -1 -1 0 -1 -1 0 -1 0 -1 -1 0 0 1 1 -1 0 0 0 0 1 0 -1 1 1 0 -1 -1 1 1 0 -1 -1 -1 0 0 0 1 0 -1 1 0 1 0 -1 0 1 0 1 0 -1 -1 -1 1 -1 0 0 0 1 0 0 0 0 -1 1 1 1 0 1 0 -1 -1 0 -1 0 -1 1 1 0 1 1 0 1 0 1 0 0 0 1 0 0 0 1 0 1 1 0 0 0 -1 0 0 -1 1 -1 1 0 -1 -1 0 -1 0 0 0 0 0 0 1 0 1 -1 1 -1 -1 -1 -1 0 -1 -1 0 1 -1 0 0 0 1 -1 1 1 -1 0 -1 1 0 0 -1 0 0 1 0 -1 0 1 0 0 1 0 -1 0 -1 -1 0 1 0 0 1 1 0 0 0 0 0 0 0 0 0 -1 0 0 0 -1 -1 0 1 0 -1 0 0 -1 1 0 0 -1 0 0 0 -1 1 0 0 0 -1 0 -1 0 -1 1 0 0 0 0 1 0 -1 0 1 0 1 0 0 -1 1 -1 0 1 0 1 -1 1 0 0 1 0 -1 1 0 0 1 0 0 0 0 1 0 0 1 0 0 0 0 0 -1 0 -1 1 0 -1 -1 -1 0 -1 -1 0 0 0 1 0 1 -1 -1 1 0 -1 1 0 0 0 0 0 1 1 0 0 0 0 -1 1 0 0 -1 -1 -1 -1 1 0 0 0 0 0 0 0 -1 0 1 0 1 1 1 0 0 0 0 -1 -1 -1 -1 -1 1 0 -1 0 -1 -1 1 -1 0 -1 0 0 0 0 -1 -1 -1 0 0 -1 0 0 0 0 0 0 0 -1 1 1 0 -1 0 0 0 1 0 -1 1 1 0 0 -1 -1 -1 1 0 -1 0 0 -1 0 -1 1 0 -1 0 0 0 1 0 0 1 1 0 1 0 1 0 -1 -1 1 0 -1 0 0 1 0 0 1 0 -1 -1 1 0 0 0 -1 -1 -1 1 0 0 -1 1 -1 1 1 -1 0 0 0 1 -1 0 0 0 0 0 1 | |
| | 0 0 0 0 -1 0 1 1 0 0 -1 -1 0 0 0 0 -1 0 0 0 1 0 0 1 0 0 1 0 0 -1 1 0 1 -1 1 0 1 0 0 0 0 0 -1 1 0 1 0 0 1 0 1 0 0 -1 0 -1 1 -1 -1 0 0 1 0 0 -1 1 0 0 -1 1 0 0 -1 0 1 0 1 1 1 1 | |
| | Sequence 11: 0 0 0 0 0 1 0 1 0 0 1 -1 0 -1 -1 0 0 -1 0 -1 1 0 1 1 0 0 1 1 -1 1 0 0 0 0 -1 1 0 -1 1 -1 -1 0 0 0 -1 0 -1 0 0 -1 0 0 1 1 -1 -1 1 1 -1 0 0 -1 0 -1 0 1 0 1 -1 0 1 -1 0 1 1 -1 -1 0 1 0 -1 0 0 -1 0 0 0 1 -1 -1 0 0 -1 -1 0 0 0 -1 -1 0 0 -1 0 0 -1 1 1 0 1 1 -1 1 1 1 1 -1 1 1 0 0 0 0 1 0 0 1 -1 0 0 0 -1 0 0 0 -1 1 1 1 0 -1 -1 1 -1 0 0 1 -1 0 1 1 1 -1 1 0 0 -1 -1 0 0 1 -1 1 0 -1 0 0 -1 1 0 -1 0 0 0 1 1 0 1 1 -1 0 0 0 0 0 1 1 1 0 0 0 0 0 0 1 -1 0 -1 1 0 -1 0 0 -1 0 0 0 0 -1 1 0 -1 0 -1 -1 0 -1 1 1 1 1 1 0 -1 1 -1 -1 -1 0 1 -1 -1 0 -1 0 -1 0 0 0 0 0 0 0 0 1 1 0 0 1 0 1 -1 -1 1 -1 0 -1 0 -1 0 -1 -1 0 0 -1 0 1 0 0 -1 -1 1 -1 1 0 -1 0 0 0 1 -1 1 1 1 -1 -1 1 0 1 0 0 1 1 -1 -1 0 0 1 0 -1 -1 1 0 -1 0 1 -1 0 0 0 -1 -1 0 1 -1 0 0 0 0 -1 1 -1 0 1 1 0 0 1 -1 0 1 0 0 1 1 -1 0 0 0 1 1 0 -1 0 0 0 0 1 0 1 0 0 0 -1 0 1 0 1 0 0 0 0 1 0 0 0 0 0 0 1 1 1 -1 -1 | |
| | 0 0 -1 0 0 0 1 0 0 0 0 0 1 1 1 1 0 0 0 -1 -1 -1 0 0 0 -1 0 0 -1 0 1 1 0 0 0 0 0 0 1 0 0 1 -1 1 0 0 1 1 -1 0 0 1 0 -1 0 0 0 -1 1 1 0 1 -1 -1 0 1 1 -1 0 0 1 -1 0 -1 0 1 1 -1 -1 1 1 0 0 1 1 -1 0 1 1 0 1 1 -1 0 0 -1 0 0 -1 0 0 0 -1 0 -1 0 0 0 0 0 -1 0 0 1 0 1 0 0 0 0 1 -1 0 0 0 1 1 1 0 1 0 -1 0 1 0 0 0 -1 1 0 0 1 -1 0 1 1 0 -1 -1 0 -1 0 -1 -1 0 0 1 -1 1 0 0 0 0 1 0 1 1 -1 0 1 -1 1 -1 0 1 1 -1 0 0 0 -1 0 1 -1 0 -1 0 -1 0 -1 0 1 0 1 -1 1 1 1 0 0 0 -1 0 0 0 0 1 1 1 -1 0 -1 0 1 -1 0 -1 0 1 -1 -1 0 1 -1 0 -1 0 -1 0 0 0 1 0 0 0 1 0 1 1 0 0 0 -1 0 0 -1 -1 1 1 0 1 1 0 -1 0 0 0 0 0 0 -1 0 1 1 1 -1 1 -1 -1 0 1 -1 0 -1 1 0 0 0 1 -1 1 1 1 0 -1 -1 0 0 1 0 0 1 0 1 0 -1 0 0 -1 0 -1 0 -1 -1 0 -1 0 0 -1 -1 0 0 0 0 0 0 0 0 0 1 0 0 0 -1 -1 0 1 0 -1 0 0 1 1 0 0 -1 0 0 0 1 -1 0 0 0 -1 0 1 0 1 -1 0 0 0 0 -1 0 -1 0 -1 0 -1 0 0 -1 -1 -1 0 1 0 -1 -1 1 0 0 -1 0 1 -1 0 0 1 0 0 0 0 -1 0 0 -1 0 0 0 0 0 1 0 1 1 0 -1 1 -1 0 1 -1 0 0 0 -1 0 1 -1 1 -1 0 -1 1 0 0 0 0 0 1 1 0 0 0 0 1 -1 0 0 1 1 1 1 -1 0 0 0 0 0 0 0 -1 0 -1 0 1 1 -1 0 0 0 0 1 1 1 -1 1 -1 0 1 0 -1 | |
| | 1 -1 -1 0 1 0 0 0 0 -1 1 1 0 0 1 0 0 0 0 0 0 0 1 1 -1 0 -1 0 0 0 1 0 1 -1 1 0 0 -1 -1 1 -1 0 -1 0 0 -1 0 -1 -1 0 -1 0 0 0 -1 0 0 -1 1 0 1 0 -1 0 -1 1 1 0 1 0 0 -1 0 0 -1 0 -1 1 -1 0 0 0 -1 1 1 -1 0 0 -1 -1 -1 1 1 -1 0 0 0 1 1 0 0 0 0 0 -1 0 0 0 0 -1 0 1 -1 0 0 1 -1 0 0 0 0 -1 0 0 0 -1 0 0 1 0 0 1 0 0 1 -1 0 -1 1 -1 0 1 0 0 0 0 0 1 -1 0 1 0 0 -1 0 -1 0 0 -1 0 1 1 -1 -1 0 0 1 0 0 -1 1 0 0 1 -1 0 0 1 0 1 0 -1 -1 1 -1 | |
| | Sequence 12: 0 0 0 0 0 -1 0 -1 0 0 1 -1 0 -1 -1 0 0 -1 0 -1 1 0 -1 -1 0 0 1 1 -1 -1 0 0 0 0 -1 -1 0 -1 -1 -1 1 0 0 0 -1 0 -1 0 0 -1 0 0 -1 -1 -1 -1 -1 -1 1 0 0 1 0 1 0 1 0 -1 1 0 1 1 0 -1 1 1 1 0 1 0 1 0 0 1 0 0 0 -1 1 1 0 0 -1 1 0 0 0 1 1 0 0 1 0 0 -1 -1 1 0 -1 1 -1 1 -1 1 -1 -1 1 1 0 0 0 0 1 0 0 -1 -1 0 0 0 1 0 0 0 -1 -1 -1 -1 0 1 -1 -1 -1 0 0 1 -1 0 -1 1 1 1 -1 0 0 1 -1 0 0 1 1 1 0 1 0 0 1 -1 0 -1 0 0 0 -1 1 0 -1 -1 -1 0 0 0 0 0 -1 -1 -1 0 0 0 0 0 0 -1 -1 0 -1 -1 0 1 0 0 -1 0 0 0 0 1 1 0 -1 0 -1 -1 0 -1 -1 -1 -1 -1 1 0 -1 -1 1 -1 1 0 -1 1 1 0 1 0 -1 0 0 0 0 0 0 0 0 1 1 0 0 -1 0 1 -1 -1 -1 -1 0 1 0 1 0 -1 1 0 0 1 0 1 0 0 | |
| | -1 -1 -1 -1 -1 0 1 0 0 0 -1 -1 -1 -1 1 1 1 1 0 1 0 0 -1 -1 1 -1 0 0 1 0 1 -1 1 0 -1 0 1 1 0 0 0 -1 1 0 -1 1 0 0 0 0 1 -1 -1 0 1 1 0 0 1 -1 0 -1 0 0 1 -1 1 0 0 0 -1 1 0 1 0 0 0 0 1 0 1 0 0 0 -1 0 -1 0 -1 0 0 0 0 1 0 0 0 0 0 0 -1 1 -1 -1 -1 0 0 1 0 0 0 -1 0 0 0 0 0 1 -1 -1 1 0 0 0 -1 -1 -1 0 0 0 1 0 0 -1 0 1 -1 0 0 0 0 0 0 -1 0 0 -1 -1 1 0 0 1 -1 1 0 0 1 0 1 0 0 0 -1 1 -1 0 1 -1 -1 0 -1 -1 -1 0 0 -1 1 0 1 0 1 1 -1 -1 1 1 0 0 -1 1 1 0 -1 1 0 1 1 1 0 0 1 0 0 -1 0 0 0 1 0 1 0 0 0 0 0 -1 0 0 -1 0 1 0 0 0 0 1 -1 0 0 0 -1 -1 1 0 1 0 -1 0 1 0 0 0 -1 1 0 0 -1 1 0 -1 1 0 1 -1 0 1 0 1 -1 0 0 -1 -1 1 0 0 0 0 1 0 1 -1 1 0 1 1 1 -1 0 1 1 1 0 0 0 1 0 1 -1 0 1 0 1 0 -1 0 -1 0 -1 1 -1 1 1 0 0 0 -1 0 0 0 0 -1 1 1 -1 0 1 0 -1 1 0 -1 0 -1 -1 -1 0 1 1 0 -1 0 1 0 0 0 1 0 0 0 1 0 -1 1 0 0 0 -1 0 0 -1 -1 1 1 0 -1 1 0 -1 0 0 0 0 0 0 1 0 -1 -1 -1 1 1 -1 1 0 1 1 0 -1 1 0 0 0 1 1 1 -1 1 0 1 1 0 0 1 0 0 1 0 1 0 -1 0 0 1 0 1 0 -1 -1 0 -1 0 0 -1 1 0 0 0 0 0 0 0 0 0 1 0 0 0 -1 1 0 -1 0 -1 0 0 -1 1 0 0 -1 0 0 0 -1 1 0 0 0 1 0 1 0 -1 -1 0 0 0 0 1 0 -1 0 1 0 | |
| | 1 0 0 1 -1 1 0 -1 0 -1 1 1 0 0 1 0 -1 -1 0 0 -1 0 0 0 0 1 0 0 1 0 0 0 0 0 1 0 -1 -1 0 1 -1 1 0 -1 1 0 0 0 -1 0 1 -1 -1 1 0 -1 1 0 0 0 0 0 -1 -1 0 0 0 0 -1 1 0 0 -1 -1 1 -1 1 0 0 0 0 0 0 0 -1 0 1 0 -1 1 1 0 0 0 0 1 -1 1 -1 1 1 0 1 0 1 -1 -1 -1 0 1 0 0 0 0 -1 1 1 0 0 1 0 0 0 0 0 0 0 1 1 1 0 -1 0 0 0 -1 0 -1 -1 -1 0 0 1 1 -1 1 0 1 0 0 1 0 1 1 0 1 0 0 0 1 0 0 -1 1 0 1 0 -1 0 -1 -1 -1 0 1 0 0 1 0 0 1 0 -1 -1 -1 0 0 0 1 1 1 1 0 0 -1 -1 1 -1 -1 1 0 0 0 1 1 0 0 0 0 0 1 0 0 0 0 1 0 1 1 0 0 -1 -1 0 0 0 0 1 0 0 0 -1 0 0 1 0 0 -1 0 0 -1 1 0 -1 1 -1 0 -1 0 0 0 0 0 1 1 0 1 0 0 -1 0 1 0 0 -1 0 -1 -1 -1 1 0 0 1 0 0 -1 -1 0 0 1 1 0 0 1 0 1 0 -1 -1 -1 -1 | |
| | Sequence 13: 0 0 0 0 0 -1 0 -1 0 0 -1 1 0 -1 1 0 0 1 0 -1 1 0 1 -1 0 0 1 -1 -1 1 0 0 0 0 -1 -1 0 -1 1 -1 -1 0 0 0 1 0 1 0 0 -1 0 0 1 1 -1 1 1 -1 1 0 0 -1 0 1 0 1 0 1 -1 0 -1 -1 0 1 1 1 1 0 1 0 1 0 0 1 0 0 0 1 -1 -1 0 0 -1 1 0 0 0 1 -1 0 0 -1 0 0 1 -1 -1 0 1 -1 -1 -1 -1 -1 -1 -1 -1 1 0 0 0 0 -1 0 0 1 1 0 0 0 -1 0 0 0 1 -1 -1 1 0 -1 -1 1 1 0 0 -1 1 0 1 -1 -1 1 -1 0 0 -1 -1 0 0 -1 1 1 0 | |
| | -1 0 0 1 1 0 1 0 0 0 1 -1 0 -1 -1 1 0 0 0 0 0 1 1 -1 0 0 0 0 0 0 1 1 0 1 -1 0 -1 0 0 1 0 0 0 0 -1 1 0 1 0 -1 -1 0 -1 -1 1 1 1 1 0 -1 -1 1 -1 -1 0 -1 -1 -1 0 -1 0 -1 0 0 0 0 0 0 0 0 -1 1 0 0 -1 0 -1 1 1 1 1 0 -1 0 -1 0 1 1 0 0 -1 0 -1 0 0 -1 -1 -1 -1 -1 0 1 0 0 0 -1 -1 1 -1 -1 -1 -1 -1 0 1 0 0 1 -1 -1 1 0 0 -1 0 -1 -1 1 0 1 0 -1 -1 0 0 0 -1 1 0 1 -1 0 0 0 0 -1 -1 1 0 1 -1 0 0 -1 -1 0 1 0 0 -1 1 1 0 0 0 1 1 0 1 0 0 0 0 -1 0 1 0 0 0 1 0 -1 0 1 0 0 0 0 1 0 0 0 0 0 0 -1 1 -1 1 1 0 0 1 0 0 0 1 0 0 0 0 0 -1 -1 1 1 0 0 0 -1 -1 1 0 0 0 1 0 0 1 0 -1 1 0 0 0 0 0 0 -1 0 0 -1 -1 1 0 0 -1 1 -1 0 0 1 0 -1 0 0 0 -1 -1 -1 0 -1 -1 1 0 -1 -1 -1 0 0 -1 -1 0 1 0 -1 -1 -1 -1 -1 -1 0 0 -1 -1 1 0 -1 1 0 -1 -1 -1 0 0 -1 0 0 1 0 0 0 1 0 -1 0 0 0 0 0 1 0 0 1 0 1 0 0 0 0 -1 1 0 0 0 1 -1 1 0 1 0 1 0 1 0 0 0 1 1 0 0 -1 1 0 -1 1 0 1 1 0 1 0 1 1 0 0 -1 -1 -1 0 0 0 0 1 0 1 1 1 0 1 -1 -1 -1 0 -1 -1 1 0 0 0 -1 0 1 1 0 -1 0 1 0 1 0 1 0 -1 1 -1 -1 1 0 0 0 -1 0 0 0 0 -1 -1 -1 1 0 1 0 1 1 0 1 0 1 -1 1 0 -1 1 0 -1 0 -1 0 0 0 1 0 0 0 1 0 -1 1 0 0 0 1 0 0 -1 1 -1 1 0 -1 -1 0 1 0 | |
| | 0 0 0 0 0 -1 0 -1 -1 1 1 1 -1 -1 0 -1 -1 0 -1 1 0 0 0 -1 -1 -1 1 1 0 -1 1 0 0 1 0 0 1 0 -1 0 1 0 0 -1 0 -1 0 -1 1 0 -1 0 0 -1 1 0 0 0 0 0 0 0 0 0 1 0 0 0 -1 -1 0 1 0 1 0 0 1 1 0 0 1 0 0 0 -1 1 0 0 0 1 0 1 0 -1 -1 0 0 0 0 1 0 1 0 1 0 1 0 0 1 1 -1 0 -1 0 -1 1 1 0 0 1 0 -1 1 0 0 -1 0 0 0 0 1 0 0 1 0 0 0 0 0 1 0 1 1 0 1 1 1 0 1 -1 0 0 0 -1 0 -1 -1 -1 -1 0 -1 1 0 0 0 0 0 -1 -1 0 0 0 0 -1 -1 0 0 1 1 -1 -1 -1 0 0 0 0 0 0 0 1 0 -1 0 1 -1 1 0 0 0 0 -1 1 1 -1 1 1 0 -1 0 1 1 1 1 0 -1 0 0 0 0 -1 1 1 0 0 -1 0 0 0 0 0 0 0 1 -1 -1 0 1 0 0 0 1 0 1 1 1 0 0 -1 1 -1 1 0 -1 0 0 1 0 -1 1 0 1 0 0 0 1 0 0 1 1 0 1 0 -1 0 -1 1 1 0 1 0 0 -1 0 0 1 0 -1 -1 1 0 0 0 1 -1 1 1 0 0 -1 -1 -1 1 -1 -1 0 0 0 -1 -1 0 0 0 0 0 -1 0 0 0 0 -1 0 -1 1 0 0 1 1 0 0 0 0 -1 0 0 0 1 0 0 1 0 0 1 0 0 -1 1 0 1 1 -1 0 -1 0 0 0 0 0 1 -1 0 1 0 0 -1 0 1 0 0 1 0 -1 1 -1 1 0 0 1 0 0 -1 1 0 0 1 -1 0 0 1 0 1 0 1 -1 1 -1 | |
| | Sequence 14: 0 0 0 0 0 -1 0 -1 0 0 -1 1 0 1 1 0 0 1 0 -1 1 0 1 -1 0 0 -1 -1 -1 1 0 0 0 0 -1 -1 0 1 -1 -1 1 0 0 0 -1 0 1 0 0 1 0 0 -1 -1 -1 -1 -1 -1 | |
| | -1 0 0 1 0 -1 0 1 0 -1 1 0 -1 -1 0 1 -1 1 -1 0 -1 0 -1 0 0 -1 0 0 0 -1 -1 -1 0 0 -1 -1 0 0 0 1 1 0 0 -1 0 0 -1 1 1 0 -1 -1 -1 -1 1 -1 -1 -1 -1 -1 0 0 0 0 1 0 0 -1 1 0 0 0 1 0 0 0 -1 -1 1 1 0 -1 -1 1 -1 0 0 -1 -1 0 -1 1 -1 1 -1 0 0 -1 1 0 0 1 1 -1 0 -1 0 0 1 1 0 1 0 0 0 -1 1 0 1 1 -1 0 0 0 0 0 -1 -1 -1 0 0 0 0 0 0 -1 1 0 -1 -1 0 1 0 0 -1 0 0 0 0 -1 1 0 1 0 -1 1 0 -1 1 1 1 -1 -1 0 -1 -1 1 -1 -1 0 -1 -1 1 0 -1 0 1 0 0 0 0 0 0 0 0 1 1 0 0 -1 0 -1 -1 -1 1 1 0 1 0 1 0 -1 -1 0 0 -1 0 1 0 0 -1 1 -1 1 -1 0 -1 0 0 0 1 -1 -1 1 1 -1 -1 1 0 -1 0 0 1 1 -1 1 0 0 1 0 -1 1 1 0 1 0 -1 1 0 0 0 -1 -1 0 -1 -1 0 0 0 0 -1 1 1 0 -1 1 0 0 1 1 0 1 0 0 -1 -1 -1 0 0 0 1 -1 0 1 0 0 0 0 1 0 1 0 0 0 1 0 -1 0 1 0 0 0 0 -1 0 0 0 0 0 0 1 -1 1 -1 1 0 0 -1 0 0 0 1 0 0 0 0 0 1 1 -1 1 0 0 0 -1 -1 1 0 0 0 -1 0 0 1 0 -1 1 0 0 0 0 0 0 -1 0 0 1 1 -1 0 0 -1 1 1 0 0 -1 0 1 0 0 0 1 -1 -1 0 1 -1 -1 0 1 -1 1 0 0 -1 1 0 1 0 -1 -1 1 -1 1 1 0 0 -1 -1 -1 0 1 -1 0 -1 1 1 0 0 1 0 0 1 0 0 0 1 0 -1 0 0 0 0 0 1 0 0 1 0 -1 0 0 0 0 -1 1 0 0 0 1 -1 1 0 1 0 -1 0 1 0 0 0 -1 -1 0 0 1 -1 0 1 1 0 1 1 0 | |
| | -1 0 1 -1 0 0 1 -1 1 0 0 0 0 -1 0 -1 -1 1 0 -1 -1 -1 1 0 -1 -1 -1 0 0 0 1 0 -1 1 0 1 0 -1 0 1 0 1 0 1 1 1 -1 1 0 0 0 1 0 0 0 0 -1 1 1 1 0 -1 0 1 -1 0 -1 0 1 -1 1 0 1 -1 0 1 0 1 0 0 0 1 0 0 0 1 0 1 1 0 0 0 -1 0 0 1 -1 -1 1 0 -1 1 0 -1 0 0 0 0 0 0 -1 0 1 1 -1 1 -1 -1 1 0 -1 1 0 -1 1 0 0 0 -1 -1 1 -1 1 0 -1 -1 0 0 1 0 0 1 0 1 0 1 0 0 1 0 1 0 1 -1 0 1 0 0 -1 1 0 0 0 0 0 0 0 0 0 1 0 0 0 1 1 0 1 0 -1 0 0 1 1 0 0 1 0 0 0 1 -1 0 0 0 -1 0 1 0 1 1 0 0 0 0 -1 0 1 0 1 0 1 0 0 1 -1 1 0 -1 0 -1 1 1 0 0 -1 0 -1 1 0 0 -1 0 0 0 0 -1 0 0 1 0 0 0 0 0 1 0 -1 1 0 1 -1 -1 0 -1 1 0 0 0 1 0 1 1 1 1 0 -1 -1 0 0 0 0 0 1 -1 0 0 0 0 -1 -1 0 0 -1 1 -1 1 -1 0 0 0 0 0 0 0 1 0 -1 0 -1 -1 1 0 0 0 0 -1 -1 -1 1 -1 -1 0 1 0 1 1 -1 -1 0 1 0 0 0 0 -1 -1 1 0 0 1 0 0 0 0 0 0 0 -1 1 -1 0 1 0 0 0 1 0 -1 -1 1 0 0 -1 1 -1 1 0 1 0 0 -1 0 -1 1 0 -1 0 0 0 1 0 0 -1 1 0 1 0 1 0 1 1 1 0 1 0 0 1 0 0 1 0 -1 1 1 0 0 0 1 -1 -1 1 0 0 -1 -1 -1 -1 1 1 0 0 0 -1 1 0 0 0 0 0 -1 0 0 0 0 1 0 1 1 0 0 -1 -1 0 0 0 0 1 0 0 0 1 0 0 1 0 0 1 0 0 1 1 0 -1 -1 1 0 -1 0 0 0 0 0 -1 -1 0 | |
| | 1 0 0 1 0 -1 0 0 -1 0 -1 -1 1 -1 0 0 -1 0 0 1 1 0 0 -1 1 0 0 1 0 -1 0 -1 -1 -1 1 | |
| | Sequence 15: 0 0 0 0 0 1 0 1 0 0 -1 -1 0 1 1 0 0 1 0 1 -1 0 -1 1 0 0 1 -1 1 1 0 0 0 0 1 1 0 1 -1 -1 1 0 0 0 1 0 1 0 0 -1 0 0 1 1 1 -1 -1 -1 1 0 0 -1 0 1 0 -1 0 1 1 0 -1 1 0 -1 1 -1 -1 0 -1 0 -1 0 0 -1 0 0 0 1 -1 1 0 0 1 -1 0 0 0 -1 -1 0 0 1 0 0 -1 -1 1 0 -1 1 -1 -1 1 1 -1 1 1 -1 0 0 0 0 1 0 0 1 -1 0 0 0 1 0 0 0 -1 -1 1 1 0 -1 1 -1 1 0 0 1 1 0 1 -1 -1 -1 1 0 0 -1 -1 0 0 -1 -1 -1 0 1 0 0 -1 1 0 -1 0 0 0 1 1 0 -1 1 1 0 0 0 0 0 -1 -1 1 0 0 0 0 0 0 -1 1 0 -1 1 0 1 0 0 1 0 0 0 0 -1 1 0 -1 0 -1 -1 0 -1 1 -1 -1 -1 -1 0 1 -1 -1 -1 1 0 -1 -1 1 0 1 0 -1 0 0 0 0 0 0 0 0 -1 1 0 0 1 0 1 -1 -1 -1 1 0 -1 0 1 0 -1 -1 0 0 1 0 1 0 0 -1 1 -1 1 1 0 1 0 0 0 -1 1 -1 -1 -1 -1 -1 1 0 -1 0 0 -1 -1 -1 -1 0 0 1 0 -1 1 -1 0 1 0 -1 1 0 0 0 -1 1 0 1 1 0 0 0 0 -1 1 1 0 1 1 0 0 -1 -1 0 1 0 0 -1 1 1 0 0 0 -1 -1 0 1 0 0 0 0 1 0 1 0 0 0 -1 0 1 0 1 0 0 0 0 -1 0 0 0 0 0 0 1 1 1 -1 1 0 0 1 0 0 0 1 0 0 0 0 0 -1 1 -1 -1 0 0 0 -1 1 1 0 0 0 -1 0 0 -1 0 1 1 0 0 0 0 0 0 1 0 0 -1 1 -1 0 | |
| | 0 1 -1 -1 0 0 -1 0 -1 0 0 0 1 1 1 0 -1 1 1 0 1 -1 -1 0 0 -1 1 0 1 0 -1 -1 1 -1 -1 1 0 0 -1 -1 1 0 1 -1 0 -1 -1 1 0 0 -1 0 0 -1 0 0 0 1 0 1 0 0 0 0 0 1 0 0 1 0 -1 0 0 0 0 1 1 0 0 0 -1 -1 1 0 1 0 1 0 -1 0 0 0 -1 -1 0 0 1 -1 0 -1 1 0 -1 1 0 -1 0 -1 1 0 0 1 -1 1 0 0 0 0 -1 0 1 1 1 0 1 -1 -1 -1 0 1 1 -1 0 0 0 1 0 1 -1 0 1 0 -1 0 -1 0 1 0 -1 -1 -1 -1 1 0 0 0 -1 0 0 0 0 -1 -1 -1 -1 0 1 0 -1 -1 0 1 0 -1 -1 -1 0 -1 1 0 -1 0 1 0 0 0 -1 0 0 0 -1 0 1 -1 0 0 0 1 0 0 1 -1 1 -1 0 -1 1 0 1 0 0 0 0 0 0 1 0 1 -1 1 -1 1 1 -1 0 1 -1 0 -1 1 0 0 0 -1 -1 -1 1 1 0 -1 1 0 0 1 0 0 -1 0 1 0 -1 0 0 1 0 -1 0 1 1 0 -1 0 0 -1 1 0 0 0 0 0 0 0 0 0 1 0 0 0 1 -1 0 1 0 1 0 0 -1 -1 0 0 1 0 0 0 -1 1 0 0 0 -1 0 1 0 -1 -1 0 0 0 0 1 0 1 0 1 0 1 0 0 -1 -1 -1 0 1 0 -1 -1 -1 0 0 1 0 -1 -1 0 0 1 0 0 0 0 1 0 0 1 0 0 0 0 0 1 0 -1 1 0 -1 -1 -1 0 -1 -1 0 0 0 -1 0 -1 1 -1 1 0 1 -1 0 0 0 0 0 1 1 0 0 0 0 -1 1 0 0 -1 -1 1 -1 1 0 0 0 0 0 0 0 1 0 1 0 1 -1 1 0 0 0 0 1 -1 1 1 1 1 0 1 0 -1 -1 -1 1 0 1 0 0 0 0 1 1 1 0 0 1 0 0 0 0 0 0 0 1 -1 1 0 1 0 0 0 1 0 -1 -1 1 0 0 -1 -1 -1 1 0 -1 0 0 | |
| | -1 0 -1 1 0 -1 0 0 0 1 0 0 -1 -1 0 -1 0 -1 0 1 -1 1 0 1 0 0 1 0 0 1 0 1 -1 -1 0 0 0 -1 1 1 1 0 0 1 -1 -1 1 1 -1 0 0 0 -1 1 0 0 0 0 0 1 0 0 0 0 -1 0 -1 1 0 0 -1 1 0 0 0 0 -1 0 0 0 -1 0 0 -1 0 0 1 0 0 -1 1 0 -1 1 -1 0 1 0 0 0 0 0 1 1 0 -1 0 0 -1 0 1 0 0 1 0 -1 1 1 -1 0 0 -1 0 0 1 1 0 0 1 1 0 0 1 0 -1 0 -1 -1 1 -1 | |
| | Sequence 16: 0 0 0 0 0 1 0 1 0 0 1 1 0 1 -1 0 0 -1 0 -1 1 0 -1 1 0 0 1 1 -1 1 0 0 0 0 -1 1 0 1 1 1 -1 0 0 0 1 0 -1 0 0 -1 0 0 -1 -1 -1 -1 1 -1 -1 0 0 1 0 -1 0 1 0 -1 -1 0 1 1 0 -1 1 -1 1 0 -1 0 1 0 0 1 0 0 0 -1 -1 1 0 0 -1 1 0 0 0 -1 1 0 0 1 0 0 -1 1 1 0 1 -1 1 1 -1 -1 -1 -1 -1 -1 0 0 0 0 1 0 0 -1 1 0 0 0 -1 0 0 0 -1 -1 -1 1 0 -1 -1 -1 1 0 0 -1 1 0 -1 -1 1 -1 1 0 0 -1 -1 0 0 -1 -1 -1 0 1 0 0 -1 1 0 1 0 0 0 -1 1 0 1 -1 1 0 0 0 0 0 1 1 1 0 0 0 0 0 0 1 -1 0 -1 1 0 -1 0 0 1 0 0 0 0 -1 -1 0 1 0 1 -1 0 1 -1 -1 -1 1 -1 0 -1 -1 -1 1 1 0 -1 -1 -1 0 1 0 -1 0 0 0 0 0 0 0 0 -1 -1 0 0 1 0 -1 -1 -1 -1 -1 0 1 0 -1 0 -1 1 0 0 1 0 1 0 0 1 1 -1 1 1 0 -1 0 0 0 1 -1 1 1 -1 -1 -1 1 0 -1 0 0 -1 1 -1 1 0 0 1 0 -1 1 1 0 -1 0 1 -1 0 0 0 1 -1 0 -1 | |
| | 1 0 0 0 0 -1 -1 -1 0 1 1 0 0 -1 -1 0 1 0 0 1 -1 -1 0 0 0 -1 -1 0 1 0 0 0 0 1 0 -1 0 0 0 1 0 1 0 1 0 0 0 0 -1 0 0 0 0 0 0 -1 1 -1 -1 -1 0 0 -1 0 0 0 1 0 0 0 0 0 -1 -1 1 1 0 0 0 1 -1 -1 0 0 0 1 0 0 1 0 -1 1 0 0 0 0 0 0 1 0 0 1 1 -1 0 0 -1 -1 1 0 0 -1 0 1 0 0 0 1 -1 1 0 -1 -1 1 0 -1 -1 -1 0 0 -1 -1 0 1 0 1 1 1 1 -1 1 0 0 -1 1 -1 0 -1 -1 0 1 -1 -1 0 0 1 0 0 1 0 0 0 1 0 1 0 0 0 0 0 -1 0 0 1 0 -1 0 0 0 0 -1 -1 0 0 0 -1 -1 -1 0 -1 0 1 0 1 0 0 0 -1 -1 0 0 -1 1 0 1 -1 0 -1 -1 0 1 0 -1 1 0 0 -1 1 1 0 0 0 0 -1 0 1 -1 1 0 1 -1 1 -1 0 -1 -1 1 0 0 0 -1 0 1 1 0 -1 0 1 0 1 0 1 0 1 -1 1 1 -1 0 0 0 -1 0 0 0 0 -1 -1 -1 1 0 -1 0 -1 1 0 1 0 -1 1 1 0 -1 -1 0 -1 0 -1 0 0 0 1 0 0 0 1 0 -1 1 0 0 0 1 0 0 1 -1 -1 1 0 -1 1 0 1 0 0 0 0 0 0 1 0 -1 1 -1 -1 1 -1 1 0 -1 1 0 1 -1 0 0 0 1 -1 -1 -1 -1 0 -1 -1 0 0 -1 0 0 1 0 1 0 1 0 0 -1 0 1 0 1 1 0 -1 0 0 1 1 0 0 0 0 0 0 0 0 0 -1 0 0 0 1 1 0 1 0 1 0 0 -1 1 0 0 -1 0 0 0 1 -1 0 0 0 1 0 -1 0 1 -1 0 0 0 0 -1 0 -1 0 1 0 1 0 0 -1 -1 1 0 1 0 1 -1 1 0 0 -1 0 -1 1 0 0 1 0 0 0 0 -1 0 0 1 0 0 0 0 0 -1 0 1 1 0 -1 1 1 0 1 1 | |
| | 0 0 0 -1 0 -1 1 1 -1 0 -1 -1 0 0 0 0 0 -1 1 0 0 0 0 -1 1 0 0 1 -1 -1 1 1 0 0 0 0 0 0 0 -1 0 1 0 -1 1 1 0 0 0 0 -1 1 1 1 1 -1 0 1 0 -1 -1 -1 1 0 1 0 0 0 0 -1 1 -1 0 0 1 0 0 0 0 0 0 0 1 -1 1 0 -1 0 0 0 1 0 1 -1 1 0 0 -1 -1 -1 1 0 1 0 0 1 0 -1 1 0 1 0 0 0 1 0 0 -1 1 0 1 0 -1 0 1 -1 1 0 -1 0 0 -1 0 0 1 0 -1 1 1 0 0 0 -1 -1 1 1 0 0 -1 1 -1 -1 -1 1 0 0 0 1 1 0 0 0 0 0 1 0 0 0 0 1 0 -1 1 0 0 1 1 0 0 0 0 1 0 0 0 1 0 0 1 0 0 1 0 0 1 1 0 -1 1 -1 0 1 0 0 0 0 0 1 1 0 1 0 0 -1 0 -1 0 0 1 0 -1 -1 1 1 0 0 -1 0 0 1 1 0 0 1 -1 0 0 -1 0 -1 0 -1 1 -1 -1 | |

Table 2 shows sequences with different sequence lengths (namely, N). It can be understood that, when channel quality is relatively poor or there are a relatively large quantity of users, using a sequence with a long sequence length N to generate a preamble sequence can improve performance of a UWB system. This is because a longer sequence length N of a sequence indicates a larger quantity of non-zero elements in the sequence and a larger amplitude of a periodic autocorrelation main lobe of a preamble sequence generated by using the sequence. In other words, a larger ratio of the amplitude of the periodic autocorrelation main lobe to an amplitude of a side lobe of the preamble sequence helps identify a position of the autocorrelation main lobe of the preamble sequence (for example, helps determine a receiving time of a ranging signal in a ranging scenario). In this way, performance of the UWB system is improved. When channel quality is relatively good, using a sequence with a relatively short sequence length N to generate the preamble sequence can reduce a sending delay of the preamble sequence.

For better description, performance of the preamble sequence designed in this embodiment of this application is described below by using examples with reference to a simulation result of autocorrelations of and a cross-correlation between preamble sequences.

For example, the sequence 1 and the sequence 2 with a length of 63 in Table 2 are used as an example. A simulation result of periodic autocorrelations of and a periodic cross-correlation between the sequences are shown in FIG. 16. FIG. 16 is a diagram of a simulation result of autocorrelations of and a cross-correlation between the two sequences with a length of 63 according to an embodiment of this application. As shown in FIG. 16, in Table 2, amplitudes of periodic autocorrelation main lobes of the sequence 1 and the sequence 2 with a length of 63 are both 32, and amplitudes of periodic autocorrelation side lobes are 4; while in Table 2, an amplitude of a periodic cross-correlation side lobe between the sequence 1 and the sequence 2 with a length of 63 is 4, which meets the welch bound. In FIG. 16, a horizontal coordinate represents a value of τ in a periodic autocorrelation function and a periodic cross-correlation function, and a vertical coordinate represents an amplitude of the periodic autocorrelation and periodic cross-correlation. It can be learned that sequences in the sequence set have relatively small autocorrelation side lobes and a relatively small cross-correlation side lobe. Therefore, when the sequence in the sequence set is used as the preamble sequence of the UWB system, good synchronization performance and anti-interference performance are achieved.

The communication apparatus in this embodiment of this application determines a sequence from the sequence set as the preamble sequence. Because the sequence in the sequence set has a relatively small autocorrelation side lobe, an autocorrelation property of the preamble sequence is effectively ensured, so that the UWB system has relatively good synchronization performance. In addition, a cross-correlation side lobe between any two sequences in the sequence set is also relatively small, so that an anti-interference capability of the UWB system is improved. In addition, because the preamble sequence in this embodiment of this application is newly designed, the preamble sequence does not interfere with an existing UWB device.

### Embodiment 4

Embodiment 4 of this application mainly describes allocating a preamble sequence to a device through configuration.

Optionally, embodiment 4 of this application may be implemented in combination with embodiment 3, or may be implemented independently. This is not limited in this application. When embodiment 4 of this application is implemented in combination with embodiment 3, embodiment 3 is performed after embodiment 4 of this application. For specific content, refer to the following descriptions.

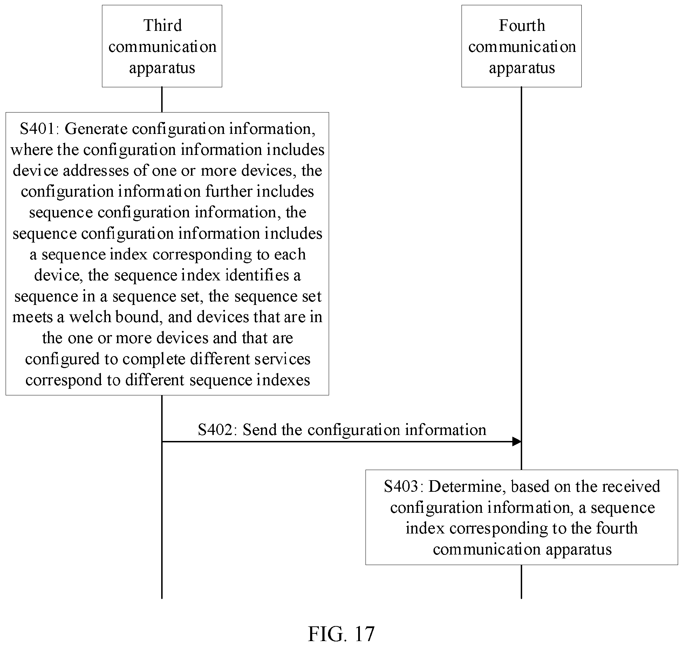

FIG. 17 is another schematic flowchart of an information exchange method according to an embodiment of this application. A third communication apparatus in the method may be a PAN coordinator in FIG. 1 or FIG. 2, and a fourth communication apparatus may be any device other than the PAN coordinator in FIG. 1 or FIG. 2. As shown in FIG. 17, the information exchange method includes but is not limited to the following steps.

S401: The third communication apparatus generates configuration information, where the configuration information includes device addresses of one or more devices, the configuration information further includes sequence configuration information, the sequence configuration information includes a sequence index corresponding to each device, the sequence index identifies a sequence in a sequence set, the sequence set meets a welch bound, and devices that are in the one or more devices and that are configured to complete different services correspond to different sequence indexes.

S402: The third communication apparatus sends the configuration information. For example, the third communication apparatus sends the configuration information in a broadcast manner.

Correspondingly, one or more communication apparatuses receive the configuration information. It can be understood that the device address identifies a device. The device address in this embodiment of this application may be a complete address, for example, a complete MAC address, or may be a part of a complete address, for example, first 16 bits or first 8 bits of a MAC address. An implementation of the device address is not limited in this embodiment of this application. In some embodiments, the device address included in the configuration information may alternatively be replaced with a device identifier.

Optionally, the sequence configuration information includes a sequence index corresponding to each of the one or more devices, and the sequence index identifies a sequence in the sequence set. The sequence configuration information is used to determine a preamble sequence. For example, the preamble sequence may be a sequence identified by a sequence index or a sequence obtained by repeating, one or more times, a sequence identified by a sequence index. The sequence set meets a welch bound, that is, periodic tolerance of the sequence set has a minimum value. For specific implementation of the sequence set, refer to the related descriptions in embodiment 4. Details are not described herein again. It can be understood that sequence indexes of sequences are not shown in Table 2. In actual application, sequence indexes may be set for the sequences in Table 2, and one sequence index identifies one sequence in Table 2.

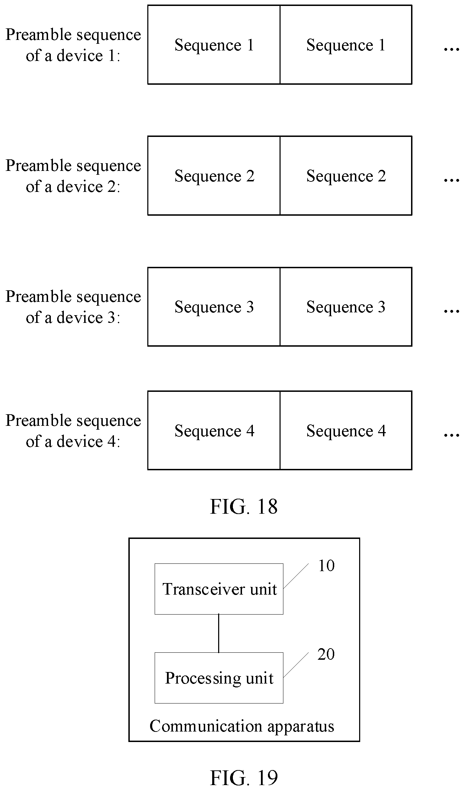

Optionally, devices that are in the one or more devices and that are configured to jointly complete a service correspond to a same sequence index. In other words, a plurality of devices may correspond to one sequence index. Devices that are in the one or more devices and that are configured to complete different services correspond to different sequence indexes. In other words, the devices that execute different services correspond to different sequence indexes. For example, the configuration information includes four device addresses, which are respectively device addresses of a device 1 to a device 4. The four devices are configured to complete four different services respectively. Sequence indexes corresponding to the device 1 to the device 4 in the sequence configuration information are 1, 2, 3, and 4 respectively. With reference to the sequences shown in Table 2, it is assumed that the sequence indexes 1, 2, 3, and 4 respectively identify a sequence 1, a sequence 2, a sequence 3, and a sequence 4 in the second row in Table 2. Preamble sequences of the four devices are shown in FIG. 18. FIG. 18 is yet another diagram of preamble sequences according to an embodiment of this application. As shown in FIG. 18, a preamble sequence of the device 1 is the sequence 1 in the second row in Table 2 repeated one or more times, a preamble sequence of the device 2 is the sequence 2 in the second row in Table 2 repeated one or more times, a preamble sequence of the device 3 is the sequence 3 in the second row in Table 2 repeated one or more times, and a preamble sequence of the device 4 is the sequence 4 in the second row in Table 2 repeated one or more times.

S403: The fourth communication apparatus determines, based on the received configuration information, a sequence index corresponding to the fourth communication apparatus.

Optionally, after receiving the configuration information broadcast by the third communication apparatus, the one or more communication apparatuses may determine sequence indexes corresponding to the one or more communication apparatuses. For ease of description, that the fourth communication apparatus receives the configuration information is used as an example below for description.

After receiving the configuration information, the fourth communication apparatus searches, based on the device addresses of the one or more devices included in the configuration information, the sequence configuration information included in the configuration information for a sequence index corresponding to a device matching a device address of the fourth communication apparatus. After determining the sequence index corresponding to the fourth communication apparatus, the fourth communication apparatus uses a sequence identified by the sequence index as a preamble sequence, and sends a PPDU including the preamble sequence.

It can be understood that, when this embodiment of this application is implemented in combination with embodiment 3, a first communication apparatus in embodiment 3 may be the third communication apparatus or the fourth communication apparatus in this embodiment of this application, to perform a corresponding operation.

A coordinator (coordinator) in this embodiment of this application configures different sequence indexes for the devices configured to complete different services. The sequence indexes identify sequences in the sequence set, and the sequence set meets the welch bound. In other words, the sequences in the sequence set have relatively small autocorrelation side lobes and a relatively small cross-correlation side lobe. This effectively ensures an autocorrelation property of the preamble sequence, enables a UWB system to have relatively good synchronization performance, and further improves an anti-interference capability of the UWB system.

The foregoing content describes in detail the method provided in this application. To facilitate implementation of the foregoing solutions in embodiments of this application, embodiments of this application further provide corresponding apparatuses or devices.

In this application, the communication apparatus is divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, division into modules is an example in this application, and is merely logical function division. During actual implementation, another division manner may be used. The following describes in detail the communication apparatuses in embodiments of this application with reference to FIG. 19 to FIG. 21.

FIG. 19 is a diagram of a structure of a communication apparatus according to an embodiment of this application. As shown in FIG. 19, the communication apparatus includes a transceiver unit 10 and a processing unit 20.

In some embodiments of this application, the communication apparatus may be the first communication apparatus shown above or a chip in the first communication apparatus. In other words, the communication apparatus shown in FIG. 19 may be configured to perform steps, functions, or the like performed by the first communication apparatus in the foregoing method embodiments.

In a design, the processing unit 20 is configured to generate a PPDU, where the PPDU includes a preamble sequence, the preamble sequence is generated based on a sequence set, and at least some sequences in the sequence set have a zero correlation zone; and the transceiver unit 10 is configured to send the PPDU.

In a possible implementation, the transceiver unit 10 is further configured to receive configuration information.

For specific descriptions of the PPDU, the preamble sequence, the sequence set, the configuration information, and the like, refer to the foregoing method embodiment 1. Details are not described herein again.

It can be understood that specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 10 may be configured to perform step S102 shown in FIG. 8, and the processing unit 20 may be configured to perform step S101 shown in FIG. 8.

In another design, the processing unit 20 is configured to generate a PPDU, where the PPDU includes a preamble sequence, the preamble sequence is a sequence in a sequence set, and the sequence set meets a welch bound; and the transceiver unit 10 is configured to send the PPDU. In a possible implementation, the transceiver unit 10 is further configured to receive configuration information.

For specific descriptions of the PPDU, the preamble sequence, the sequence set, the configuration information, and the like, refer to the foregoing method embodiment 3 . Details are not described herein again.

It can be understood that specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 10 may be configured to perform step S302 shown in FIG. 15, and the processing unit 20 may be configured to perform step S301 shown in FIG. 15.

Still refer to FIG. 19. In some other embodiments of this application, the communication apparatus may be the second communication apparatus shown above or a chip in the second communication apparatus. In other words, the communication apparatus shown in FIG. 19 may be configured to perform steps, functions, or the like performed by the second communication apparatus in the foregoing method embodiments.

In a design, the transceiver unit 10 is configured to receive a PPDU, where the PPDU includes a preamble sequence, the preamble sequence is generated based on a sequence set, and at least some sequences in the sequence set have a zero correlation zone; and the processing unit 20 is configured to process the PPDU.

For specific descriptions of the PPDU, the preamble sequence, the sequence set, and the like, refer to the foregoing method embodiment 1. Details are not described herein again.

It can be understood that specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 10 may be configured to receive the PPDU, and the processing unit 20 may be configured to perform step S103 shown in FIG. 8.

In another design, the transceiver unit 10 is configured to send a PPDU, where the PPDU includes a preamble sequence, the preamble sequence is a sequence in a sequence set, and the sequence set meets a welch bound; and the processing unit 20 is configured to process the PPDU.

For specific descriptions of the PPDU, the preamble sequence, the sequence set, and the like, refer to the foregoing method embodiment 3. Details are not described herein again.

It can be understood that specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 10 may be configured to receive the PPDU, and the processing unit 20 may be configured to perform step S303 shown in FIG. 15.

Still refer to FIG. 19. In some other embodiments of this application, the communication apparatus may be the third communication apparatus shown above or a chip in the third communication apparatus. In other words, the communication apparatus shown in FIG. 19 may be configured to perform steps, functions, or the like performed by the third communication apparatus in the foregoing method embodiments.

In a design, the processing unit 20 is configured to generate configuration information. The configuration information includes device addresses of one or more devices, the configuration information further includes sequence configuration information, and the sequence configuration information includes one or more of the following: a sequence index corresponding to each device, a plurality of gaps corresponding to each device, or positions of the plurality of gaps in a sequence. A gap indicates a quantity of consecutive 0s inserted at a position in a sequence, the sequence belongs to a sequence set, a sequence index identifies a sequence in the sequence set, at least some sequences in the sequence set have a zero correlation zone, and devices that are in the one or more devices and that are configured to complete different services correspond to different sequence indexes. The transceiver unit 10 is configured to send the configuration information.

For specific descriptions of the configuration information, refer to the foregoing method embodiment 2. Details are not described herein again.

It can be understood that specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 10 may be configured to perform step S202 shown in FIG. 14, and the processing unit 20 may be configured to perform step S201 shown in FIG. 14.

In another design, the processing unit 20 is configured to generate configuration information, where the configuration information includes device addresses of one or more devices, the configuration information further includes sequence configuration information, the sequence configuration information includes a sequence index corresponding to each device, the sequence index identifies a sequence in a sequence set, the sequence set meets a welch bound, and devices that are in the one or more devices and that are configured to complete different services correspond to different sequence indexes. The transceiver unit 10 is configured to send the configuration information.

For specific descriptions of the configuration information, refer to the foregoing method embodiment 4. Details are not described herein again.

It can be understood that specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 10 may be configured to perform step S402 shown in FIG. 17, and the processing unit 20 may be configured to perform step S401 shown in FIG. 17.

Still refer to FIG. 19. In some other embodiments of this application, the communication apparatus may be the fourth communication apparatus shown above or a chip in the fourth communication apparatus. In other words, the communication apparatus shown in FIG. 19 may be configured to perform steps, functions, or the like performed by the fourth communication apparatus in the foregoing method embodiments.

In a design, the transceiver unit 10 is configured to receive configuration information. The configuration information includes device addresses of one or more devices, the configuration information further includes sequence configuration information, and the sequence configuration information includes one or more of the following: a sequence index corresponding to each device, a plurality of gaps corresponding to each device, or positions of the plurality of gaps in a sequence. A gap indicates a quantity of consecutive 0s inserted at a position in a sequence, the sequence belongs to a sequence set, a sequence index identifies a sequence in the sequence set, at least some sequences in the sequence set have a zero correlation zone, and devices that are in the one or more devices and that are configured to complete different services correspond to different sequence indexes. The processing unit 20 is configured to determine, based on the configuration information, one or more of a sequence index corresponding to the communication apparatus, a plurality of gaps corresponding to the communication apparatus, and positions of the plurality of gaps in a sequence.

In a possible implementation, the transceiver unit 10 is further configured to send a PPDU, where the PPDU includes a preamble sequence, and the preamble sequence is generated based on the sequence index and the plurality of gaps corresponding to the communication apparatus.

For specific descriptions of the configuration information, the PPDU, and the like, refer to the foregoing method embodiment 2. Details are not described herein again.

It can be understood that specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 10 may be configured to receive the configuration information and send the PPDU, and the processing unit 20 may be configured to perform step S203 shown in FIG. 14.

In another design, the transceiver unit 10 is configured to receive configuration information, where the configuration information includes device addresses of one or more devices, the configuration information further includes sequence configuration information, the sequence configuration information includes a sequence index corresponding to each device, the sequence index identifies a sequence in a sequence set, the sequence set meets a welch bound, and devices that are in the one or more devices and that are configured to complete different services correspond to different sequence indexes. The processing unit 20 is configured to determine, based on the configuration information, a sequence index corresponding to the communication apparatus.

In a possible implementation, the transceiver unit 10 is further configured to send a PPDU, where the PPDU includes a preamble sequence, and the preamble sequence is a sequence identified by the sequence index corresponding to the communication apparatus.

For specific descriptions of the configuration information and the PPDU, refer to the foregoing method embodiment 4. Details are not described herein again.

It can be understood that specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 10 may be configured to receive the configuration information and send the PPDU, and the processing unit 20 may be configured to perform step S403 shown in FIG. 17.

The foregoing describes the communication apparatus in embodiments of this application. The following describes a possible product form of the communication apparatus. It should be understood that a product in any form that has a function of the communication apparatus in FIG. 19 falls within the protection scope of embodiments of this application. It should be further understood that the following descriptions are merely examples, and do not limit a product form of the communication apparatus in embodiments of this application.

In a possible implementation, in the communication apparatus shown in FIG. 19, the processing unit 20 may be one or more processors, and the transceiver unit 10 may be a transceiver. Alternatively, the transceiver unit 10 may be a sending unit and a receiving unit. The sending unit may be a transmitter. The receiving unit may be a receiver. The sending unit and the receiving unit are integrated into one device, for example, a transceiver. In embodiments of this application, the processor and the transceiver may be coupled, or the like. A connection manner between the processor and the transceiver is not limited in embodiments of this application. In a process of performing the foregoing method, a process of sending information (for example, sending the PPDU or the configuration information) in the foregoing method may be understood as a process of outputting the foregoing information by the processor. When outputting the information, the processor outputs the information to a transceiver, so that the transceiver transmits the information. After the information is output by the processor, other processing may further need to be performed on the information before the information arrives at the transceiver. Similarly, a process of receiving information (for example, receiving the PPDU or the configuration information) in the foregoing method may be understood as a process of receiving the input information by the processor. When the processor receives the input information, the transceiver receives the foregoing information, and inputs the information into the processor. Further, after the transceiver receives the foregoing information, other processing may need to be performed on the information before the information is input into the processor.

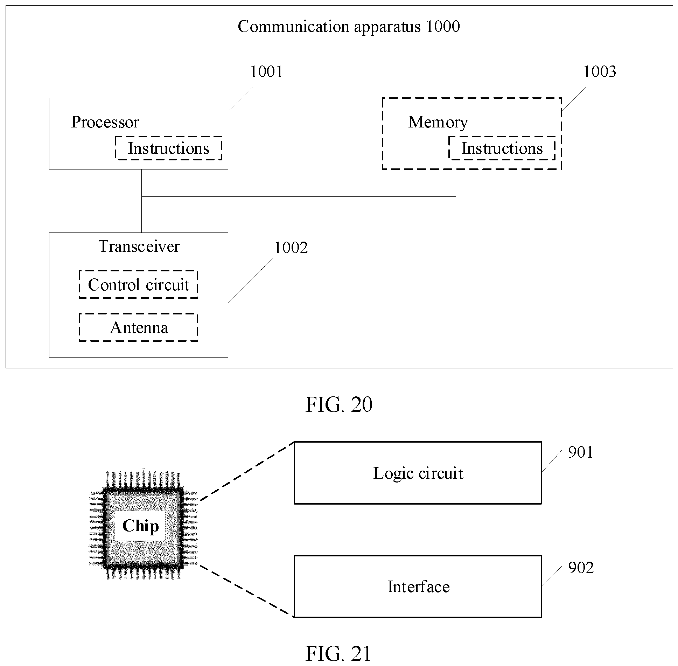

FIG. 20 is a diagram of a structure of a communication apparatus 1000 according to an embodiment of this application. The communication apparatus 1000 may be a first communication apparatus, a second communication apparatus, a third communication apparatus, a fourth communication apparatus, or a chip in the first communication apparatus, the second communication apparatus, the third communication apparatus, or the fourth communication apparatus. FIG. 20 shows only main components of the communication apparatus 1000. **In** addition to a processor 1001 and a transceiver 1002, the communication apparatus may further include a memory 1003 and an input/output apparatus (which is not shown in the figure).

The processor 1001 is mainly configured to process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

After the communication apparatus is powered on, the processor 1001 may read the software program in the memory 1003, interpret and execute instructions of the software program, and process the data of the software program. When data needs to be sent wirelessly, the processor 1001 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form to the outside. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

**In** another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

**In** a design, the communication apparatus 1000 may be configured to perform a function of the first communication apparatus in embodiment 1. The processor 1001 may be configured to perform step S101 in FIG. 8, and/or configured to perform another process of the technology described in this specification. The transceiver 1002 may be configured to perform step S102 in FIG. 8, and/or configured to perform another process of the technology described in this specification.

In another design, the communication apparatus 1000 may be configured to perform a function of the second communication apparatus in embodiment 1. The processor 1001 may be configured to perform step S103 in FIG. 8, and/or configured to perform another process of the technology described in this specification. The transceiver 1002 may be configured to receive a PPDU processed in step S 103 in FIG. 8, and/or configured to perform another process of the technology described in this specification.

In a design, the communication apparatus 1000 may be configured to perform a function of the third communication apparatus in embodiment 2. The processor 1001 may be configured to perform step S201 in FIG. 14, and/or configured to perform another process of the technology described in this specification. The transceiver 1002 may be configured to perform step S202 in FIG. 14, and/or configured to perform another process of the technology described in this specification.

In another design, the communication apparatus 1000 may be configured to perform a function of the fourth communication apparatus in embodiment 2. The processor 1001 may be configured to perform step S203 in FIG. 14, and/or configured to perform another process of the technology described in this specification. The transceiver 1002 may be configured to receive the configuration information in FIG. 14, and/or configured to perform another process of the technology described in this specification.

In a design, the communication apparatus 1000 may be configured to perform a function of the first communication apparatus in embodiment 3. The processor 1001 may be configured to perform step S301 in FIG. 15, and/or configured to perform another process of the technology described in this specification. The transceiver 1002 may be configured to perform step S302 in FIG. 15, and/or configured to perform another process of the technology described in this specification.

In another design, the communication apparatus 1000 may be configured to perform a function of the second communication apparatus in embodiment 3. The processor 1001 may be configured to perform step S303 in FIG. 15, and/or configured to perform another process of the technology described in this specification. The transceiver 1002 may be configured to receive a PPDU processed in step S303 in FIG. 15, and/or configured to perform another process of the technology described in this specification.

In a design, the communication apparatus 1000 may be configured to perform a function of the third communication apparatus in embodiment 4. The processor 1001 may be configured to perform step S401 in FIG. 17, and/or configured to perform another process of the technology described in this specification. The transceiver 1002 may be configured to perform step S402 in FIG. 17, and/or configured to perform another process of the technology described in this specification.

In another design, the communication apparatus 1000 may be configured to perform a function of the fourth communication apparatus in embodiment 4. The processor 1001 may be configured to perform step S403 in FIG. 17, and/or configured to perform another process of the technology described in this specification. The transceiver 1002 may be configured to receive the configuration information in FIG. 17, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. A transceiver circuit, an interface, or an interface circuit configured to implement the receiving and sending functions may be separated, or may be integrated together. The transceiver circuit, the interface, or the interface circuit may be configured to read and write code or data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in the foregoing method embodiments. The computer program may be fixed in the processor 1001. In this case, the processor 1001 may be implemented by hardware.

In an implementation, the communication apparatus 1000 may include a circuit. The circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, such as a complementary metal oxide semiconductor (complementary metal oxide semiconductor, CMOS), an N-type metal-oxide-semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited to this, and a structure of the communication apparatus may not be limited by FIG. 20. The communication apparatus may be an independent device or may be a part of a large device. For example, the communication apparatus may be:
(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

In another possible implementation, in the communication apparatus shown in FIG. 19, the processing unit 20 may be one or more logic circuits, and the transceiver unit 10 may be an input/output interface, or referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 21 is a diagram of another structure of a communication apparatus according to an embodiment of this application. As shown in FIG. 21, the communication apparatus shown in FIG. 21 includes a logic circuit 901 and an interface 902. In other words, the processing unit 20 may be implemented through the logic circuit 901, and the transceiver unit 10 may be implemented through the interface 902. The logic circuit 901 may be a chip, a processing circuit, an integrated circuit or a system on chip (system on chip, SoC) chip, or the like. The interface 902 may be a communication interface, an input/output interface, a pin, or the like. For example, FIG. 21 is described with an example in which the communication apparatus is a chip. The chip includes the logic circuit 901 and the interface 902. It can be understood that the chip shown in this embodiment of this application may include a narrowband chip, an ultra-wideband chip, or the like. This is not limited in this embodiment of this application. Alternatively, the narrowband chip and the ultra-wideband chip may be integrated into one apparatus or chip, or may be independent of each other. Implementations of the narrowband chip and the ultra-wideband chip in a device are not limited in this embodiment of this application. For example, the foregoing steps of sending a PPDU and sending configuration information may be performed by the ultra-wideband chip. Whether other steps are performed by the ultra-wideband chip is not limited in this embodiment of this application. In this embodiment of this application, the logic circuit and the interface may be coupled to each other. A specific connection manner of the logic circuit and the interface is not limited in this embodiment of this application.

For example, when the communication apparatus is configured to perform the method, function, or step performed by the first communication apparatus in embodiment 1, the logic circuit 901 is configured to generate a PPDU, where the PPDU includes a preamble sequence, the preamble sequence is generated based on a sequence set, the sequence set includes at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0. The interface 902 is configured to output the PPDU.

For example, when the communication apparatus is configured to perform the method, function, or step performed by the second communication apparatus in embodiment 1, the interface 902 is configured to input a PPDU, where the PPDU includes a preamble sequence, the preamble sequence is generated based on a sequence set, the sequence set includes at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0. The logic circuit 901 is configured to process the PPDU.

It can be understood that for specific descriptions of the PPDU, the preamble sequence, the sequence set, and the like, refer to the foregoing method embodiments. Details are not described herein again.

For example, when the communication apparatus is configured to perform the method, function, or step performed by the third communication apparatus in embodiment 2, the logic circuit 901 is configured to generate configuration information, where the configuration information includes device addresses of one or more devices, the configuration information further includes sequence configuration information, and the sequence configuration information includes one or more of the following: a sequence index corresponding to each device, a plurality of gaps corresponding to each device, or positions of the plurality of gaps in a sequence. A gap indicates a quantity of consecutive 0s inserted at a position in a sequence, the sequence belongs to a sequence set, a sequence index identifies a sequence in the sequence set, devices that are in the one or more devices and that are configured to complete different services correspond to different sequence indexes, the sequence set includes at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0. The interface 902 is configured to output the configuration information.

For example, when the communication apparatus is configured to perform the method, function, or step performed by the fourth communication apparatus in embodiment 2, the interface 902 is configured to input configuration information, where the configuration information includes device addresses of one or more devices, the configuration information further includes sequence configuration information, and the sequence configuration information includes one or more of the following: a sequence index corresponding to each device, a plurality of gaps corresponding to each device, or positions of the plurality of gaps in a sequence. A gap indicates a quantity of consecutive 0s inserted at a position in a sequence, the sequence belongs to a sequence set, a sequence index identifies a sequence in the sequence set, devices that are in the one or more devices and that are configured to complete different services correspond to different sequence indexes, the sequence set includes at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0. The logic circuit 901 is configured to determine, based on the configuration information, one or more of a sequence index corresponding to the fourth communication apparatus, a plurality of gaps corresponding to the fourth communication apparatus, and positions of the plurality of gaps in a sequence.

It can be understood that for specific descriptions of the configuration information, the sequence configuration information, the sequence set, and the like, refer to the foregoing method embodiments. Details are not described herein again.

For example, when the communication apparatus is configured to perform the method, function, or step performed by the first communication apparatus in embodiment 3, the logic circuit 901 is configured to generate a PPDU, where the PPDU includes a preamble sequence, the preamble sequence is a sequence in a sequence set, and the sequence set meets a welch bound. The interface 902 is configured to output the PPDU.

For example, when the communication apparatus is configured to perform the method, function, or step performed by the second communication apparatus in embodiment 3, the interface 902 is configured to input a PPDU, where the PPDU includes a preamble sequence, the preamble sequence is a sequence in a sequence set, and the sequence set meets a welch bound. The logic circuit 901 is configured to process the PPDU.

It can be understood that for specific descriptions of the PPDU, the preamble sequence, the sequence set, and the like, refer to the foregoing method embodiments. Details are not described herein again.

For example, when the communication apparatus is configured to perform the method, function, or step performed by the third communication apparatus in embodiment 4, the logic circuit 901 is configured to generate configuration information, where the configuration information includes device addresses of one or more devices, the configuration information further includes sequence configuration information, the sequence configuration information includes a sequence index corresponding to each device, the sequence index identifies a sequence in a sequence set, the sequence set meets a welch bound, and devices that are in the one or more devices and that are configured to complete different services correspond to different sequence indexes. The interface 902 is configured to output the configuration information.

For example, when the communication apparatus is configured to perform the method, function, or step performed by the fourth communication apparatus in embodiment 4, the interface 902 is configured to input configuration information, where the configuration information includes device addresses of one or more devices, the configuration information further includes sequence configuration information, the sequence configuration information includes a sequence index corresponding to each device, the sequence index identifies a sequence in a sequence set, the sequence set meets a welch bound, and devices that are in the one or more devices and that are configured to complete different services correspond to different sequence indexes. The logic circuit 901 is configured to determine, based on the configuration information, a sequence index corresponding to the communication apparatus.

It can be understood that for specific descriptions of the configuration information, the sequence configuration information, the sequence set, and the like, refer to the foregoing method embodiments. Details are not described herein again.

It can be understood that the communication apparatus shown in this embodiment of this application may implement the method provided in embodiments of this application in a form of hardware or in a form of software. This is not limited in this embodiment of this application.

For specific implementations of the embodiment shown in FIG. 21, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in embodiment 1 or embodiment 3.

An embodiment of this application further provides a wireless communication system. The wireless communication system includes a third communication apparatus and a fourth communication apparatus. The third communication apparatus and the fourth communication apparatus may be configured to perform the method in embodiment 2 or embodiment 4.

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer program. The computer program is used to implement operations and/or processing performed by the third communication apparatus in the method provided in this application.

This application further provides a computer program. The computer program is used to implement operations and/or processing performed by the fourth communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the third communication apparatus in the method provided in this application.

This application further provides a computer-readable storage medium. The computer-readable storage medium stores computer code. When the computer code is run on a computer, the computer is enabled to perform operations and/or processing performed by the fourth communication apparatus in the method provided in this application.

This application further provides a computer program product. The computer program product includes computer code or a computer program. When the computer code or the computer program is run on a computer, operations and/or processing performed by the first communication apparatus in the method provided in this application are performed.

This application further provides a computer program product. The computer program product includes computer code or a computer program. When the computer code or the computer program is run on a computer, operations and/or processing performed by the second communication apparatus in the method provided in this application are performed.

This application further provides a computer program product. The computer program product includes computer code or a computer program. When the computer code or the computer program is run on a computer, operations and/or processing performed by the third communication apparatus in the method provided in this application are performed.

This application further provides a computer program product. The computer program product includes computer code or a computer program. When the computer code or the computer program is run on a computer, operations and/or processing performed by the fourth communication apparatus in the method provided in this application are performed.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses, or units, and may also be connection in an electrical form, a mechanical form, or other forms.

The units described as separate parts may or may not be physically separate, and parts displayed as units may or may not be physical units, may be located in one position, or may be distributed on a plurality of network units. Some or all of the units may be selected based on actual requirements to achieve the technical effects of the solutions provided in embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and is sold or used as an independent product, the integrated unit may be stored in a storage medium. Based on such an understanding, the technical solutions of this application essentially, or the part contributing to the conventional technology, or all or some of the technical solutions may be implemented in a form of a software product. The computer software product is stored in a readable-storage medium, and includes several instructions for instructing a computer device (which may be a personal computer, a server, a network device, or the like) to perform all or some of the steps of the method described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An ultra-wideband-based physical layer protocol data unit PPDU transmission method, comprising:
generating, by a communication apparatus, a physical layer protocol data unit PPDU, wherein the PPDU comprises a preamble sequence, the preamble sequence is generated based on a sequence set, the sequence set comprises at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0; and
sending, by the communication apparatus, the PPDU.

2. The method according to claim 1, wherein before the generating, by a communication apparatus, a physical layer protocol data unit PPDU, the method further comprises:
receiving, by the communication apparatus, configuration information, wherein the configuration information comprises a device address of the communication apparatus, the configuration information further comprises sequence configuration information, and the sequence configuration information comprises one or more of the following: a sequence index corresponding to the communication apparatus, a plurality of gaps corresponding to the communication apparatus, or positions of the plurality of gaps in a target sequence; and
a gap corresponding to the communication apparatus indicates a quantity of consecutive 0s inserted at a position in the target sequence, the target sequence belongs to the sequence set, and a sequence index of the target sequence is the same as the sequence index corresponding to the communication apparatus.

3. An ultra-wideband-based physical layer protocol data unit PPDU transmission method, comprising:
receiving, by a communication apparatus, a physical layer protocol data unit PPDU, wherein the PPDU comprises a preamble sequence, the preamble sequence is generated based on a sequence set, at least some sequences in the sequence set have a zero correlation zone, the sequence set comprises at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0; and
processing, by the communication apparatus, the PPDU.

4. The method according to any one of claims 1 to 3, wherein any sequence in the sequence set comprises a first part and a second part, and a sum of an amplitude of an autocorrelation side lobe of the first part and an amplitude of an autocorrelation side lobe of the second part is 0.

5. The method according to any one of claims 1 to 4, wherein the sequence set comprises K sequences, both a length of the first sequence and a length of the second sequence are N, and a length of a zero correlation zone of the first sequence and the second sequence is Z, wherein K, N, and Z meet the following condition: $K = \frac{1}{2} \left⌊\frac{N}{Z}\right⌋ ,$ wherein $\left⌊\frac{N}{Z}\right⌋$
indicates rounding down $\frac{N}{Z}$ to the nearest integer.

6. The method according to any one of claims 1 to 5, wherein the preamble sequence is a target sequence in the sequence set, or the preamble sequence is obtained by inserting one or more 0s into a target sequence in the sequence set.

7. The method according to claim 6, wherein the preamble sequence is:
[a₁, 0ᵤ₁, a₂, 0ᵤ₂, ..., a_{P}, 0_{uP}, b₁, 0ᵥ₁, b₂, 0ᵥ₂, ..., b_{Q}, 0_{vQ}]; or the preamble sequence is obtained by repeating a sequence of [a₁, 0ᵤ₁, a₂, 0ᵤ₂, ..., a_{P}, 0_{uP}, b₁, 0ᵥ₁, b₂, 0ᵥ₂, ..., b_{Q}, 0v_{Q}] one or more times, wherein
a₁, a₂, ..., and a_{P} represent P-part elements obtained by splitting a first part of the target sequence, and b₁, b₂, ..., and b_{Q} represent Q-part elements obtained by splitting a second part of the target sequence; and
0ᵤ₁, 0ᵤ₂, ..., and 0_{uP} respectively represent (u1)^{th}, (u2)^{th}, ..., and (uP)^{th} consecutive 0s, 0ᵥ₁, 0ᵥ₂, ..., and 0_{vP} respectively represent (v1)^{th} (v2)^{th}, ..., and (vQ)^{th} consecutive 0s, u1, u2, ..., and uP and v1, v2, ..., and vQ are all integers greater than or equal to 0.

8. An information exchange method, comprising:
generating, by a communication apparatus, configuration information, wherein the configuration information comprises device addresses of one or more devices, the configuration information further comprises sequence configuration information, and the sequence configuration information comprises one or more of the following: a sequence index corresponding to each device, a plurality of gaps corresponding to each device, or positions of the plurality of gaps in a sequence, wherein
a gap indicates a quantity of consecutive 0s inserted at a position in a sequence, the sequence belongs to a sequence set, a sequence index identifies a sequence in the sequence set, devices that are in the one or more devices and that are configured to complete different services correspond to different sequence indexes, the sequence set comprises at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0; and
sending, by the communication apparatus, the configuration information.

9. An information exchange method, comprising:
receiving, by a communication apparatus, configuration information, wherein the configuration information comprises device addresses of one or more devices, the configuration information further comprises sequence configuration information, and the sequence configuration information comprises one or more of the following: a sequence index corresponding to each device, a plurality of gaps corresponding to each device, and positions of the plurality of gaps in a sequence, wherein
a gap indicates a quantity of consecutive 0s inserted at a position in a sequence, the sequence belongs to a sequence set, a sequence index identifies a sequence in the sequence set, devices that are in the one or more devices and that are configured to complete different services correspond to different sequence indexes, the sequence set comprises at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0; and
determining, by the communication apparatus based on the configuration information, one or more of a sequence index corresponding to the communication apparatus, a plurality of gaps corresponding to the communication apparatus, and positions of the plurality of gaps in a sequence.

10. The method according to claim 8 or 9, wherein any sequence in the sequence set comprises a first part and a second part, and a sum of an amplitude of an autocorrelation side lobe of the first part and an amplitude of an autocorrelation side lobe of the second part is 0.

11. The method according to any one of claims 8 to 10, wherein the sequence set comprises K sequences, both a length of the first sequence and a length of the second sequence are N, and a length of a zero correlation zone of the first sequence and the second sequence is Z, wherein K, N, and Z meet the following condition: $K = \frac{1}{2} \left⌊\frac{N}{Z}\right⌋ ,$ wherein $\left⌊\frac{N}{Z}\right⌋$
indicates rounding down $\frac{N}{Z}$ to the nearest integer.

12. The method according to any one of claims 8 to 11, wherein devices that are in the one or more devices and that are configured to jointly complete a service correspond to a same sequence index.

13. The method according to claim 9, wherein after the determining, by the communication apparatus based on the configuration information, one or more of a sequence index corresponding to the communication apparatus and a plurality of gaps corresponding to the communication apparatus, the method further comprises:
sending, by the communication apparatus, a PPDU, wherein the PPDU comprises a preamble sequence, and the preamble sequence is generated based on the sequence index corresponding to the communication apparatus, the plurality of gaps corresponding to the communication apparatus, and the positions of the plurality of gaps in the sequence.

14. The method according to claim 13, wherein any sequence in the sequence set comprises a first part and a second part, and a sequence identified by the sequence index corresponding to the communication apparatus is a target sequence; and
the preamble sequence is:
[a₁, 0ᵤ₁, a₂, 0ᵤ₂, ..., a_{P}, 0_{uP}, b₁, 0ᵥ₁, b₂, 0ᵥ₂, ..., b_{Q}, 0_{vQ}]; or the preamble sequence is obtained by repeating a sequence of [a₁, 0ᵤ₁, a₂, 0ᵤ₂, ..., a_{P}, 0_{uP}, b₁, 0ᵥ₁, b₂, 0ᵥ₂, ..., b_{Q}, 0_{vQ}] one or more times, wherein
a₁, a₂, ..., and a_{P} represent P-part elements obtained by splitting a first part of the target sequence, and b₁, b₂, ..., and b_{Q} represent Q-part elements obtained by splitting a second part of the target sequence; and
0ᵤ₁, 0ᵤ₂, ..., and 0_{uP} respectively represent (u1)^{th}, (u2)^{th}, ..., and (uP)^{th} consecutive 0s, 0ᵥ₁, 0ᵥ₂, ..., and 0_{vP} respectively represent (v1)^{th} (v2)^{th}, ..., and (vQ)^{th} consecutive 0s, u1, u2, ..., and uP and v1, v2, ..., and vQ are all integers greater than or equal to 0.

15. A communication apparatus, comprising:
a processing unit, configured to generate a physical layer protocol data unit PPDU, wherein the PPDU comprises a preamble sequence, the preamble sequence is generated based on a sequence set, the sequence set comprises at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0; and
a transceiver unit, configured to send the PPDU.

16. The apparatus according to claim 15, wherein the transceiver unit is further configured to:
receive configuration information, wherein the configuration information comprises a device address of the communication apparatus, the configuration information further comprises sequence configuration information, and the sequence configuration information comprises one or more of the following: a sequence index corresponding to the communication apparatus, a plurality of gaps corresponding to the communication apparatus, or positions of the plurality of gaps in a target sequence; and
a gap corresponding to the communication apparatus indicates a quantity of consecutive 0s inserted at a position in the target sequence, the target sequence belongs to the sequence set, and a sequence index of the target sequence is the same as the sequence index corresponding to the communication apparatus.

17. A communication apparatus, comprising:
a transceiver unit, configured to receive a physical layer protocol data unit PPDU, wherein the PPDU comprises a preamble sequence, the preamble sequence is generated based on a sequence set, the sequence set comprises at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0; and
a processing unit, configured to process the PPDU.

18. The apparatus according to any one of claims 15 to 17, wherein the sequence set comprises K sequences, both a length of the first sequence and a length of the second sequence are N, and a length of a zero correlation zone of the first sequence and the second sequence is Z, wherein K, N, and Z meet the following condition: $K = \frac{1}{2} \left⌊\frac{N}{Z}\right⌋ ,$ wherein $\left⌊\frac{N}{Z}\right⌋$
indicates rounding down $\frac{N}{Z}$ to the nearest integer.

19. The apparatus according to any one of claims 15 to 18, wherein the preamble sequence is a target sequence in the sequence set, or the preamble sequence is obtained by inserting one or more 0s into a target sequence in the sequence set.

20. The apparatus according to claim 19, wherein the preamble sequence is:
[a₁, 0ᵤ₁, a₂, 0ᵤ₂, ..., a_{P}, 0_{uP}, b₁, 0ᵥ₁, b₂, 0ᵥ₂, ..., b_{Q}, 0_{vQ}]; or the preamble sequence is obtained by repeating a sequence of [a₁, 0ᵤ₁, a₂, 0ᵤ₂, ..., a_{P}, 0_{uP}, b₁, 0ᵥ₁, b₂, 0ᵥ₂, ..., b_{Q}, 0_{vQ}] one or more times, wherein
a₁, a₂, ..., and a_{P} represent P-part elements obtained by splitting a first part of the target sequence, and b₁, b₂, ..., and b_{Q} represent Q-part elements obtained by splitting a second part of the target sequence; and
0ᵤ₁, 0ᵤ₂, ..., and 0_{uP} respectively represent (u1)^{th}, (u2)^{th}, ..., and (uP)^{th} consecutive 0s, 0ᵥ₁, 0ᵥ₂, ..., and 0_{vP} respectively represent (v1)^{th} (v2)^{th}, ..., and (vQ)^{th} consecutive 0s, u1, u2, ..., and uP and v1, v2, ..., and vQ are all integers greater than or equal to 0.

21. A communication apparatus, comprising:
a processing unit, configured to generate configuration information, wherein the configuration information comprises device addresses of one or more devices, the configuration information further comprises sequence configuration information, and the sequence configuration information comprises one or more of the following: a sequence index corresponding to each device, a plurality of gaps corresponding to each device, or positions of the plurality of gaps in a sequence, wherein
a gap indicates a quantity of consecutive 0s inserted at a position in a sequence, the sequence belongs to a sequence set, a sequence index identifies a sequence in the sequence set, devices that are in the one or more devices and that are configured to complete different services correspond to different sequence indexes, the sequence set comprises at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0; and
a transceiver unit, configured to send the configuration information.

22. A communication apparatus, comprising:
a transceiver unit, configured to receive configuration information, wherein the configuration information comprises device addresses of one or more devices, the configuration information further comprises sequence configuration information, and the sequence configuration information comprises one or more of the following: a sequence index corresponding to each device, a plurality of gaps corresponding to each device, or positions of the plurality of gaps in a sequence, wherein
a gap indicates a quantity of consecutive 0s inserted at a position in a sequence, the sequence belongs to a sequence set, a sequence index identifies a sequence in the sequence set, devices that are in the one or more devices and that are configured to complete different services correspond to different sequence indexes, the sequence set comprises at least a first sequence and a second sequence, a result of a cross-correlation between a first part of the first sequence and a first part of the second sequence is A, a result of a cross-correlation between a second part of the first sequence and a second part of the second sequence is B, and a sum of A and B is 0; and
a processing unit, configured to determine, based on the configuration information, one or more of a sequence index corresponding to the communication apparatus and a plurality of gaps corresponding to the communication apparatus.

23. The apparatus according to claim 22, wherein the transceiver unit is further configured to:
send a PPDU, wherein the PPDU comprises a preamble sequence, and the preamble sequence is generated based on the sequence index corresponding to the communication apparatus, the plurality of gaps corresponding to the communication apparatus, and positions of the plurality of gaps in a sequence.

24. The apparatus according to claim 23, wherein any sequence in the sequence set comprises a first part and a second part, and a sequence identified by the sequence index corresponding to the communication apparatus is a target sequence; and
the preamble sequence is:
[a₁, 0ᵤ₁, a₂, 0ᵤ₂, ..., a_{P}, 0_{uP}, b₁, 0ᵥ₁, b₂, 0ᵥ₂, ..., b_{Q}, 0_{vQ}]; or the preamble sequence is obtained by repeating a sequence of [a₁, 0ᵤ₁, a₂, 0ᵤ₂, ..., a_{P}, 0_{uP}, b₁, 0ᵥ₁, b₂, 0ᵥ₂, ..., b_{Q}, 0_{vQ}] one or more times, wherein
a₁, a₂, ..., and a_{P} represent P-part elements obtained by splitting a first part of the target sequence, and b₁, b₂, ..., and b_{Q} represent Q-part elements obtained by splitting a second part of the target sequence; and
0ᵤ₁, 0ᵤ₂, ..., and 0_{uP} respectively represent (u1)^{th}, (u2)^{th}, ..., and (uP)^{th} consecutive 0s, 0ᵥ₁, 0ᵥ₂, ..., and 0_{vP} respectively represent (v1)^{th} (v2)^{th}, ..., and (vQ)^{th} consecutive 0s, u1, u2, ..., and uP and v1, v2, ..., and vQ are all integers greater than or equal to 0.

25. The apparatus according to any one of claims 21 to 24, wherein the sequence set comprises K sequences, both a length of the first sequence and a length of the second sequence are N, and a length of a zero correlation zone of the first sequence and the second sequence is Z, wherein K, N, and Z meet the following condition: $K = \frac{1}{2} \left⌊\frac{N}{Z}\right⌋ ,$ wherein $\left⌊\frac{N}{Z}\right⌋$
indicates rounding down $\frac{N}{Z}$ to the nearest integer.

26. A communication apparatus, comprising a processor and a memory, wherein
the memory is configured to store instructions; and
the processor is configured to execute the instructions so that the method according to any one of claims 1 to 14 is performed.

27. A communication apparatus, comprising a logic circuit and an interface, wherein the logic circuit is coupled to the interface; and
the interface is configured to input and/or output code instructions, and the logic circuit is configured to execute the code instructions so that the method according to any one of claims 1 to 14 is performed.

28. A computer-readable storage medium, wherein the computer-readable storage medium stores a computer program, and when the computer program is executed, the method according to any one of claims 1 to 14 is performed.
